# EUROPEAN PATENT SPECIFICATION

(11) **EP 4 509 964 B1**
(45) Date of publication and mention of the grant of the patent: **21.10.2026**
(21) Application number: 24746172.6
(22) Date of filing: 28.06.2024
(51) Int. Cl.: H04M 1/02, G06F 1/16, G06F 3/046

(54) **ELECTRONIC DEVICE**
ELEKTRONISCHE VORRICHTUNG
DISPOSITIF ÉLECTRONIQUE

(30) Priority: 30.06.2023 KR 20230085175; 25.07.2023 KR 20230096994; 21.09.2023 KR 20230126485
(43) Date of publication of application: 19.02.2025
(73) Proprietor: Samsung Electronics Co., Ltd, Suwon-si, Gyeonggi-do 16677 (KR)
(72) Inventor: PARK, Changbyung, Suwon-si, Gyeonggi-do 16677 (KR); PARK, Myeongsil, Suwon-si, Gyeonggi-do 16677 (KR); YOON, Chulhyo, Suwon-si, Gyeonggi-do 16677 (KR); LIM, Jaedeok, Suwon-si, Gyeonggi-do 16677 (KR)
(74) Representative: HGF
(86) International application number: PCT/KR2024/009093
(87) International publication number: WO 2025/005723

(56) References cited:
- KR-A- 20130 090 385
- KR-A- 20220 033 656
- KR-A- 20220 149 952
- KR-A- 20230 017 034
- KR-A- 20230 080 289
- US-A1- 2022 075 470
- US-A1- 2023 036 968

## Description

### [Technical Field]

Embodiments of the disclosure relate to an electronic device including a digitizer and a method for operating the same.

### [Background Art]

It has been an aim to pursue electronic devices with reduced thickness, reduced weight, increased miniaturization, and multi-functionality, and for this, a display and various components are disposed on electronic devices. With the development of display technology, research and development for an electronic device including a display (or flexible display) have been actively made. The display (or flexible display) may be included in the electronic device, and a digitizer may be applied in order to convert analog coordinates (e.g., location) of an electronic pen (e.g., stylus pen) or other input device into digital data.

The above-described contents are provided only as background information to help understanding of embodiments of the disclosure.

Document US 2023036968A1 discloses, according to its abstract, that an electronic device comprises: a display; a coil array layer disposed under the display; a magnetic layer disposed under the coil array layer; a conductive layer disposed under the magnetic layer; a conductive plate disposed under the conductive layer; a bracket disposed under the conductive plate; and a magnetic component disposed on the bracket and under the conductive plate, wherein the conductive layer has a first opening, and the first opening and the magnetic component at least partially overlap each other.

Document US 2022075470A1 discloses, according to its abstract, that a display device includes a panel part including a bending area, a digitizer disposed under the panel part, a first magnetic member disposed under the digitizer, and a second magnetic member disposed under the first magnetic member. The first magnetic member includes a first portion and a second portion, which are spaced apart from each other by a dividing area at least partially overlapping the bending area. The second magnetic member at least partially overlaps the dividing area.

### [Disclosure of Invention]

The scope of protection conferred is determined by the claims.

In order to improve bending (e.g., unfolding and folding) of an electronic display device, a part of a conductive layer of a digitizer may be removed. If the part of the conductive layer of the digitizer is removed, the features of the electronic pen may deteriorate in a bending area. When the electronic pen (e.g., stylus pen) is tilted, changes in features may be increased in the bending area.

Various embodiments of the disclosure may provide a bendable/foldable electronic display device which can improve electronic pen detection performance of a detachable digitizer in a segmented part (e.g., bending area) of the digitizer.

Various embodiments of the disclosure may provide a bendable/foldable electronic display device which can prevent (or compensate for/reduce) detection deterioration in a bending area by reducing the thickness of a magnetic layer of a part corresponding to a segmented part (e.g., bending area) of a detachable digitizer and by disposing a conductive layer thereon.

Various embodiments of the disclosure may provide a bendable/foldable electronic display device which can improve folding/unfolding performance by reducing the thickness of a magnetic layer of a part corresponding to a segmented part (e.g., bending area) of a detachable digitizer.

The technical subject matter and advantages providing by the present disclosure are not limited to those described above, and may be variously extended within the range that does not deviate from the scope of the disclosure. Other unmentioned technical subject matter may be clearly understood by those of ordinary skill in the art to which the disclosure pertains from the following description.

Also disclosed herein is that an electronic device may include a foldable housing, a flexible display accommodated in the foldable housing, and a digitizer disposed under the flexible display. The digitizer may include a flexible printed circuit board layer, a first conductive layer disposed under the flexible printed circuit board layer, and a magnetic layer disposed under the flexible printed circuit board layer. A part of the magnetic layer may be disposed between the flexible printed circuit board layer and the first conductive layer. The magnetic layer may include a first magnetic layer having a first magnetic feature and a second magnetic layer having a second magnetic feature that is different from the first magnetic feature. In case that the electronic device is unfolded, when viewed in a vertical direction to the flexible display, the first magnetic layer and the first conductive layer may be disposed to substantially overlap each other. In case that the electronic device is unfolded, when viewed in the vertical direction to the flexible display, the second magnetic layer and the first conductive layer may be disposed not to overlap each other.

Also disclosed herein is that an electronic device may include a second magnetic layer MMP2 disposed to overlap a part from which a part of a conductive layer (e.g., conductive plate) of a digitizer is removed. By disposing the second magnetic layer MMP2 on the part corresponding to the bending area of the electronic device, it is possible to prevent (or compensate for/reduce) the detection deterioration in the bending area due to the removal of the conductive layer (e.g., conductive plate).

The electronic device according to embodiments of the disclosure can improve the detection performance and the pen pressure performance of an electronic pen in a bending area.

The electronic device according to embodiments of the disclosure can prevent (reduce) magnetization of hinge components from exerting an influence on a digitizer.

The electronic device according to embodiments of the disclosure can improve the folding/unfolding of the electronic device performance by reducing the thickness of a magnetic layer MMP in a folding area.

The electronic device according to embodiments of the disclosure can improve the electronic pen detection performance of a digitizer in a segmented part (e.g., bending area) of a detachable digitizer.

Effects that can be obtained from the embodiments in the disclosure are not limited to the above-mentioned effects, and other unmentioned effects will be able to be clearly understood by those of ordinary skill in the art to which the disclosure pertains from the following description.

### [Brief Description of Drawings]

In relation to the description of drawings, the same or similar reference numerals may be used for the same or similar constituent elements.
FIG. 1 is a block diagram of an electronic device in a network environment according to various embodiments of the disclosure.
FIGS. 2A and 2B are views illustrating a first state (e.g., unfolded state) of an electronic device according to an embodiment of the disclosure when viewed from the front and the rear.
FIGS. 2C and 2D are views illustrating a second state (e.g., folded state) of an electronic device according to an embodiment of the disclosure when viewed from the front and the rear.
FIG. 3A is a perspective view of an electronic device illustrating a first state (e.g., flat state or unfolded state) according to an embodiment of the disclosure.
FIG. 3B is a plan view illustrating a front surface of an electronic device in a first state (e.g., unfolded state) according to an embodiment of the disclosure.
FIG. 3C is a plan view illustrating a rear surface of an electronic device in a first state (e.g., unfolded state) according to an embodiment of the disclosure.
FIG. 3D is a perspective view of an electronic device illustrating a second state (e.g., folded state) according to an embodiment of the disclosure.
FIG. 3E is a perspective view of an electronic device illustrating a third state (e.g., intermediate state) according to an embodiment of the disclosure.
FIG. 4 is a block diagram illustrating the constitution of an electronic device according to an embodiment.
FIG. 5A is a view representing a primary resonance method of an electronic pen (e.g., stylus pen).
FIG. 5B is a view representing a secondary resonance method of an electronic device according to a primary resonance of an electronic pen (e.g., stylus pen).
FIG. 6 is a view illustrating an electronic device representing an unfolded state of the electronic device according to an embodiment of the disclosure.
FIG. 7 is a view representing a folded state of the electronic device illustrated in FIG. 6.
FIG. 8 is a view illustrating an electronic device representing an unfolded state of the electronic device according to an embodiment of the disclosure.
FIG. 9 is a view representing a folded state of the electronic device illustrated in FIG. 8.
FIG. 10 is a view illustrating an electronic device representing an unfolded state of the electronic device according to an embodiment of the disclosure.
FIG. 11 is a view representing a folded state of the electronic device illustrated in FIG. 10.
FIG. 12 is a view illustrating an electronic device representing an unfolded state of the electronic device according to an embodiment of the disclosure.
FIG. 13 is a view representing a folded state of the electronic device illustrated in FIG. 12.
FIG. 14 is a view illustrating an electronic device representing an unfolded state of the electronic device according to an embodiment of the disclosure.
FIG. 15 is a view representing a folded state of the electronic device illustrated in FIG. 14.
FIG. 16 is a view illustrating a multi-foldable electronic device representing an unfolded state of the multi-foldable electronic device according to an embodiment of the disclosure.
FIG. 17 is a view illustrating an electronic device representing an unfolded state of the electronic device according to an embodiment of the disclosure.
FIG. 18 is a view illustrating an electronic device representing an unfolded state of the electronic device according to an embodiment of the disclosure.
FIG. 19 is a view representing a second conductive layer disposed to overlap a second magnetic layer.
FIG. 20 is a view representing an interval between a first magnetic part and a second magnetic part of a first magnetic layer and locations where the first magnetic part and the second magnetic part of the first magnetic layer are disposed from a reference point.
FIG. 21 is a diagram representing an inductance change inside an electronic pen according to a pattern density (e.g., ratio of a width w of a conductive pattern to a space s) of a conductive layer disposed to overlap a second magnetic layer.
FIG. 22 is a diagram representing an inductance change inside an electronic pen according to existence/nonexistence of a second conductive layer disposed to overlap a second magnetic layer.
FIG. 23 is a diagram representing a phase change point according to an interval between a first part and a second part of a first magnetic layer.
It is to be noted that the same reference numerals are used to depict the same or similar elements, features, and structures throughout the drawings.

### [Mode for the Invention]

The following description with reference to the accompanying drawings is provided to help comprehensive understanding of various embodiments of the disclosed contents as defined in the claims. Here, although various specific details are included to help the understanding, this should be considered as being merely exemplary. Accordingly, those of ordinary skill in the art to which the disclosure pertains will perceive that various modifications of various embodiments disclosed in the description can be made without departing from the scope and idea of the disclosed contents. Further, for clarity and brevity, description of the well-known functions and constitutions may be omitted.

The terms and words used in the following description and the claims are not limited to the meanings in the literature, and are just used by the inventor to make clear and consistent understanding of the disclosure possible. Accordingly, it should be clear to those of skilled in the art that the following description of various embodiments of the disclosure is not to limit the disclosure as defined by the appended claims, but is provided for the purpose of examples only.

It should be understood that unless clearly indicated otherwise on context, a singular form includes plural indication targets. Accordingly, for example, the mention on a "constituent element surface" may include the mention on one or more of such surfaces. Furthermore, features, examples, and embodiments described herein may be combined in any form unless incompatible or explicitly stated as not being combinable.

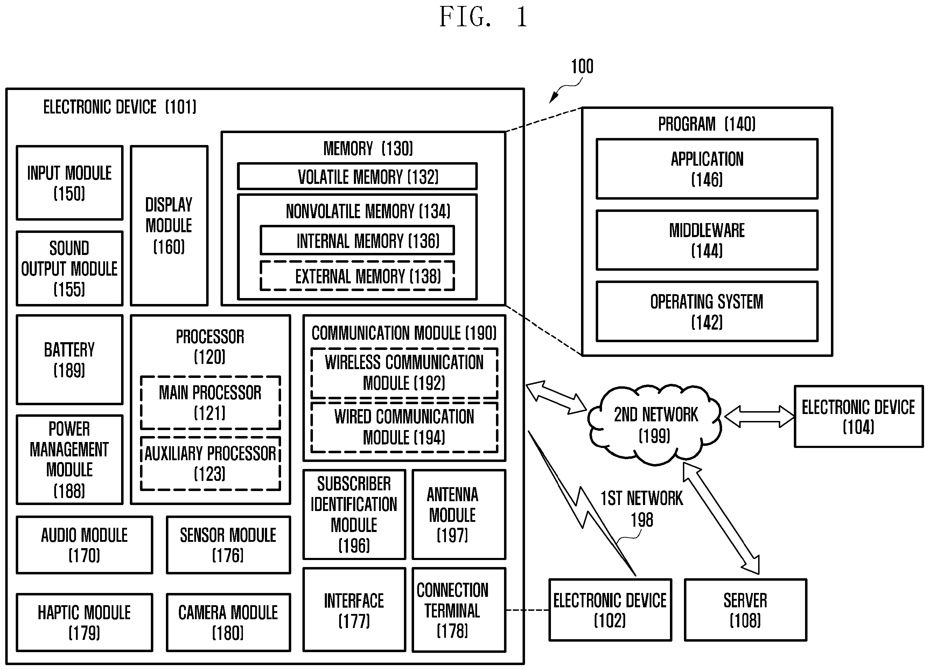

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, the display module 160 may include a flexible display configured to be folded or unfolded.

According to an embodiment, the display module 160 may include a flexible display disposed to be slidable (e.g., slidable in x-axis direction and slidable in y-axis direction) and providing a screen (e.g., display screen).

According to an embodiment, the display module 160 may be referred to as a variable display (e.g., stretchable display), an expandable display, or a slide-in/out display.

According to various embodiments, the sensor module 176 may include a movement distance detection sensor configured to detect a distance between the first housing and the second housing of the electronic device.

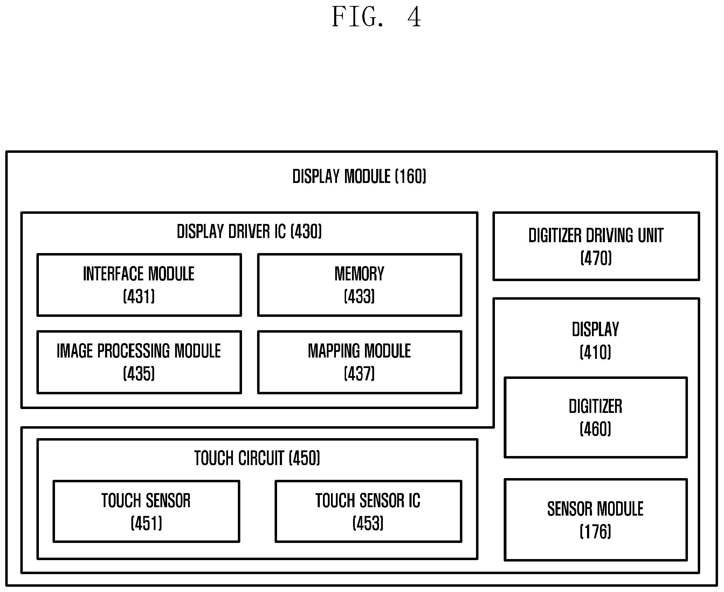

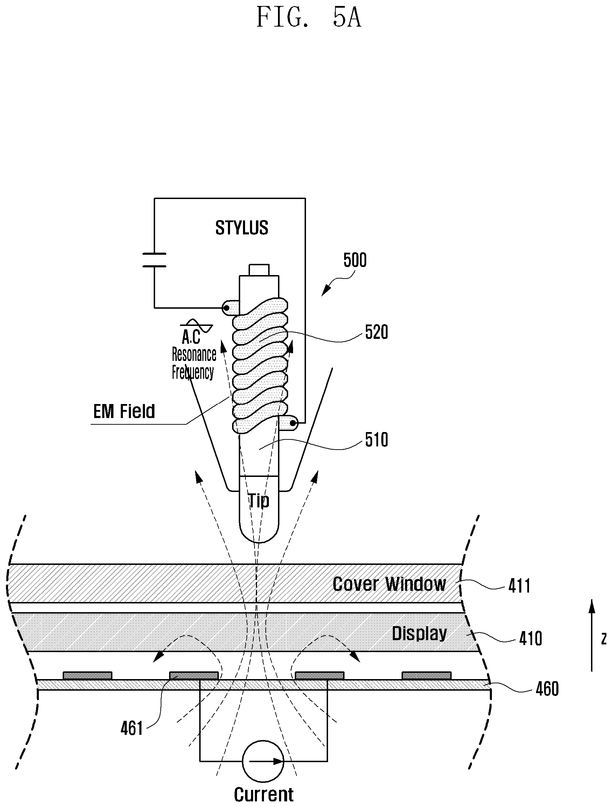

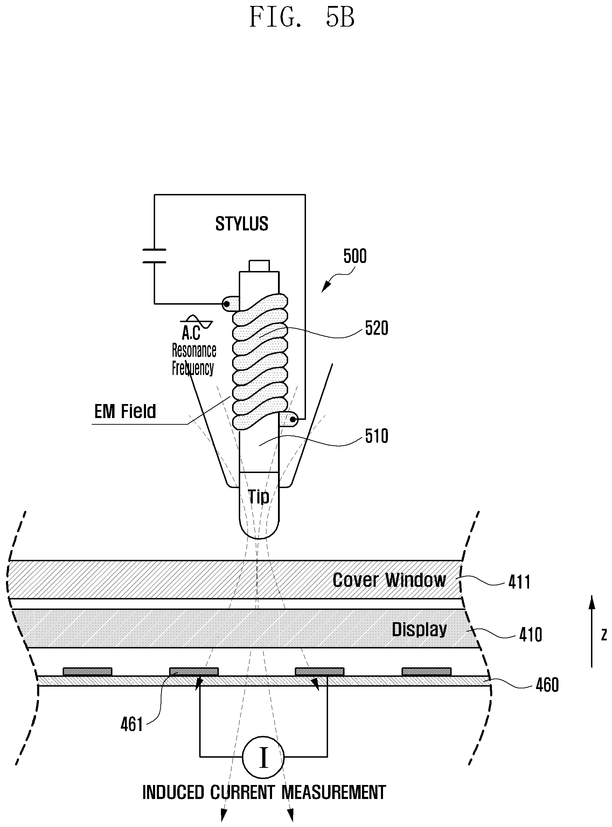

According to an embodiment, the electronic device 101 may include the display module 160 configured to interact with an electronic pen (e.g., electronic pen 500 of FIGS. 5A and 5B) (e.g., stylus pen). For example, the display module 160 may include the flexible display configured to be folded or unfolded. For example, the display module 160 may include a display (e.g., display 410 of FIG. 4), a display driver IC (e.g., display driver IC 430 of FIG. 4), a contact circuit (e.g., contact circuit 450 of FIG. 4), a digitizer (e.g., digitizer 460 of FIG. 4), and a digitizer driving unit (e.g., digitizer driving unit 470 of FIG. 4).

Throughout this disclosure, the electronic device is considered to include some form of flexible display as set out above. However, the disclosure is not only limited to electronic devices including flexible displays and may also encompass other forms of flexible electronic device that include a digitizer in or in the vicinity of a flexible portion and/or hinge.

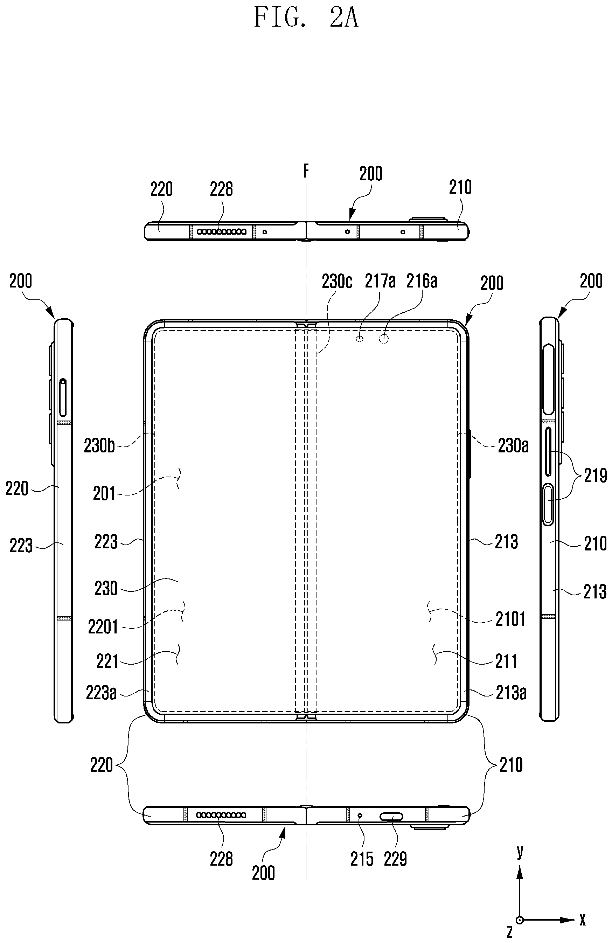

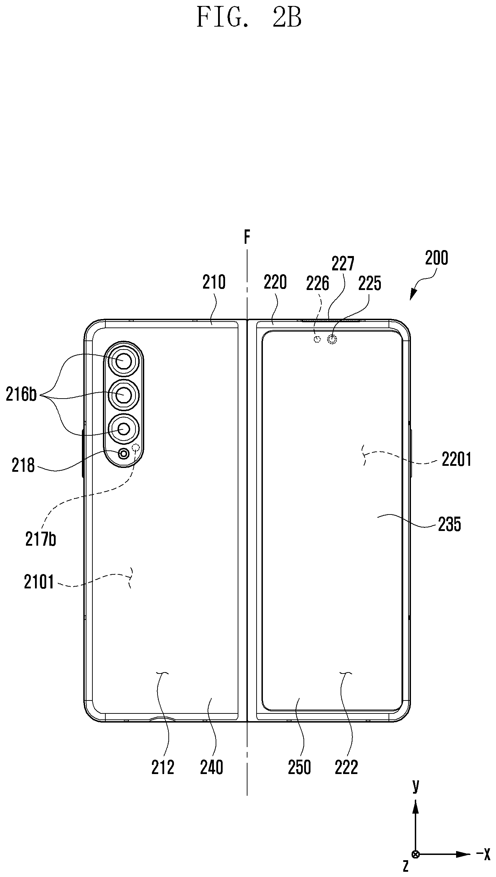

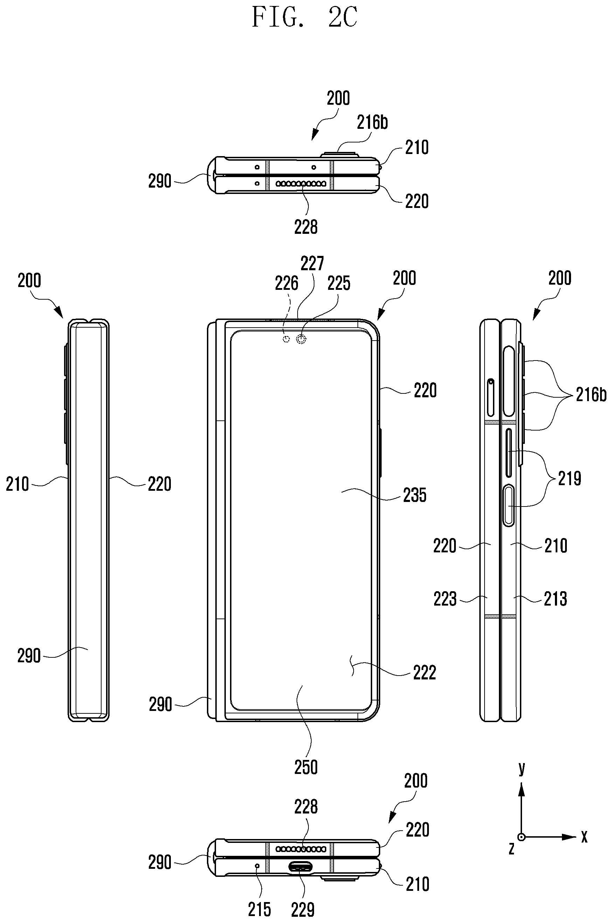

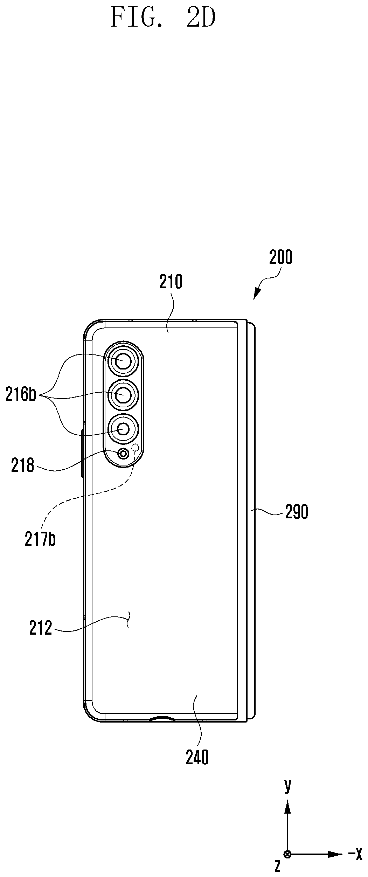

FIGS. 2A and 2B are views illustrating a first state (e.g., unfolded state) of an electronic device according to an embodiment of the disclosure when viewed from the front and the rear. FIGS. 2C and 2D are views illustrating a second state (e.g., folded state) of the electronic device according to an embodiment of the disclosure when viewed from the front and the rear.

The electronic device 200 of FIGS. 2A to 2D may be at least partly similar to the electronic device 101 of FIG. 1 or other embodiments of the electronic device (e.g. other approaches to providing a flexible electronic display device).

With reference to FIGS. 2A to 2D, the electronic device 200 (e.g., electronic device 101 of FIG. 1) according to an embodiment of the disclosure may include a pair of housings 210 and 220 (e.g., foldable housing structure) rotatably coupled to each other based on a folding axis through at least one hinge device (e.g., hinge module or hinge structure) so as to be foldable against each other, a first display 230 (e.g., flexible display, foldable display, or main display) disposed through the pair of housings 210 and 220, and/or a second display 235 (e.g., sub display) disposed through the second housing 220.

According to an embodiment, at least a part of at least one hinge device may be disposed not to be seen from an outside through the first housing 210 and the second housing 220, and may be disposed not to be seen from the outside through a hinge housing 290 (e.g., hinge cover) that covers a foldable portion in a first state (e.g., unfolded state). In this document, a surface on which the first display 230 is disposed may be defined as a front surface of the electronic device 200. In this document, an opposite surface of the front surface may be defined as a rear surface of the electronic device 200. Further, a surface that surrounds a space between the front surface and the rear surface may be defined as a side surface of the electronic device 200.

According to an embodiment, the pair of housings 210 and 220 may include the first housing 210 and the second housing 220 disposed to be foldable against each other through at least one hinge device.

According to an embodiment, the pair of housings 210 and 220 are not limited to the forms and couplings illustrated in FIGS. 2A to 2D, and may be implemented by combinations and/or couplings of other shapes or components.

According to an embodiment, the first housing 210 and the second housing 220 may be disposed on both sides based on a folding axis F, may have an overall symmetrical shape about the folding axis F, and may be folded to match each other.

According to an embodiment, the first housing 210 and the second housing 220 may be asymmetrically folded about the folding axis F.

According to an embodiment, an angle or a distance formed between the first housing 210 and the second housing 220 may differ depending on whether the electronic device 200 is in a first state (e.g., unfolded state), a second state (e.g., folded state), or a third state (e.g., intermediate state). For example, the electronic device 200 may sense whether the electronic device 200 is in the first state (e.g., unfolded state), the second state (e.g., folded state), or the third state (e.g., intermediate state) by using a sensor module (e.g., sensor module 176 of FIG. 1). The electronic device 200 may sense the angle formed between the first housing 210 and the second housing 220 by using the sensor module (e.g., sensor module 176 of FIG. 1).

According to an embodiment, the first housing 210 may be connected to the at least one hinge device in the first state (e.g., unfolded state) of the electronic device 200. The first housing 210 may include a first surface 211 disposed to be directed toward the front surface of the electronic device 200, a second surface 212 that is directed in an opposite direction to the first surface 211, and/or a first lateral member 213 that surrounds at least a part of a first space 2101 between the first surface 211 and the second surface 212.

According to an embodiment, the second housing 220 may be connected to the at least one hinge device in the first state (e.g., unfolded state) of the electronic device 200. The second housing 220 may include a third surface 221 disposed to be directed toward the front surface of the electronic device 200, a fourth surface 222 that is directed in an opposite direction to the third surface 221, and/or a second lateral member 223 that surrounds at least a part of a second space 2201 between the third surface 221 and the fourth surface 222.

According to an embodiment, the first surface 211 may be directed in substantially the same direction as the direction of the third surface 221 in the first state (e.g., unfolded state), and may face at least partly the third surface 221 in the second state (e.g., folded state).

According to an embodiment, the electronic device 200 may include a recess 201 formed to accommodate the first display 230 through a structural coupling of the first housing 210 and the second housing 220.

According to an embodiment, the recess 201 may have substantially the same size as the size of the first display 230.

According to an embodiment, the first housing 210 may be coupled to the first lateral member 213 when the first display 230 is viewed from the above. The first housing 210 may include a first protection frame 213a (e.g., first decoration member) that covers an edge of the first display 230 so as not to be viewed from an outside through being disposed to overlap the edge of the first display 230.

According to an embodiment, the first protection frame 213a may be integrally formed with the first lateral member 213.

According to an embodiment, the second housing 220 may be coupled to the second lateral member 223 when the first display 230 is viewed from the above. The second housing 220 may include a second protection frame 223a that covers the edge of the first display 230 so as not to be viewed from the outside through being disposed to overlap the edge of the first display 230.

According to an embodiment, the second protection frame 223a may be integrally formed with the second lateral member 223. According to an embodiment, the first protection frame 213a and the second protection frame 223a may be omitted.

According to an embodiment, the hinge housing 290 (e.g., hinge cover) may be disposed between the first housing 210 and the second housing 220. The hinge housing 290 may be disposed to hide a part of at least one hinge device (e.g., at least one hinge module).

According to an embodiment, the hinge housing 290 may be hidden by parts of the first housing 210 and the second housing 220 or may be exposed to the outside in accordance with the first state (e.g., unfolded state), the second state (e.g., folded state), or the third state (e.g., intermediate state) of the electronic device 200. For example, in case that the electronic device 200 is in the first state (e.g., unfolded state), at least a part of the hinge housing 290 may be disposed to be hidden by the first housing 210 and the second housing 220 and not to be substantially viewed from the outside.

According to an embodiment, in case that the electronic device 200 is in the second state (e.g., folded state), at least a part of the hinge housing 290 may be disposed to be visible from the outside between the first housing 210 and the second housing 220.

According to an embodiment, in case that the first housing 210 and the second housing 220 are in the third state (intermediate state) in which the first housing 210 and the second housing 220 are folded with a certain angle, the hinge housing 290 may be disposed to be visible at least partly from the outside of the electronic device 200 between the first housing 210 and the second housing 220. For example, an area in which the hinge housing 290 is exposed to the outside may be smaller than that in a completely folded state. According to an embodiment, the hinge housing 290 may include a curved surface.

According to an embodiment, in case that the electronic device 200 is in the first state (e.g., unfolded state), the first housing 210 and the second housing 220 may be folded with an angle of about 180 degrees, and a first area 230a, a second area 230b, and a folding area 230c of the first display 230 may form substantially the same plane. The first area 230a, the second area 230b, and the folding area 230c of the first display 230 may be disposed to be directed in substantially the same direction (e.g., z-axis direction). According to an embodiment, in case that the electronic device 200 is in the first state (e.g., unfolded state), the first housing 210 may be rotated at an angle of about 360 degrees against the second housing 220, and may be reversely folded so that the second surface 212 and the fourth surface 222 face each other (e.g., out folding method).

According to an embodiment, in case that the electronic device 200 is in the second state (folded state), the first surface 211 of the first housing 210 and the third surface 221 of the second housing 220 may be disposed to face each other. In this case, the first area 230a and the second area 230b of the first display 230 may form a narrow angle (e.g., in the range of 0 degree to about 10 degrees) with each other through the folding area 230c, and may be disposed to face each other. According to an embodiment, at least a part of the folding area 230c may be transformed into a curved shape having a predetermined curvature.

According to an embodiment, in case that the electronic device 200 is in the third state (intermediate state), the first housing 210 and the second housing 220 may be disposed with a certain angle to each other. In this case, the first area 230a and the second area 230b of the first display 230 may form an angle that is larger than the angle in the second state (e.g., folded state) and smaller than the angle in the first state (e.g., unfolded state), and the curvature of the folding area 230c may be smaller than the curvature in the second state (folded state) and may be larger than the curvature in the first state (e.g., unfolded state). According to an embodiment, the first housing 210 and the second housing 220 may form an angle at which folding of the first housing 210 and the second housing 200 can be suspended with a folding angle designated between the second state (e.g., folded state) and the third state (e.g., intermediate state) through at least one hinge device (e.g., free stop function). According to an embodiment, the first housing 210 and the second housing 220 may continuously operate while being pressed, in an unfolding or folding direction, based on a designated inflection angle through at least one hinge device.

According to an embodiment, the electronic device 200 may include at least one of at least one display 230 and 235 disposed on the first housing 210 and/or the second housing 220, an input device 215, sound output devices 227 and 228, sensor modules 217a, 217b, and 226, camera modules 216a, 216b, and 225, a key input device 219, an indicator (not illustrated), or a connector port 229. According to an embodiment, the electronic device 200 may omit at least one of constituent elements or may additionally include at least one other constituent element.

According to an embodiment, the at least one display 230 and 235 may include the first display 230 (e.g., flexible display) disposed to be supported by the third surface 221 of the second housing 220 through at least one hinge device from the first surface 211 of the first housing 210, and the second display 235 disposed to be visible at least partly from the outside through the fourth surface 222 in an internal space of the second housing 220.

According to an embodiment, the second display 235 may be disposed to be visible from the outside through the second surface 212 in an internal space of the first housing 210.

According to an embodiment, the first display 230 may be mainly used in the first state (e.g., unfolded state) of the electronic device 200. Even in the first state (e.g., unfolded state) of the electronic device 200, the second display 235 may be used.

According to an embodiment, the second display 235 may be mainly used in the second state (e.g., folded state) of the electronic device 200. Even in the second state (e.g., folded state) of the electronic device 200, the first display may be used.

According to an embodiment, in the third state (e.g., intermediate state), the electronic device 200 may control the first display 230 and/or the second display 235 to be usable based on the folding angle of the first housing 210 and the second housing 220.

According to an embodiment, the first display 230 may be disposed in an accommodation space formed by the pair of housings 210 and 220. For example, the first display 230 may be disposed in a recess 201 formed by the pair of housings 210 and 220, and in the first state (e.g., unfolded state), the first display 230 may be disposed to occupy substantially most of the front surface of the electronic device 200. According to an embodiment, the first display 230 may include a flexible display of which at least a partial area can be transformed into a flat surface or a curved surface.

According to an embodiment, the first display 230 may include the first area 230a that faces the first housing 210 and the second area 230b that faces the second housing 220. According to an embodiment, the first display 230 may include the folding area 230c including a part of the first area 230a and a part of the second area 230b based on the folding axis F.

According to an embodiment, at least a part of the folding area 230c may include an area corresponding to at least one hinge device.

According to an embodiment, the area division of the first display 230 is merely an exemplary physical division by the pair of housings 210 and 220 and the at least one hinge device, and the first display 230 may be displayed as one seamless overall screen substantially through the pair of housings 210 and 220 and the at least one hinge device. The relative locations and sizes of the areas 230a, 230b, and 230c may be vary.

According to an embodiment, the first area 230a and the second area 230b may have an overall symmetrical shape or a partially asymmetrical shape based on the folding area 230c.

According to an embodiment, the electronic device 200 may include a first rear cover 240 disposed on the second surface 212 of the first housing 210 and a second rear cover 250 disposed on the fourth surface 222 of the second housing 220. According to an embodiment, at least a part of the first rear cover 240 may be integrally formed with the first lateral member 213. According to an embodiment, at least a part of the second rear cover 250 may be integrally formed with the second lateral member 223.

According to an embodiment, at least one of the first rear cover 240 and the second rear cover 250 may be formed of a substantially transparent plate (e.g., glass plate including various coating layers or polymer plate) or an opaque plate. According to an embodiment, the first rear cover 240 may be formed by an opaque plate, for example, such as coated or colored glass, ceramic, polymer, metal (e.g., aluminum, stainless steel (STS), or magnesium), or a combination of at least two of the above materials.

According to an embodiment, the second rear cover 250 may be formed through a substantially transparent plate, for example, such as glass or polymer. Accordingly, the second display 235 may be disposed to be visible from the outside through the second rear cover 250 in the internal space of the second housing 220.

According to an embodiment, the input device 215 may include a microphone. According to an embodiment, the input device 215 may include a plurality of microphones disposed to be able to detect the direction of a sound.

According to an embodiment, the sound output devices 227 and 228 may include speakers. According to an embodiment, the sound output devices 227 and 228 may include a call receiver 227 disposed through the fourth surface 222 of the second housing 220 and an external speaker 228 disposed through at least a part of the second lateral member 223 of the second housing 220.

According to an embodiment, the input device 215, the sound output devices 227 and 228, and the connector port 229 may be disposed in spaces of the first housing 210 and/or the second housing 220. The input device 215, the sound output devices 227 and 228, and the connector port 229 may be exposed to an external environment through at least one hole formed on the first housing 210 and/or the second housing 220. According to an embodiment, the holes formed on the first housing 210 and/or the second housing 220 may be commonly used for the input device 215 and the sound output devices 227 and 228. According to an embodiment, the sound output devices 227 and 228 may include a speaker (e.g., piezo speaker) operating in a state where the holes formed on the first housing 210 and/or the second housing 220 are excluded.

According to an embodiment, the camera modules 216a, 216b, and 225 may include the first camera module 216a disposed on the first surface 211 of the first housing 210, the second camera module 216b disposed on the second surface 212 of the first housing 210, and/or the third camera module 225 disposed on the fourth surface 222 of the second housing 220.

According to an embodiment, the electronic device 200 may include a flash 218 disposed near the second camera module 216b. According to an embodiment, the flash 218 may include, for example, a light-emitting diode or a xenon lamp.

According to an embodiment, the camera modules 216a, 216b, and 225 may include one or a plurality of lenses, image sensors, and/or image signal processors. According to an embodiment, at least one of the camera modules 216a, 216b, and 225 may include two or more lenses (e.g., wide-angle lens and telephoto lens) and image sensors, and may be disposed together on any one surface of the first housing 210 and/or second housing 220.

According to an embodiment, the sensor modules 217a, 217b, and 226 (e.g., sensor module 176 of FIG. 1) may generate an electric signal or a data value corresponding to the internal operation state of the electronic device 200 or an external environment state.

According to an embodiment, the sensor modules 217a, 217b, and 226 (e.g., sensor module 176 of FIG. 1) may include the first sensor module 217a disposed on the first surface 211 of the first housing 210, the second sensor module 217b disposed on the second surface 212 of the first housing 210, and/or the third sensor module 226 disposed on the fourth surface 222 of the second housing 220.

According to an embodiment, the sensor modules 217a, 217b, and 226 (e.g., sensor module 176 of FIG. 1) may include at least one of a gesture sensor, gyro sensor, grip sensor, color sensor, infrared (IR) sensor, illuminance sensor, ultrasonic sensor, proximity sensor, bio sensor (e.g., iris recognition sensor), distance detection sensor (e.g., time of flight (TOF) sensor or light detection and ranging (LiDAR) sensor), barometric pressure sensor, magnetic sensor (e.g., 6-axis sensor or geomagnetic sensor), acceleration sensor, temperature sensor, humidity sensor, and/or fingerprint recognition sensor.

According to an embodiment, a processor (e.g., processor 120 of FIG. 1) of the electronic device 200 may sense the illuminance and/or IR strength around the electronic device 200 by operating the sensor modules 217a, 217b, and 226 (e.g., sensor module 176 of FIG. 1). The processor 120 may obtain information about the illuminance and information about the IR strength around the electronic device 200.

According to an embodiment, the electronic device 200 may include at least one of a non-illustrated gesture sensor, gyro sensor, grip sensor, color sensor, infrared (IR) sensor, illuminance sensor, ultrasonic sensor, proximity sensor, bio sensor (e.g., iris recognition sensor), distance detection sensor (e.g., time of flight (TOF) sensor or light detection and ranging (LiDAR) sensor), barometric pressure sensor, magnetic sensor (e.g., 6-axis sensor or geomagnetic sensor), acceleration sensor, temperature sensor, humidity sensor, and/or fingerprint recognition sensor.

According to an embodiment, the fingerprint recognition sensor may be disposed through at least one of the first lateral member 210 of the first housing 210 and/or the second lateral member 223 of the second housing 220.

According to an embodiment, the key input device 219 may be disposed to be exposed to the outside through the first lateral member 213 of the first housing 210. According to an embodiment, the key input device 219 may be disposed to be exposed to the outside through the second lateral member 223 of the second housing 220. According to an embodiment, the electronic device 200 may not include some or all of the key input devices 219, and the key input device 210 being not included may be implemented in another form, such as a soft key, on at least one display 230 and 235. According to an embodiment, the key input device 219 may be implemented by using a pressure sensor included in the at least one display 230 and 235.

According to an embodiment, the connector port 229 may include a connector (e.g., USB connector or interface connector port module (IF module)) for transmission and reception of a power and/or data to and from an external electronic device. According to an embodiment, the connector port 229 may also perform a function for transmitting and receiving an audio signal to and from the external electronic device, or may further include a separate connector port (e.g., ear jack hole) for performing the audio signal transmission and reception function.

According to an embodiment, at least one 216a and 225 of the camera modules 216a, 216b, and 225, at least one 217a and 226 of the sensor modules 217a, 217b, and 226, and/or the indicator may be disposed to be visually exposed through at least one display 230 and 235. For example, at least one camera module 216a and 225, at least one sensor module 217a and 226, and/or the indicator may be disposed under an activated area (display area) of at least one display 230 and 235 in the internal space of at least one housing 210 and 220. At least one camera module 216a and 225, at least one sensor module 217a and 226, and/or the indicator may be disposed to come in contact with an external environment through an opening or a transparent area perforated up to a cover member (e.g., window layer (not illustrated) of the first display 230 and/or the second rear cover 250).

According to an embodiment, an area in which at least one display 230 and 235 and at least one camera module 216a and 225 face each other may be formed as a transmission area having a predetermined transmittance as a part of a content display area.

According to an embodiment, the transmission area may be formed to have the transmittance in the range of about 5% to 20%. The transmission area may include an area that overlaps an effective area (e.g., viewing angle area) of at least one camera module 216a and 225 through which light for generating an image that is formed by an image sensor passes. For example, the transmission area of the display 230 and 235 may include an area having a lower pixel density than the pixel density in the surroundings. For example, the transmission area may replace the opening. For example, at least one camera module 216a and 225 may include an under display camera (UDC) or an under panel camera (UPC). According to an embodiment, any camera module or sensor module 217a and 226 may be disposed to perform its function without being visually exposed through the display. For example, an area that faces the camera module 216a and 225 and/or the sensor module 217a and 226 disposed under the display 230 and 235 (e.g., display panel) has an under display camera (UDC) structure, and the perforated opening may not be necessary.

For example, the electronic device 200 of FIG. 2A may include a contact circuit (e.g., contact circuit 450 of FIG. 4) including a contact sensor (e.g., contact sensor 451 of FIG. 4) and a contact sensor IC (e.g., contact sensor IC 453 of FIG. 4).

For example, the electronic device 200 of FIG. 2A may include a digitizer (e.g., digitizer 460 of FIG. 4) and a digitizer driving unit (e.g., digitizer driving unit 470 of FIG. 4).

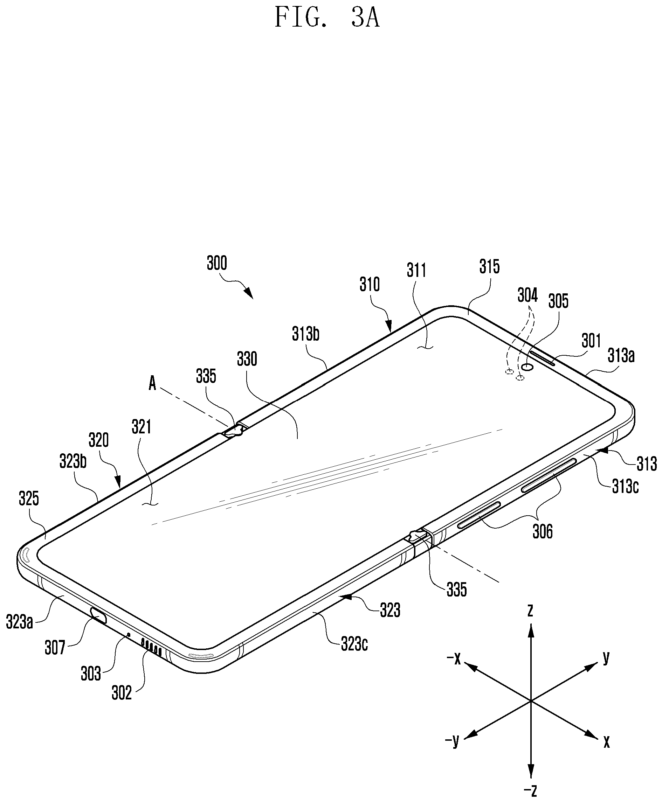

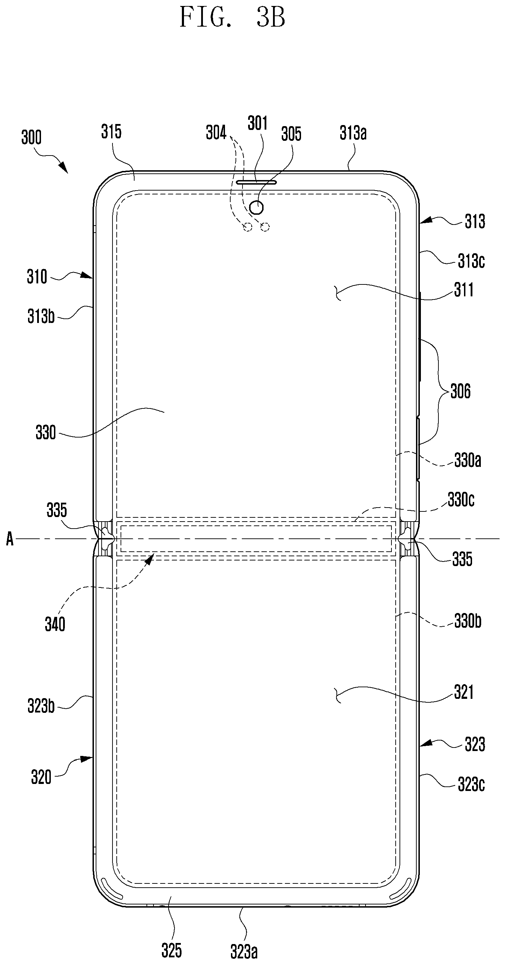

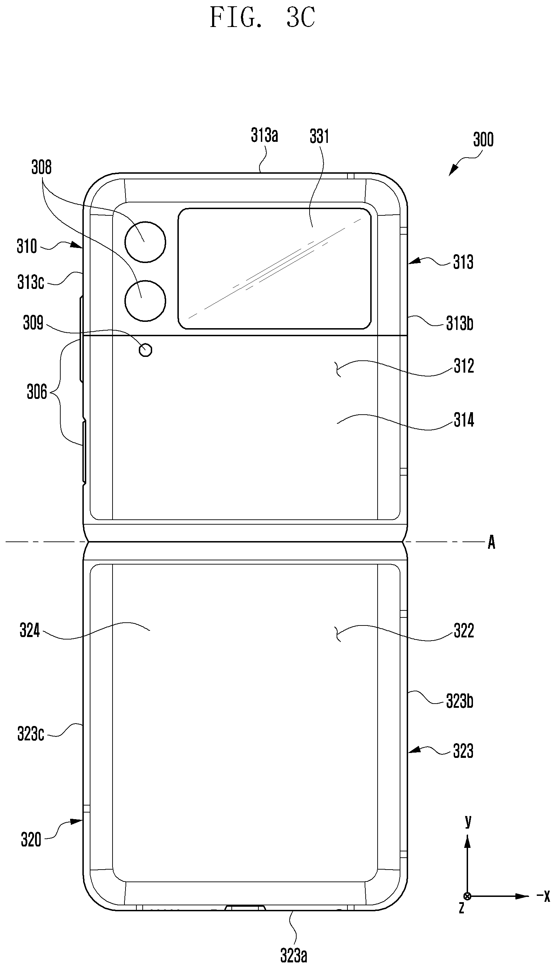

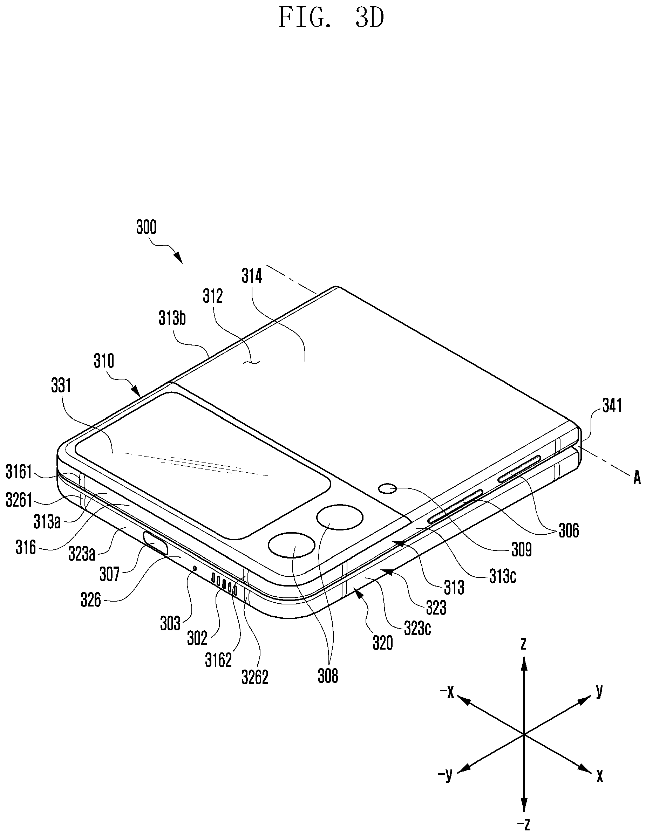

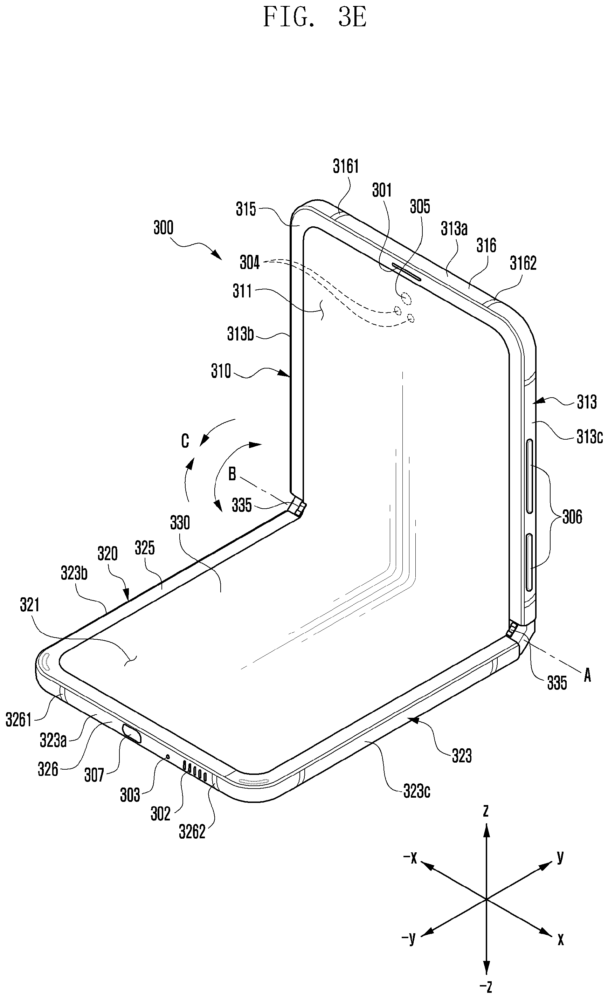

FIG. 3A is a perspective view of an electronic device illustrating a first state (e.g., flat state or unfolded state) according to an embodiment of the disclosure. FIG. 3B is a plan view illustrating a front surface of an electronic device in a first state (e.g., unfolded state) according to an embodiment of the disclosure. FIG. 3C is a plan view illustrating a rear surface of an electronic device in a first state (e.g., unfolded state) according to an embodiment of the disclosure. FIG. 3D is a perspective view of an electronic device illustrating a second state (e.g., folded state) according to an embodiment of the disclosure. FIG. 3E is a perspective view of an electronic device illustrating a third state (e.g., intermediate state) according to an embodiment of the disclosure.

An electronic device 300 of FIGS. 3A to 3E may be at least partly similar to the electronic device 101 of FIG. 1, and may also include features of other embodiments of the electronic device.

With reference to FIGS. 3A to 3E, the electronic device 300 according to an embodiment of the disclosure may include a pair of housings 310 and 320 (e.g., foldable housing) rotatably coupled to each other so as to face and to be folded with each other based on a hinge structure (e.g., hinge structure 340 of FIG. 3B, hinge device, or hinge module).

According to an embodiment, the hinge structure 340 may be disposed in x-axis direction or may be disposed in y-axis direction. According to an embodiment, two or more hinge structures 340 may be disposed so as to be folded in the same direction or in different directions.

According to an embodiment, the electronic device 300 may include a flexible display 300 (e.g., foldable display) disposed in an area formed by the pair of housings 310 and 320.

According to an embodiment, the first housing 310 and the second housing 320 may be disposed on both sides around a folding axis (axis A), and may have a substantially symmetrical shape about the folding axis (axis A).

According to an embodiment, an angle or a distance formed between the first housing 310 and the second housing 320 may differ depending on whether the electronic device 300 is in a first state (e.g., flat state or unfolded state), a second state (e.g., folded state), or a third state (e.g., intermediate state).

According to an embodiment, the pair of housings 310 and 320 may include the first housing 310 (e.g., first housing structure or first housing part) coupled to the hinge structure 340, and the second housing 320 (e.g., second housing structure or second housing part) coupled to the hinge structure 340.

According to an embodiment, the first housing 310 may include a first surface 311 directed in a first direction (e.g., front direction) (z-axis direction) and a second surface 312 directed in a second direction (e.g., rear direction) (-z-axis direction) that faces the first surface 311 in the first state (e.g., unfolded state).

According to an embodiment, the second housing 320 may include a third surface 321 directed in the first direction (z-axis direction) and a fourth surface 322 directed in the second direction (-z-axis direction) in the first state (e.g., unfolded state).

According to an embodiment, the electronic device 300 may operate in a manner that in the first state (e.g., unfolded state), the first surface 311 of the first housing 310 and a third surface 321 of the second housing 320 are directed in substantially the same first direction (z-axis direction), and in the second state (e.g., folded state), the first surface 311 and the third surface 321 face each other.

According to an embodiment, the electronic device 300 may operate in a manner that in the first state (e.g., unfolded state), the second surface 312 of the first housing 310 and a fourth surface 322 of the second housing 320 are directed in substantially the same second direction (-z-axis direction), and in the second state (e.g., folded state), the second surface 312 and the fourth surface 322 are directed in opposite directions. For example, in the second state (e.g., folded state), the second surface 312 may be directed in the first direction (z-axis direction), and the fourth surface 322 may be directed in the second direction (-z-axis direction).

According to an embodiment, the first housing 310 may include a first lateral member 313 that forms an external appearance of the electronic device 300 at least partly, and a first rear cover 314 coupled to the first lateral member 313 and forming at least a part of the second surface 312 of the electronic device 300.

According to an embodiment, the first lateral member 313 may include a first side surface 313a, a second side surface 313b extending from one end of the first side surface 313a, and a third side surface 313c extending from the other end of the first side surface 313a. According to an embodiment, the first lateral member 313 may be formed in a rectangular shape (e.g., square or quadrangle) through the first side surface 313a, the second side surface 313b, and the third side surface 313c.

According to an embodiment, the second housing 320 may include a second lateral member 323 that forms an external appearance of the electronic device 300 at least partly, and a second rear cover 324 coupled to the second lateral member 323 and forming at least a part of the fourth surface 322 of the electronic device 300. According to an embodiment, the second lateral member 323 may include a fourth side surface 323a, a fifth side surface 323b extending from one end of the fourth side surface 323a, and a sixth side surface 323c extending from the other end of the fourth side surface 323a. According to an embodiment, the second lateral member 323 may be formed in a rectangular shape through the fourth side surface 323a, the fifth side surface 323b, and the sixth side surface 323c.

According to an embodiment, the pair of housings 310 and 320 is not limited to the illustrated forms and couplings, and may be implemented by combinations and/or couplings of other shapes or components. For example, the first lateral member 313 may be integrally formed with the first rear cover 314, and the second lateral member 323 may be integrally formed with the second rear cover 324.

According to an embodiment, in the first state (e.g., unfolded state) of the electronic device 300, the second side surface 313b of the first lateral member 313 and the fifth side surface 323b of the second lateral member 323 may be connected to each other without any gap. According to an embodiment, in the first state (e.g., unfolded state) of the electronic device 300, the third side surface 313c of the first lateral member 313 and the sixth side surface 323c of the second lateral member 323 may be connected to each other without any gap.

According to an embodiment, in the first state (e.g., unfolded state) of the electronic device 300, it may be constituted so that the summed length of the second side surface 313b and the fifth side surface 323b is longer than the length of the first side surface 313a and/or the fourth side surface 323a. Further, it may be constituted so that the summed length of the third side surface 313c and the sixth side surface 323c is longer than the length of the first side surface 313a and/or the fourth side surface 323a.

According to an embodiment, the first lateral member 313 and/or the second lateral member 323 may be formed of a metal, or may further include a polymer injected into the metal. According to an embodiment, the first lateral member 313 and/or the second lateral member 323 may include at least one conductive portion 316 and/or 326 electrically segmented through at least one segmented part 3161, 3162, and/or 3261, 3262 formed of the polymer. In this case, the at least one conductive portion may be electrically connected to a wireless communication circuit included in the electronic device 300, and thus may be used as an antenna that operates in at least one designated band (e.g., about 400 MHz to about 6 GHz).

According to an embodiment, the first rear cover 314 and/or the second rear cover 324 may be formed, for example, by at least one of or a combination of at least two of coated or colored glass, ceramic, polymer, or metal (e.g., aluminum, stainless steel (STS), or magnesium).

According to an embodiment, the flexible display 330 may be disposed to extend from the first surface 311 of the first housing 310 to at least a part of the third surface 321 of the second housing 320 across the hinge structure 340. For example, the flexible display 330 may include a first portion 330a substantially corresponding to the first surface 311, a second portion 330b corresponding to the third surface 321, and a third portion 330c (e.g., bendable area) connecting the first portion 330a and the second portion 330b and corresponding to the hinge structure 340.

According to an embodiment, the electronic device 300 may include a first protection cover 315 (e.g., first protection frame or first decoration member) being coupled along an edge of the first housing 310. According to an embodiment, the electronic device 300 may include a second protection cover 325 (e.g., second protection frame or second decoration member) being coupled along an edge of the second housing 320.

According to an embodiment, the first protection cover 315 and/or the second protection cover 325 may be formed of a metal or polymer material. According to an embodiment, the first protection cover 315 and/or the second protection cover 325 may be used as decoration members.

According to an embodiment, the flexible display 330 may be located so that the edge of the first portion 330a is interposed between the first housing 310 and the first protection cover 315. According to an embodiment, the flexible display 330 may be located so that the edge of the second portion 330b is interposed between the second housing 320 and the second protection cover 325.

According to an embodiment, the flexible display 330 may include a protection cap 335 disposed in an area corresponding to the hinge structure 340.

According to an embodiment, the electronic device 300 may include a hinge housing 341 (e.g., hinge cover) that supports the hinge structure 340.

According to an embodiment, the flexible display 330 may be disposed to extend from at least a part of the second surface 312 to at least a part of the fourth surface 322. In this case, the electronic device 300 may be folded so that the flexible display 330 is exposed to the outside (out-folding method).

According to an embodiment, the electronic device 300 may include a sub display 331 (e.g., external display) disposed separately from the flexible display 330. According to an embodiment, the sub display 331 (e.g., external display) is disposed to be exposed at least partly on the second surface 312 of the first housing 310, and in case of the second state (e.g., folded state), the sub display 331 may display status information (e.g., first status information, second status information, or third status information) of the electronic device 300 in replacement of the display function of the flexible display 330.

According to an embodiment, the sub display 331 (e.g., external display) may be disposed to be visible from the outside through at least a partial area of the first rear cover 314. According to an embodiment, the sub display 331 (e.g., external display) may be disposed on the fourth surface 322 of the second housing 320. In this case, the sub display 331 (e.g., external display) may be disposed to be visible from the outside through at least a partial area of the second rear cover 324.

According to an embodiment, the electronic device 300 may include at least one of an input device 303 (e.g., microphone), sound output devices 301 and 302, a sensor module 304, camera devices 305 and 308, a key input device 306, or a connector port 307. The electronic device 300 may also include actual electronic components (e.g., input device, sound output devices, sensor modules, or camera devices) disposed inside the electronic device 300 and configured to operate through holes or shapes.

According to an embodiment, the input device 303 may include at least one microphone 303 disposed on the second housing 320.

According to an embodiment, the sound output devices 301 and 302 may include speakers 301 and 302.

According to an embodiment, at least one connector port 307 may be used to transmit and receive the power and/or data to and from an external electronic device. According to an embodiment, at least one connector port (e.g., ear jack hole) may accommodate a connector (e.g., ear jack) for transmitting and receiving an audio signal to and from the external electronic device.

According to an embodiment, the sensor module 304 may generate an electric signal or a data value corresponding to the internal operation state of the electronic device 300 or an external environment state. For example, the sensor module 304 may detect an external environment through the first surface 311 of the first housing 310. According to an embodiment, the electronic device 300 may further include at least one sensor module disposed to detect the external environment through the second surface 312 of the first housing 310.

According to an embodiment, the sensor module 304 (e.g., proximity sensor or illuminance sensor) may be disposed to detect an external environment through the flexible display 330 under the flexible display 330.

According to an embodiment, the sensor module 304 (e.g., sensor module 176 of FIG. 1) may include at least one of a gesture sensor, gyro sensor, grip sensor, color sensor, infrared (IR) sensor, illuminance sensor, ultrasonic sensor, proximity sensor, bio sensor (e.g., iris recognition sensor), distance detection sensor (e.g., time of flight (TOF) sensor or light detection and ranging (LiDAR) sensor), barometric pressure sensor, magnetic sensor (e.g., 6-axis sensor or geomagnetic sensor), acceleration sensor, temperature sensor, humidity sensor, and/or fingerprint recognition sensor.

According to an embodiment, the camera devices 305 and 308 may include the first camera device 305 (e.g., front camera device) disposed on the first surface 311 of the first housing 310, and the second camera device 308 disposed on the second surface 312 of the first housing 310. The electronic device 300 may further include a flash 309 disposed near the second camera device 308.

According to an embodiment, the camera devices 305 and 308 may include time of flight (TOF) lenses and/or image sensors.

According to an embodiment, the key input device 306 (e.g., key buttons) may be disposed on the third side surface 313c of the first lateral member 313 of the first housing 310. According to an embodiment, the key input device 306 may be disposed on at least one of other side surfaces 313a and 313b of the first housing 310 and/or side surfaces 323a, 323b, and 323c of the second housing 320.

According to an embodiment, any (e.g., first camera device 305) of the camera devices 305 and 308 or the sensor module 304 may be disposed to be exposed through the flexible display 330. For example, the first camera device 305 or the sensor module 304 may be disposed in an internal space of the electronic device 300 to come in contact with the external environment through openings (e.g., through-holes) formed at least partly on the flexible display 330.

According to an embodiment, any sensor module 304 may be disposed to perform its function without being visually exposed through the flexible display 330 in the internal space of the electronic device 300. For example, in this case, the opening may be omitted in the area of the flexible display 330, which faces the sensor module 304.

According to an embodiment, the electronic device 300 may operate to maintain the third state (e.g., intermediate state) through the hinge structure 340. In this case, the electronic device 300 may control the flexible display 330 to display different content in the display area corresponding to the first surface 311 and in the display area corresponding to the third surface 321.

According to an embodiment, the electronic device 300 may operate substantially in the first state (e.g., flat state or unfolded state of FIG. 3A) and/or substantially in the second state (e.g., folded state or folded state of FIG. 3D) based on a specific inflection angle (e.g., angle between the first housing 310 and the second housing 320 in the intermediate state) through the hinge structure 340. For example, in case that a pressing force is provided in an unfolding direction (direction B) in a state of being unfolded at the specific inflection angle through the hinge structure 340, the electronic device 300 may operate to be transitioned to the first state (e.g., flat state or unfolded state of FIG. 3A). For example, in case that the pressing force is provided in a folding direction (direction C) in a state of being unfolded at the specific inflection angle through the hinge structure 340, the electronic device 300 may operate to be transitioned to the second state (e.g., folded state or folded state of FIG. 3D). According to an embodiment, the electronic device 300 may operate to maintain the unfolded state (not illustrated) at various angles through the hinge structure 340.

For example, the electronic device 300 of FIG. 3A may include a contact circuit (e.g., contact/touch circuit 450 of FIG. 4) including a contact sensor (e.g., contact/touch sensor 451 of FIG. 4) and a contact/touch sensor IC (e.g., contact sensor IC 453 of FIG. 4). Although a contact/touch circuit/sensor/IC are referred to, these may also act to detect proximity inputs.

The electronic device 300 of FIG. 3A may include a digitizer (e.g., digitizer 460 of FIG. 4) and a digitizer driving unit (e.g., digitizer driving unit 470 of FIG. 4).

FIG. 4 is a block diagram illustrating the constitution of an electronic device according to an embodiment.

With reference to FIG. 4, a display module 160 (e.g., display module 160 of FIG. 1) may include a display 410, a display driver IC (DDIC) 430 (e.g., display driving unit) configured to drive the display 410, a contact circuit 450, a digitizer 460 (e.g., digitizer 460 of FIGS. 5A and 5B), and a digitizer driving unit 470.

According to an embodiment, the DDIC 430 may include an interface module 431, a memory 433 (e.g., buffer memory), an image processing module 435, or a mapping module 437.

According to an embodiment, the DDIC 430 may receive image data or image information including an image control signal corresponding to a command for controlling the image data from another constituent element of the electronic device (e.g., electronic device 101 of FIG. 1 or electronic device 200 of FIGS. 2 and 3) through the interface module 431.

According to an embodiment, the image information may be received from a processor (e.g., processor 120 of FIG. 1) (e.g., main processor 121 of FIG. 1) (e.g., application processor) or an auxiliary processor (e.g., auxiliary processor 123) (e.g., graphic processing device) operating independently of the function of the main processor 121.

According to an embodiment, the DDIC 430 may communicate with the contact circuit 450 or the sensor module 176 through the interface module 431. Further, the DDIC 430 may store at least a part of the received image information in the memory 433. As an example, the DDIC 430 may store the at least a part of the received image information in the unit of a frame in the memory 433.

According to an embodiment, the image processing module 435 may perform preprocessing or post-processing (e.g., resolution, brightness, or size adjustment) of at least a part of the image data at least based on the feature of the image data or the feature of the display 410.

According to an embodiment, the mapping module 437 may generate a voltage value or a current value corresponding to the image data preprocessed or post-processed through the image processing module 435. According to an embodiment, the generation of the voltage value or the current value may be performed based on, for example, at least a part of attributes (e.g., array (RGB stripe or pentile structure) of pixels or sizes of sub pixels) of pixels of the display 410.

According to an embodiment, at least some pixels of the display 410 may be driven based on, for example, at least a part of the voltage value or the current value, and thus visual information (e.g., text, image, or icon) corresponding to the image data may be displayed through the display 410.

According to an embodiment, the contact circuit 450 may include a contact sensor 451 and a contact sensor IC 453 configured to control the contact sensor 451.

According to an embodiment, the contact sensor IC 453 may control the contact sensor 451 in order to sense a contact input or a hovering (e.g. proximity) input on a specific location of the display 410. For example, the contact sensor IC 453 may sense the contact input or the hovering input by measuring the change of a signal (e.g., voltage, light quantity, resistance, or charge amount) for the specific location of the display 410. The contact sensor IC 453 may provide information (e.g., location, area, pressure, or time) about the sensed contact input or hovering input to the processor (e.g., processor 120 of FIG. 1).

According to an embodiment, at least a part (e.g., contact sensor IC 453) of the contact circuit 450 may be included as a part of the DDIC 430 or the display 410.

According to an embodiment, at least a part (e.g., contact sensor IC 453) of the contact circuit 450 may be included as a part of another constituent element (e.g., auxiliary processor 123) disposed outside the display module 160.

According to an embodiment, the display module 160 may further include at least one sensor (e.g., fingerprint sensor, iris sensor, pressure sensor, or illuminance sensor) of the sensor module 176, or a corresponding control circuit. In this case, the at least one sensor or the corresponding control circuit may be embedded in a part (e.g., display 410 or DDIC 430) of the display module 160 or a part of the contact circuit 450.

For example, in case that the sensor module 176 embedded in the display module 160 includes a bio sensor (e.g., fingerprint sensor), the bio sensor may obtain bio information (e.g., fingerprint image) related to the contact input through a partial area of the display 410.

For example, in case that the sensor module 176 embedded in the display module 160 includes the pressure sensor, the pressure sensor may obtain pressure information related to the contact input through a partial area or the whole area of the display 410.

According to an embodiment, the contact sensor 451 or the sensor module 176 may be disposed between pixels of a pixel layer of the display 410, or above or under the pixel layer.

According to an embodiment, the display module 160 may include the digitizer 460 configured to detect the input (e.g., contact input or hovering input) of an electronic pen (e.g., electronic pen 500 of FIGS. 5A and 5B) (e.g., stylus pen) or other input device (e.g. a user's finger). For example, the digitizer 460 may convert analog coordinates (e.g., location) of the electronic pen 500 (e.g., stylus pen) into digital coordinate data. The digitizer 460 may transfer the digital coordinate data to the processor (e.g., processor 120 of FIG. 1) and/or the DDIC 430.

According to an embodiment, the processor (e.g., processor 120 of FIG. 1) may obtain digital coordinate data input from the digitizer 460. The processor 120 may detect an input (e.g., contact input or hovering input) through the electronic pen 500 (e.g., stylus pen) based on the digital coordinate data. For example, the digitizer 460 may include a plurality of x-axis channels and a plurality of y-axis channels. The processor 120 may sense the location of the electronic pen 500 (e.g., stylus pen) by using sensing signals (e.g., EMR signals) received from the x-axis channels and the y-axis channels disposed on the digitizer 460. For example, the plurality of x-axis channels and the plurality of y-axis channels may be sequentially arranged on the digitizer 460, and the processor 120 may sense the location of the electronic pen 500 (e.g., stylus pen) by using the sensing signals (e.g., EMR signals) received from three successive channels (e.g., three adjacent channels).

According to an embodiment, the digitizer 460 may not be visible from the outside of the electronic device.

For example, the digitizer 460 may be integrally disposed within the flat-type display 410, or may be disposed adjacent to the flat-type display 410. For example, in case that the digitizer 460 is applied to the flat-type display 410, the digitizer 460 may include one electromagnetic resonance (EMR) sheet (or EMR film). On one EMR sheet, the plurality of x-axis channels and the plurality of y-axis channels for detecting the location of the electronic pen 500 may be disposed.

For example, the digitizer 460 may be integrally disposed within the flexible display or the foldable display, or may be disposed adjacent to the flexible display or the foldable display. For example, in the z-axis direction (e.g., z-axis direction of FIG. 2A), the digitizer 460 may be disposed on a lower part (e.g., bottom) of the display 410 (e.g., first display 230 of FIG. 2A) (e.g., flexible display 330 of FIG. 3A).

For example, in case that the digitizer 460 is applied to the flexible display or the foldable display, the digitizer 460 may include one electromagnetic resonance (EMR) sheet (or EMR film). On one EMR sheet, the plurality of x-axis channels and the plurality of y-axis channels for detecting the location of the electronic pen 500 may be disposed.

For example, in case that the digitizer 460 is applied to the flexible display or the foldable display, the digitizer 460 may include a plurality of electromagnetic resonance (EMR) sheets (or EMR films). On the plurality of EMR sheets, the plurality of x-axis channels and the plurality of y-axis channels for detecting the location of the electronic pen 500 may be disposed.

FIG. 5A is a view representing a primary resonance method of an electronic pen (e.g., stylus pen). FIG. 5B is a view representing a secondary resonance method of an electronic device reliant on a primary resonance of an electronic pen (e.g., stylus pen).

With reference to FIGS. 5A and 5B, the electronic device (e.g., electronic device 101 of FIG. 1, electronic device 200 of FIG. 2A, or electronic device 300 of FIG. 3A) according to various embodiments of the disclosure may include the display 410 (e.g., first display 230 of FIG. 2A) (e.g., flexible display 330 of FIG. 3A), the digitizer 460 (e.g., digitizer 460 of FIG. 4), the digitizer driving unit (e.g., digitizer driving unit 470 of FIG. 4), where the electronic device is configured to interact with the electronic pen 500 (e.g., stylus pen).

According to an embodiment, the digitizer 460 may be disposed on the lower part (e.g., bottom) of the display 410 based on the z-axis direction. By using the digitizer 460, the input and the location of the electronic pen 500 (e.g., stylus pen) may be detected.

According to an embodiment, the electronic pen 500 (e.g., stylus pen) may include a resonance circuit 510 and 520 configured to generate resonance. The resonance circuit 510 and 520 may include a magnetic core 510 (e.g. ferrite core) and a coil 520 (e.g., coil or inductor for an electromagnetic resonance (induction) operation) disposed to surround the magnetic core 510. Further, the resonance circuit 510 and 520 may further include a capacitor (not illustrated).

The processor (e.g., processor 120 of FIG. 1) may control the operation of the digitizer driving unit 470. The digitizer driving unit 470 may supply current to the digitizer 460 based on the control of the processor 120. As the current is supplied from the digitizer driving unit 470 to the digitizer 460, an electromagnetic (EM) field may be generated. The electromagnetic field interacts with the resonance circuit of the electronic pen 500 (e.g., stylus pen), and a primary resonance signal may be generated.

If the current being supplied to the digitizer 460 is interrupted, the primary resonance signal induced in the electronic pen 500 (e.g., stylus pen) may be maintained for a predetermined time, and then may be gradually attenuated. A secondary resonance signal may be generated through induction in the digitizer 460 by the remaining primary resonance signal that is attenuated after being induced in the electronic pen 500 (e.g., stylus pen). The digitizer driving unit 470 may detect the coordinates (e.g., location) of the electronic pen 500 (e.g., stylus pen) by measuring the current (or voltage) induced by the secondary resonance signal. The digitizer driving unit 470 may provide information about the coordinates (e.g., location) of the electronic pen 500 (e.g., stylus pen) to the processor 120. In some examples, the electronic pen may have an internal power source (e.g. a battery) and generates the secondary resonance signal in the digitizer from its internal power source by producing its own electromagnetic field.

For example, a cover window 411 (e.g., protection film) is disposed on the upper surface of the display 410, and thus the electronic pen 500 (e.g., stylus pen) may not be in direct contact with the upper surface of the display 410. If the electronic pen 500 (e.g., stylus pen) approaches the digitizer 460, the resonance by the electromagnetic induction is generated, and thus the coordinates (e.g., location) of the electronic pen 500 (e.g., stylus pen) can be detected.

For example, the electronic pen 500 (e.g., stylus pen) may generate the current through an interaction (e.g., electromagnetic induction) with the digitizer 460, and may form a magnetic field by using the generated current. The resonance circuit 510 and 520 may be used to change the electromagnetic field strength or frequency in accordance with an operation state of the electronic pen, which may be determined by the user. For example, the resonance circuit 510 and 520 may provide various frequencies for recognizing a hovering input, drawing input, button input, or erasing input. For example, the resonance circuit 510 and 520 may provide various resonance frequencies in accordance with a connection combination of a plurality of capacitors, or may provide various resonance frequencies based on a variable inductor and/or a variable capacitor.

For example, if the electronic pen 500 (e.g., stylus pen) approaches the digitizer 460, an electromagnetic induction phenomenon may occur on the channels 461 of the digitizer 460, and thus the resonance circuit 510 and 520 of the electronic pen 500 (e.g., stylus pen) may generate the current in the channels 461. The resonance circuit 510 and 520 of the electronic pen 500 (e.g., stylus pen) may form the magnetic field that induces the current in the channels by virtue of the electromagnetic field generated by the digitizer or an internal power source.

For example, the digitizer driving unit 470 may detect the coordinates (e.g., location) of the electronic pen 500 (e.g., stylus pen) by scanning the strength of the magnetic field (or the current(s) induced thereby in the channels) being applied from the electronic pen 500 (e.g., stylus pen) to the digitizer 460 across all areas.

For example, the digitizer driving unit 470 may provide information on the detected coordinates (e.g., location) of the electronic pen 500 to the processor (e.g., processor 120 of FIG. 1). The processor 120 may make the coordinates (e.g., location) of the electronic pen 500 be displayed on the display 410 based on the information on the coordinates (e.g., location) of the electronic pen 500 or use the coordinates to control other information displayed on the display or internal electronic operations of the electronic device.

According to an embodiment, in case that the electronic pen 500 (e.g., stylus pen) is located on the digitizer 460, the magnetic field being generated from the magnetic core 510 of the electronic pen 500 (e.g., stylus pen) may induce a current in the digitizer 460. In case that a magnetic material is not present outside the digitizer 460, the magnetic layer of the digitizer 460 and the electronic pen 500 (e.g., stylus pen) may form a closed loop.

According to an embodiment, the digitizer 460 may include a flexible printed circuit board layer on which a coil array (including the channels) is disposed, a magnetic layer, and a conductive layer (e.g., conductive plate). For example, the magnetic layer may be disposed on the lower part of the flexible printed circuit board layer (i.e. away from the from the front of the display), and the conductive layer (e.g., conductive plate) may be disposed on the lower part of the magnetic layer. For smooth folding and unfolding of the electronic device (e.g., electronic device 200 of FIG. 2A or electronic device 300 of FIG. 3A), the digitizer 460 may include a first digitizer portion and a second digitizer portion spaced apart from each other based on the folding axis such that there is a gap between the first and second digitizer portions in line with the hinge, where the gap may be centered around the axis of the hinge and extend either side of the axis of the hinge.

According to an embodiment, the magnetic layer may be disposed under the flexible printed circuit board layer, and may shield other elements of the electronic device from the magnetic field. The conductive layer may perform electromagnetic planarization, may block noises, and may dissipate heat generated from the printed circuit board (e.g., printed board assembly (PBA), printed circuit board (PCB), or flexible printed circuit board (FPCB)) on which the processor (e.g., application processor) and electronic components are disposed. If the electronic pen (e.g., electronic pen 500 of FIGS. 5A and 5B) approaches the electromagnetic field of the digitizer 460, the electromagnetic induction phenomenon described above occurs, and the magnetic field of the electronic pen 500 may induce a current in the coil array disposed on the flexible printed circuit board layer. By the electromagnetic induction of the electronic pen 500 and the digitizer 460, the coordinates (e.g., location) of the electronic pen 500 can be detected.

For example, in case that the electronic device 200 and 300 has a dumbbell-shaped folding structure, forward bending and reverse bending sections may occur in the bending area even if a detachable digitizer is applied. The feature of the electronic pen 500 may be degraded in the bending area. In case that a part of the conductive layer (e.g., conductive plate) corresponding to the bending area of the electronic device 200 and 300 is removed, the influence of the magnetic layer may be increased, and thus the signal of the electronic pen 500 may become non-uniform, which may reduce detection performance. Further, when the electronic pen 500 is tilted, the changes (e.g. non-uniform signal behaviour) in the induced currents in the digitizer may be exacerbated.

In order to improve a bending performance of the digitizer, a further portion of the conductive layer around the hinge may removed such that conductive layer does not extend as far towards the hinge (i.e. being area) as the circuit board and the magnetic layer. However, since the thickness of the magnetic layer (MMP1) may be thicker than that of a bar-type phone and there is no or thinner cover glass, the distance between the pen and the magnetic layer is closer, and this combined with there being no conductive layer at the bottom of the magnetic layer around the hinge, when the pen is tilted in that area, the pen pressure change occurs severely even though the pen tip is not pressed, or the pen performance (coordinate accuracy, pen pressure) may decrease even after correction through FW due to rapid change in signal.

It is an aim of approaches of the present disclosure to mitigate adverse effects in terms of electronic pen sensing that may occur when portions of the digitizer (e.g. parts of the conductive layer) are removed to improve bending performance of a flexible display device.

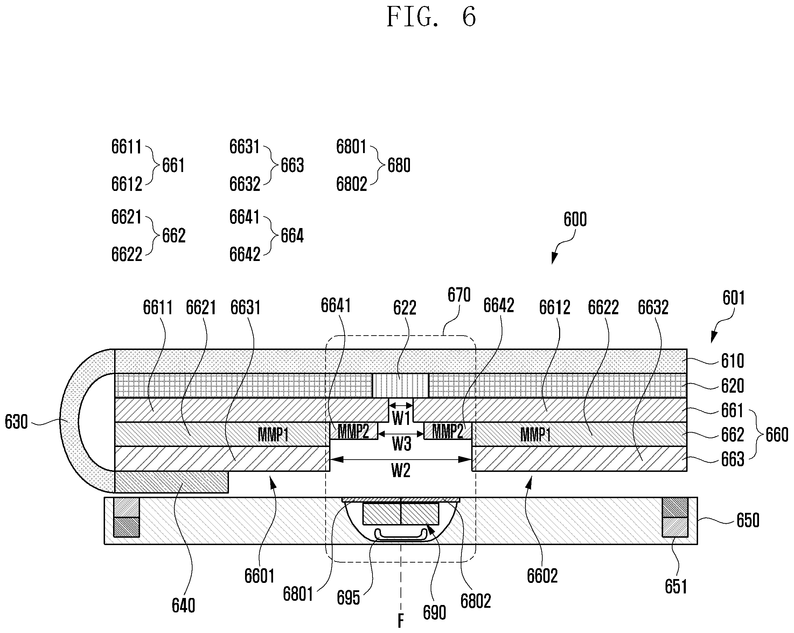

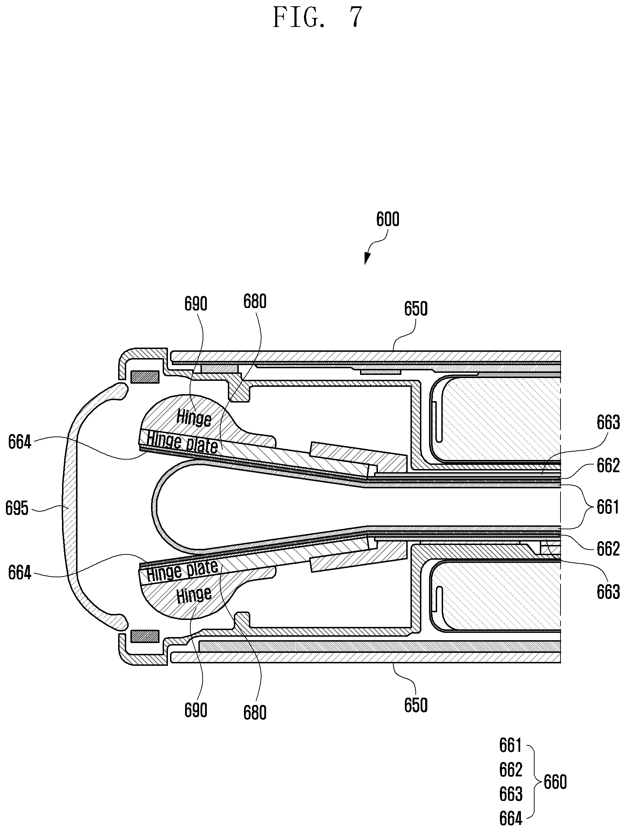

FIG. 6 is a view illustrating an electronic device representing an unfolded state of the electronic device according to an embodiment of the disclosure. FIG. 7 is a view representing a folded state of the electronic device illustrated in FIG. 6.

With reference to FIGS. 6 and 7, an electronic device 600 (e.g., electronic device 101 of FIG. 1, electronic device 200 of FIG. 2A, or electronic device 300 of FIG. 3A) according to an embodiment of the disclosure may include a display module 601, a bracket 650, a magnetic component 651, a digitizer 660, a hinge plate 680, a hinge structure 690, and a hinge cover 695 (e.g., hinge housing). For example, the display module 601 may include a display 610 (e.g., flexible display) (e.g., first display 230 of FIG. 2A, flexible display 330 of FIG. 3A, or display 410 of FIG. 4), a flexible plate 620 (e.g., display support member, lattice support member, or lattice plate), a flexible printed circuit board (FPCB) 630, and a printed circuit board (PCB) 640.

For example, in case that the hinge structure 690 has a magnetic element, a shielding member may be further disposed between the hinge structure 690 and the digitizer 660. In case that the hinge structure 690 has a magnetic element, the hinge structure 690 may include a magnetic/magnetized stainless steel element for example.

For example, the bracket 650 may be adhered (or attached) to at least a part of the display module 601 through an adhesive member, and may support the display module 601. The bracket 650 may include a recess that can accommodate at least a part (e.g., printed circuit board 640) of the display module 601.

For example, the display 610 (e.g., flexible display) may be electrically connected to the printed circuit board (PCB) 640 through the flexible printed circuit board (FPCB) 630.

For example, the digitizer 660 may be electrically connected to a digitizer driving unit (digitizer driving unit 470 of FIG. 4) through the flexible printed circuit board.

For example, the printed circuit board (PCB) 640 may include a processor (e.g., processor 120 of FIG. 1), a memory (e.g., memory 130 of FIG. 1), a display driver IC (e.g., display driver IC 430 of FIG. 4), and a digitizer driving unit (e.g., digitizer driving unit 470 of FIG. 4).

According to an embodiment, in case that the electronic device 600 is folded, the magnetic component 651 may be disposed on both sides of the bracket 650 to fix a folded state. A groove or a hole may be formed on at least a part on both sides of the bracket 650, and the magnetic component 651 may be disposed in the groove or the hole formed on both sides.

According to an embodiment, the hinge plate 680 and the hinge structure 690 may be disposed to correspond to the bending area 670. The hinge structure 690 may be hidden by the hinge cover 695 when viewed from an outside. For example, by the hinge structure 690, the electronic device 600 may be folded and unfolded in an in-folding method and/or an out-folding method.

According to an embodiment, the hinge plate 680 may include a first hinge plate portion 6801 connected to a first housing portion (e.g., first housing 210 of FIG. 2A or first housing 310 of FIG. 3A), and a second hinge plate portion 6802 connected to a second housing portion (e.g., second housing 220 of FIG. 2A or second housing 320 of FIG. 3A). For example, when the electronic device 600 is folded, the first hinge plate portion 6801 and the second hinge plate portion 6802 may be disposed to be separated based on the folding axis F.

According to an embodiment, the hinge cover 695 may be adhered (or attached) to at least a part of the hinge structure 690, and may support the hinge structure 690.

According to an embodiment, the hinge cover 695 may include the hinge plate 680. For example, the hinge plate 680 may be disposed adjacent to both sides of the bracket 650 or may be connected to both sides of the bracket 650 so as to slide as the electronic device 600 is folded or unfolded.

According to an embodiment, the hinge structure 690 may be connected to both sides of the bracket 650 through a fixing member (not illustrated), or may be connected to both sides of the bracket 650 through another rotating member (not illustrated).

According to an embodiment, the foldable housing of the electronic device 600 may include the first housing portion (e.g., first housing 210 of FIG. 2A or first housing 310 of FIG. 3A) connected to the first side of the hinge cover 695 (e.g., hinge housing), and the second housing portion (e.g., second housing 220 of FIG. 2A or second housing 320 of FIG. 3A) connected to the second side of the hinge cover 695 (e.g., hinge housing).

According to an embodiment, the hinge structure 690 of the electronic device 600 may be seated on the hinge cover 695 (e.g., hinge housing) at least partly, and may be disposed on the lower part (e.g., bottom) of the digitizer 660.

According to an embodiment, the digitizer 660 may include a flexible printed circuit board layer 661, a first magnetic layer (MMP1) 662, a conductive layer 663 (e.g., conductive plate), and a second magnetic layer (MMP2) 664. For example, the first magnetic layer 662 and the second magnetic layer 664 may be disposed on the lower part of the flexible printed circuit board layer 661. The conductive layer 663 (e.g., conductive plate) may be disposed on the lower part of the first magnetic layer 662.

For example, the first magnetic layer 662 and the second magnetic layer 664 may be formed of magnetic metal powder (MMP). However, the first magnetic layer 662 and the second magnetic layer 664 are not limited thereto, and may include silicone having magnetism, aluminum, cobalt, nickel, ferrite (e.g., MnZn ferrite), iron, silicon steel, permalloy, wrought iron, steel, or pure iron. The first magnetic layer 662 and the second magnetic layer 664 may be formed of a single material of cobalt having magnetism, nickel, ferrite (e.g., MnZn ferrite), iron, silicon steel, permalloy, wrought iron, steel, or pure iron, or a synthetic material including materials having magnetism. For example, cobalt may have permeability of about 250 u', nickel may have permeability of about 600 u', MnZn ferrite may have permeability of about 2,000 u', iron may have permeability of about 5,000 u', silicon steel may have permeability of about 7,000 u', permalloy may have permeability of about 8,000 u', wrought iron may have permeability of about 200 u' to 5,000 u', steel may have permeability of about 5,000 u' to 20,000 u', and pure iron may have permeability of about 20,000 u'.

According to an embodiment, the flexible printed circuit board layer 661 of the digitizer 660 may include a coil array. The flexible printed circuit board layer 661 of the digitizer 660 may be formed with a thickness of about 50 µm to 300 µm. The conductive layer 663 (e.g., conductive plate) of the digitizer 660 may be formed with a thickness of about 5 µm to 200 µm. For example, the conductive layer 663 (e.g., conductive plate) may be formed of a conductive metal material (e.g., aluminum, stainless steel, or copper alloy).

According to an embodiment, the first magnetic layer 662 and the second magnetic layer 664 may be disposed under the flexible printed circuit board layer 661 to form a path through which the magnetic field passes, and may shield other areas of the electronic device from the magnetic field. The conductive layer 663 may perform electromagnetic planarization, may block noises, and may dissipate heat generated from the display module 601 and the digitizer 660. If the electronic pen 500 approaches the electromagnetic field of the digitizer 660, the electromagnetic induction phenomenon occurs, and the magnetic field of the electronic pen 500 may induce a current in the coil array disposed on the flexible printed circuit board layer. By the electromagnetic induction of the electronic pen 500 and the digitizer 660, the coordinates (e.g., location) of the electronic pen 500 can be detected.

In case that the electronic device 600 has a dumbbell-shaped folding structure, forward bending and reverse bending sections may occur in the bending area 670 even if a detachable (i.e. non-continuous) digitizer 660 is used.

According to an embodiment, the flexible plate 620 (e.g., lattice plate) may be disposed on the lower part of the display 610 (e.g., flexible display). The display 610 (e.g., flexible display) can be supported by the flexible plate 620 (e.g., lattice plate) disposed on the lower part of the display 610 (e.g., flexible display). During the folding of the electronic device 600, for smooth folding and unfolding of the display 610 (e.g., flexible display) based on the folding axis F and for support of the display 610 (e.g., flexible display), the flexible plate 620 (e.g., lattice plate) may include a lattice portion 622 (e.g., lattice area). For example, the width of the lattice portion 622 may be 8 mm to 12 mm. For example, the width of the lattice portion 622 may be larger than the interval w1 (e.g., gap distance) of the flexible printed circuit board layer 661 on which the coil array is disposed. For example, the width of the lattice portion 622 may be smaller than the interval w2 (e.g., gap distance) of the conductive layer 663 (e.g., conductive plate). For example, the width of the lattice portion 622 may be substantially equal to the interval w2 (e.g., gap distance) of the second magnetic layer 664, or may be larger than the interval w2 (e.g., gap distance) of the second magnetic layer 664.

According to an embodiment, by the lattice portion 622 of the flexible plate 620 (e.g., lattice plate), the folding and unfolding operation of the electronic device 600 can be stably performed. According to an embodiment, the flexible plate 620 may be composed of carbon fiber reinforced plastics (CFRP), glass fiber reinforced plastics (GFRP), or stainless steel. During the folding and unfolding of the electronic device, the flexible plate 620 (e.g., lattice plate) can disperse the stress and pressure more uniformly, and thus can provide not only more smooth folding and unfolding experience to a user but also other advantages, such as improved durability and improved user experience.

According to an embodiment, the display 610 includes a protection layer, and thus may be formed with a thickness of about 50 µm to 800 µm. The flexible plate 620 may be disposed with a thickness of about 100 µm to 500 µm.

According to an embodiment, the digitizer 660 may be disposed on the lower part of the flexible plate 620 (e.g., lattice plate).

For example, for the smooth folding and unfolding of the electronic device 600, the digitizer 660 may include a first digitizer portion 6601 and a second digitizer portion 6602 spaced apart from each other based on the folding axis F.

According to an embodiment, when viewed in the vertical direction (e.g., z-axis direction of FIG. 5A/ a direction from the front of the electronic device to the rear of the electronic device through the flexible display) to the display 610 (e.g., flexible display) in the unfolded state of the electronic device 600, the first magnetic layer (MMP1) 662 and the second magnetic layer (MMP2) 664 may be disposed between the flexible printed circuit board layer 661 and the conductive layer 663 (e.g., conductive plate).

For example, the first magnetic layer (MMP1) 662 may be disposed on the lower part of the flexible printed circuit board layer 661. The first magnetic layer (MMP1) 662 may be disposed to overlap at least a part of the flexible printed circuit board layer 661.

For example, the second magnetic layer (MMP2) 664 may be disposed on the lower part of the flexible printed circuit board layer 661. The second magnetic layer (MMP2) 664 may be disposed to overlap at least a part of the flexible printed circuit board layer 661.

According to an embodiment, the first magnetic layer (MMP1) 662 and the second magnetic layer (MMP2) 664 may be disposed in parallel on the lower part of the flexible printed circuit board layer 661.

According to an embodiment, the conductive layer 663 (e.g., conductive plate) may be disposed on the lower part of the first magnetic layer (MMP1) 662. The conductive layer 663 (e.g., conductive plate) may be disposed to overlap the first magnetic layer (MMP1) 662. For example, when the electronic device 600 is viewed in the vertical direction to the display 610 (e.g., flexible display) in the unfolded state of the electronic device 600, the first magnetic layer (MMP1) 662 and the conductive layer 663 (e.g., conductive plate) may be disposed to substantially overlap each other. According to an embodiment, when the electronic device 600 is viewed in the vertical direction to the display 610 (e.g., flexible display) in the unfolded state of the electronic device 600, the first magnetic layer (MMP1) 662 and the second magnetic layer (MMP2) 664 may be disposed not to overlap each other.

According to an embodiment, the conductive layer 663 (e.g., conductive plate) may be disposed not to overlap the second magnetic layer (MMP2) 664.

According to an embodiment, the flexible printed circuit board layer 661 may include a first flexible printed circuit board portion 6611 and a second flexible printed circuit board portion 6612 spaced apart from each other along the folding axis F.

According to an embodiment, the conductive layer 663 (e.g., conductive plate) may include a first conductive layer portion 6641 and a second conductive layer portion 6632 spaced apart from each other along the folding axis F.

According to an embodiment, the second magnetic layer (MMP2) 664 may include a third magnetic layer portion 6641 and a fourth magnetic layer portion 6642 spaced apart from each other along the folding axis F.

According to an embodiment, the first magnetic layer (MMP1) 662 may include a first magnetic layer portion 6621 and a second magnetic layer portion 6622 spaced apart from each other along the folding axis F. In a parallel direction to the first magnetic layer (MMP1) 662, the second magnetic layer (MMP2) 664 may be disposed between the first magnetic layer portion 6621 and the second magnetic layer portion 6622 of the first magnetic layer (MMP1) 662.

According to an embodiment, at least a part of the first flexible printed circuit board portion 6611 of the flexible printed circuit board layer 661 and the first magnetic layer portion 6621 of the first magnetic layer (MMP1) 662 may be disposed to overlap each other. The first magnetic layer portion 6621 of the first magnetic layer (MMP1) 662 and the first conductive layer portion 6631 of the conductive layer 663 (e.g., conductive plate) may be disposed to overlap each other. For example, at least a part of the second flexible printed circuit board portion 6612 of the flexible printed circuit board layer 661 and the second magnetic layer portion 6622 of the first magnetic layer (MMP1) 662 may be disposed to overlap each other. The second magnetic layer portion 6622 of the first magnetic layer (MMP1) 662 and the second conductive layer portion 6632 of the conductive layer 663 (e.g., conductive plate) may be disposed to overlap each other. For example, at least a part of the first flexible printed circuit board portion 6611 of the flexible printed circuit board layer 661 and the third magnetic layer portion 6641 of the second magnetic layer (MMP2) 664 may be disposed to overlap each other. At least a part of the second flexible printed circuit board portion 6612 of the flexible printed circuit board layer 661 and the fourth magnetic layer portion 6642 of the second magnetic layer (MMP2) 664 may be disposed to overlap each other. For example, in the parallel direction, the third magnetic layer portion 6641 of the second magnetic layer (MMP2) 664 may be disposed adjacent to the first magnetic layer portion 6621 of the first magnetic layer (MMP1) 662. In the parallel direction, the fourth magnetic layer portion 6642 of the second magnetic layer (MMP2) 664 may be disposed adjacent to the second magnetic layer portion 6622 of the first magnetic layer (MMP1) 662.

According to an embodiment, the flexible printed circuit board layer 661 of the digitizer 660 may be formed with a thickness of about 50 µm to 300 µm. The first magnetic layer (MMP1) 662 of the digitizer 660 may be formed with a thickness of about 10 µm to 100 µm. The second magnetic layer (MMP2) 664 of the digitizer 660 may be formed with a thickness of about 10 µm to 100 µm. The conductive layer 663 (e.g., conductive plate) of the digitizer 660 may be formed with a thickness of about 5 µm to 200 µm.

For example, the conductive layer 663 (e.g., conductive plate) may be formed of a conductive metal material (e.g., aluminum, stainless steel, or copper alloy).

For example, the first magnetic layer (MMP1) 662 and the second magnetic layer (MMP2) 664 may be formed with substantially the same thickness.

The thicknesses of the first magnetic layer (MMP1) 662 and the second magnetic layer (MMP2) 664 are not limited thereto, and the first magnetic layer (MMP1) 662 and the second magnetic layer (MMP2) 664 may be formed with different thicknesses. In this case, the first magnetic layer (MMP1) 662 may be formed with a first thickness, and the second magnetic layer (MMP2) 664 may be formed with a second thickness that is thinner than the first thickness.

According to an embodiment, the first flexible printed circuit board portion 6611 and the second flexible printed circuit board portion 6612 of the flexible printed circuit board layer 661 may be disposed spaced apart from each other at a first interval w1 (e.g., gap distance).

For example, the first interval w1 between the first flexible printed circuit board portion 6611 and the second flexible printed circuit board portion 6612 may be smaller than the second interval w2 between the first conductive layer portion 6631 and the second conductive layer portion 6632. For example, the first interval w1 between the first flexible printed circuit board portion 6611 and the second flexible printed circuit board portion 6612 may be substantially equal to the second interval w2 between the first conductive layer portion 6631 and the second conductive layer portion 6632. The intervals are not limited thereto, and the first interval w1 between the first flexible printed circuit board portion 6611 and the second flexible printed circuit board portion 6612 may be larger than the second interval w2 between the first conductive layer portion 6631 and the second conductive layer portion 6632.

For example, the first interval w1 between the first flexible printed circuit board portion 6611 and the second flexible printed circuit board portion 6612 may be smaller than the third interval w3 between the third magnetic layer portion 6641 and the fourth magnetic layer portion 6642. For example, the first interval w1 between the first flexible printed circuit board portion 6611 and the second flexible printed circuit board portion 6612 may be substantially equal to the third interval w3 between the third magnetic layer portion 6641 and the fourth magnetic layer portion 6642. The intervals are not limited thereto, and the first interval w1 between the first flexible printed circuit board portion 6611 and the second flexible printed circuit board portion 6612 may be larger than the third interval w3 between the third magnetic layer portion 6641 and the fourth magnetic layer portion 6642.

For example, the first interval w1 between the first flexible printed circuit board portion 6611 and the second flexible printed circuit board portion 6612 may be 0 to 3 mm. For example, in case that the first flexible printed circuit board portion 6611 and the second flexible printed circuit board portion 6612 are disposed to come in contact with each other, the first interval w1 between the first flexible printed circuit board portion 6611 and the second flexible printed circuit board portion 6612 may be substantially "0". For example, in case that the first flexible printed circuit board portion 6611 and the second flexible printed circuit board portion 6612 are separated from each other, the first interval w1 between the first flexible printed circuit board portion 6611 and the second flexible printed circuit board portion 6612 may be equal to or smaller than 3 mm.

For example, the first interval w1 between the first flexible printed circuit board portion 6611 and the second flexible printed circuit board portion 6612 may be 8 mm to 12 mm. In case that the first interval w1 between the first flexible printed circuit board portion 6611 and the second flexible printed circuit board portion 6612 is formed with 8 mm to 12 mm, the first interval w1 may be smaller than or may be substantially equal to the second interval w2 between the first conductive layer portion 6631 and the second conductive layer portion 6632. In case that the first interval w1 between the first flexible printed circuit board portion 6611 and the second flexible printed circuit board portion 6612 is formed with 8 mm to 12 mm, the first interval w1 may be smaller than or may be substantially equal to the third interval w3 between the third magnetic layer portion 6641 and the fourth magnetic layer portion 6642.

According to an embodiment, the conductive layer 663 (e.g., conductive plate) may include the first conductive layer portion 6631 and the second conductive layer portion 6632 spaced apart from each other. **In** order to improve the bending feature of the electronic device 600, a part of the conductive layer 663 (e.g., conductive plate) around the hinge axis F may be removed. For example, a part of the conductive layer 663 (e.g., conductive plate) corresponding to the bending area 670 may be removed. For example, since a part of the conductive layer 663 (e.g., conductive plate) is removed, the first conductive layer portion 6631 and the second conductive layer portion 6632 may be spaced apart from each other at the second interval w2. For example, the first conductive layer portion 6631 and the second conductive layer portion 6632 may be disposed to be spaced apart from each other at the second interval w2 that is substantially equal to the first interval w1. For example, the first conductive layer portion 6631 and the second conductive layer portion 6632 may be disposed to be spaced apart from each other at the second interval w2 that is larger than the first interval w1. For example, the second interval w2 between the first conductive layer portion 6631 and the second conductive layer portion 6632 may be 10 mm to 30 mm. According to an embodiment, the first magnetic layer (MMP1) 662 may include the first magnetic layer portion 6621 and the second magnetic layer portion 6621 spaced apart from each other.

According to an embodiment, the first magnetic layer portion 6621 and the second magnetic layer portion 6622 of the first magnetic layer (MMP1) 662 may be disposed to be spaced apart from each other at the second interval w2 that is substantially equal to the first interval w1. For example, the first magnetic layer portion 6621 and the second magnetic layer portion 6622 of the first magnetic layer (MMP1) 662 may be disposed to be spaced apart from each other at the second interval w2 that is larger than the first interval w1. For example, the second interval w2 between the first magnetic layer portion 6621 and the second magnetic layer portion 6622 of the first magnetic layer (MMP1) 662 may be larger than the first interval w1. For example, the second interval w2 between the first magnetic layer portion 6621 and the second magnetic layer portion 6622 of the first magnetic layer (MMP1) 662 may be larger than the third interval w3. The second interval w2 between the first magnetic layer portion 6621 and the second magnetic layer portion 6622 is not limited thereto, and may be smaller than the first interval w1 or the third interval w3.

For example, the first magnetic layer portion 6621 and the second magnetic layer portion 6622 may be spaced apart from each other to match the hinge structure 690, and the first magnetic layer portion 6621 and the second magnetic layer portion 6622 may be disposed to be spaced apart from each other at an interval of 10 mm to 30 mm. According to an embodiment, the conductive layer 663 may be disposed to overlap the whole first magnetic layer (MMP1) 662. For example, the first magnetic layer portion 6621 of the first magnetic layer (MMP1) 662 and the first conductive layer portion 6631 of the conductive layer 663 may be disposed to overlap each other. For example, the second magnetic layer portion 6622 of the first magnetic layer (MMP1) 662 and the second conductive layer portion 6632 of the conductive layer 663 may be disposed to overlap each other.

According to an embodiment, the second magnetic layer (MMP2) 664 may be disposed between the first magnetic layer portion 6621 and the second magnetic layer portion 6622.

According to an embodiment, the second magnetic layer (MMP2) 664 may include the third magnetic layer portion 6641 and the fourth magnetic layer portion 6642 spaced apart from each other. The third magnetic layer portion 6641 and the fourth magnetic layer portion 6642 of the second magnetic layer (MMP2) 664 may be disposed to be spaced apart from each other at the third interval w3. The third interval w3 between the third magnetic layer portion 6641 and the fourth magnetic layer portion 6642 may be 10 mm to 30 mm.

For example, the third interval w3 between the third magnetic layer portion 6641 and the fourth magnetic layer portion 6642 may be substantially equal to the first interval w1 between the first magnetic layer portion 6621 and the second magnetic layer portion 6622. For example, the third interval w3 between the third magnetic layer portion 6641 and the fourth magnetic layer portion 6642 may be smaller than the first interval w1 between the first magnetic layer portion 6621 and the second magnetic layer portion 6622. For example, the third interval w3 between the third magnetic layer portion 6641 and the fourth magnetic layer portion 6642 may be larger than the first interval w1 between the first magnetic layer portion 6621 and the second magnetic layer portion 6622.

For example, the third interval w3 between the third magnetic layer portion 6641 and the fourth magnetic layer portion 6642 may be substantially equal to the second interval w2 between the first conductive layer portion 6631 and the second conductive layer portion 6632. For example, the third interval w3 between the third magnetic layer portion 6641 and the fourth magnetic layer portion 6642 may be smaller than the second interval w2 between the first conductive layer portion 6631 and the second conductive layer portion 6632. For example, the third interval w3 between the third magnetic layer portion 6641 and the fourth magnetic layer portion 6642 may be larger than the second interval w2 between the first conductive layer portion 6631 and the second conductive layer portion 6632.

According to an embodiment, at least a part of the first magnetic layer (MMP1) 662 and at least a part of the second magnetic layer (MMP2) 664 may be disposed to come in contact with (e.g., contact) each other. For example, the first magnetic layer portion 6621 of the first magnetic layer (MMP1) 662 and the third magnetic layer portion 6641 of the second magnetic layer (MMP2) 664 may be disposed to come in contact with (e.g., contact) each other. For example, the second magnetic layer portion 6622 of the first magnetic layer (MMP1) 662 and the fourth magnetic layer portion 6642 of the second magnetic layer (MMP2) 664 may be disposed to come in contact with (e.g., contact) each other.

According to an embodiment, the first magnetic layer (MMP1) 662 and the second magnetic layer (MMP2) 664 may be disposed to be spaced apart from each other. For example, the first magnetic layer portion 6621 of the first magnetic layer (MMP1) 662 and the third magnetic layer portion 6641 of the second magnetic layer (MMP2) 664 may be disposed to be spaced apart from each other at a predetermined interval. For example, the second magnetic layer portion 6622 of the first magnetic layer (MMP1) 662 and the fourth magnetic layer portion 6642 of the second magnetic layer (MMP2) 664 may be disposed to be spaced apart from each other at the predetermined interval.

According to an embodiment, the hinge plate 680 may be formed with a width of 9 mm to 12 mm so as to substantially hide the second interval w2. For example, the hinge plate 680 may be disposed to hide the whole or a part of the second interval w2. The width of the hinge plate 680 is not limited thereto, and the hinge plate 680 may be formed to have a width that is substantially equal to or larger than the second interval w2.

According to an embodiment, the first magnetic layer (MMP1) 662 may be formed to have a first performance coefficient. For example, the first magnetic layer (MMP1) 662 may be formed of a material having a first permeability with a first thickness, and may have the first performance coefficient. For example, the first magnetic layer (MMP1) 662 may be formed with a thickness of 30 µm to 60 µm. For example, the permeability of the first magnetic layer (MMP1) 662 may be about 95 u'.

According to an embodiment, the second magnetic layer (MMP2) 664 may be formed to have a second performance coefficient that is lower than the first performance coefficient. For example, the second magnetic layer (MMP2) 664 may be formed of a material having a second permeability that is lower than the first permeability with a second thickness that is substantially equal to or thinner than the first thickness (30 µm to 60 µm), and may have the second performance coefficient. For example, the second magnetic layer (MMP2) 664 may be formed with a thickness of 20 µm to 30 µm. For example, the second magnetic layer (MMP2) 664 may have the permeability that is lower than the permeability (e.g., about 95 u') of the first magnetic layer (MMP1) 662. For example, the permeability of the second magnetic layer (MMP2) 664 may be about 60 u'.

For example, the second magnetic layer (MMP2) 664 may be formed of a material having the second permeability that is lower than the first permeability of the first magnetic layer (MMP1) 662, with the thickness that is substantially equal to the first thickness of the first magnetic layer (MMP1) 662, and may have the second performance coefficient.

For example, the second magnetic layer (MMP2) 664 may be formed of the material having the first permeability that is substantially equal to that of the first magnetic layer (MMP1) 662, with the second thickness that is thinner than the first thickness of the first magnetic layer (MMP1) 662, and may have the second performance coefficient.

For example, the second magnetic layer (MMP2) 664 may be formed of the material having the second permeability that is lower than the first permeability of the first magnetic layer (MMP1) 662, with the second thickness that is thinner than the first thickness of the first magnetic layer (MMP1) 662, and may have the second performance coefficient.

According to an embodiment, the lattice portion 622 (e.g., lattice area) may be disposed on a portion corresponding to the bending area 670. For example, the lattice portion 622 (e.g., lattice area) may be disposed to overlap the bending area 670.

According to an embodiment, at least a part of the second magnetic layer (MMP2) 664 may be disposed to overlap the lattice portion 622 (e.g., lattice area). For example, the second magnetic layer (MMP2) 664 may be disposed to overlap the whole lattice portion 622 (e.g., lattice area).

According to an embodiment, the first magnetic layer 662 and the lattice portion 622 (e.g., lattice area) may be disposed not to overlap each other.

The digitizer 660 of the disclosure can be applied to not only the foldable electronic device but also a slidable electronic device or a rollable electronic device. In the disclosure, although a foldable electronic device in which in-folding is possible has been described as an example, the electronic device 600 according to the disclosure is not limited to the foldable electronic device in which the in-folding is possible. For example, the electronic device 600 according to the disclosure may include a foldable electronic device including an out-foldable display. The electronic device 600 according to the disclosure may include a multi-foldable electronic device including a display of which multiple times in-out folding is possible. For example, like an expandable electronic device through slide movement between the housings, the electronic device 600 according to the disclosure may include various electronic devices each including a flexible display of which a partial area (e.g., bending area or folding area) is bendable or rollable.

In the electronic device 600 according to an embodiment of the disclosure, the second magnetic layer (MMP2) 664 may be disposed to overlap the portion from which a part of the conductive layer 663 (e.g., conductive plate) is removed. On the portion corresponding to the bending area 670, the second magnetic layer (MMP2) 664 may be disposed between the first magnetic layer portion 6621 and the second magnetic layer portion 6622, so that the electronic pen detection deterioration in the bending area 670, due to the removal of a part of the conductive layer 663 (e.g., conductive plate), can be prevented, reduced, or compensated for.

Overall with respect to Figures 6 and 7, portions of the magnetic layer around the hinge axis (i.e. within the bending area 670) have been replaced with portions (MMP2 - 6641, 6642) that have different magnetic properties. In particular, the portions of MPP2 have a lower magnetic performance (e.g. thinner thickness and/or lower permeability) in order to reduce the adverse effects of the removal of the conductive layer around the hinge axis in terms of electronic pen detection. In addition to this, reducing the thickness of the magnetic layer around the hinge axis can also provide an improved hinge mechanism since, among other things, it may reduce the likelihood of damage occurring to the display due to the folding and protrusion of the magnetic layer around the hinge axis during folding. These beneficial effects may be achieved via any of the combinations of relative thickness and overlaps of the flexible printed circuit board layer 661, the conductive layer 663 and the magnetic layer (662, 6641, 6642) described above.

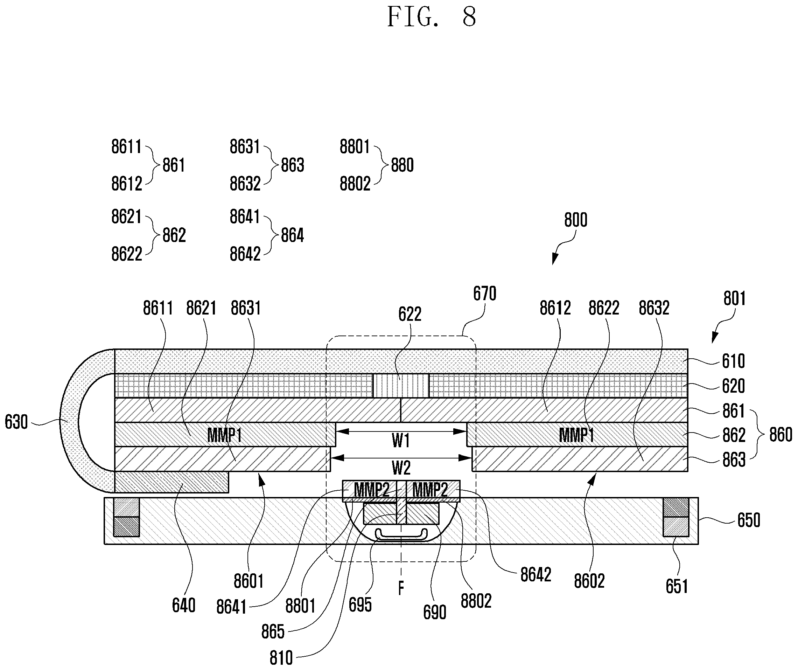

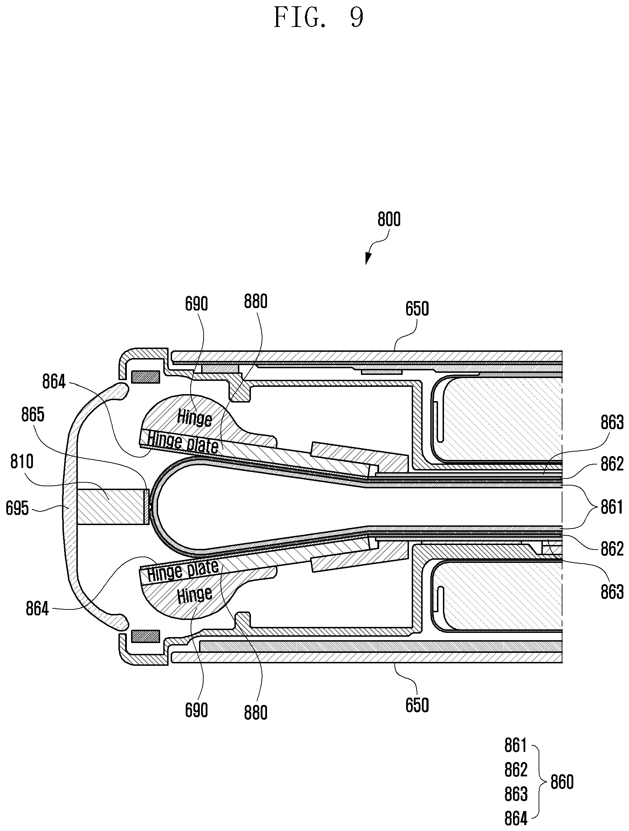

FIG. 8 is a view illustrating an electronic device representing an unfolded state of the electronic device according to an embodiment of the disclosure. FIG. 9 is a view representing a folded state of the electronic device illustrated in FIG. 8.

An electronic device 800 of FIG. 8 may be similar to the electronic device 600 of FIG. 6 at least partly, and may also include features of other embodiments of the electronic device. In explaining the electronic device 800 of FIGS. 8 and 9, detailed explanation of the constitution that is substantially the same as (or similar to) the constitution of the electronic device 600 of FIG. 6 and 7 may be omitted.

With reference to FIGS. 8 and 9, an electronic device 800 (e.g., electronic device 101 of FIG. 1, electronic device 200 of FIG. 2A, electronic device 300 of FIG. 3A, or electronic device 600 of FIGS. 6 and 7) according to an embodiment of the disclosure may include a display module 801, a bracket 650, a magnetic component 651, a digitizer 860, a hinge plate 880, a hinge structure 690, and a hinge cover 695 (e.g., hinge housing). For example, the display module 801 may include a display 610 (e.g., flexible display) (e.g., first display 230 of FIG. 2A, flexible display 330 of FIG. 3A, or display 410 of FIG. 4), a flexible plate 620 (e.g., display support member, lattice support member, or lattice plate), a flexible printed circuit board (FPCB) 630, and a printed circuit board (PCB) 640. For example, in case that the hinge structure 690 has magnetism, a shielding member may be further disposed between the hinge structure 690 and the digitizer 860. In case that the hinge structure 690 has magnetism, the hinge structure 690 may include a stainless steel having magnetism.

For example, the display 610 (e.g., flexible display) may be electrically connected to the printed circuit board (PCB) 640 through the flexible printed circuit board (FPCB) 630.

For example, the digitizer 860 may be electrically connected to a digitizer driving unit (digitizer driving unit 470 of FIG. 4) through the flexible printed circuit board.

For example, the printed circuit board (PCB) 640 may include a processor (e.g., processor 120 of FIG. 1), a memory (e.g., memory 130 of FIG. 1), a display driver IC (e.g., display driver IC 430 of FIG. 4), and a digitizer driving unit (e.g., digitizer driving unit 470 of FIG. 4).

According to an embodiment, in case that the electronic device 800 is folded, the magnetic component 651 may be disposed on both sides of the bracket 650 to fix a folded state. A groove or a hole may be formed on at least a part on both sides of the bracket 650, and the magnetic component 651 may be disposed in the groove or the hole formed on both sides.

According to an embodiment, the hinge plate 880 and the hinge structure 690 may be disposed to correspond to the bending area 670. The hinge structure 690 may be hidden by the hinge cover 695 when viewed from an outside. For example, by the hinge structure 690, the electronic device 800 may be folded and unfolded in an in-folding method and/or an out-folding method. According to an embodiment, the digitizer 860 may be disposed on the lower part of the flexible plate 620 (e.g., lattice plate). For example, during the folding of the electronic device 800, for smooth folding and unfolding of the display 610 (e.g., flexible display) based on the folding axis F and for support of the display 610 (e.g., flexible display), the flexible plate 620 (e.g., lattice plate) may include a lattice portion 622 (e.g., lattice area). For example, the width of the lattice portion 622 may be 8 mm to 12 mm.

For example, for smooth folding and unfolding of the electronic device 800, the digitizer 860 may include a first digitizer portion 8601 and a second digitizer portion 8602 which are spaced apart from each other based on (i.e. either side of) the folding axis F.

According to an embodiment, the digitizer 860 may include a flexible printed circuit board layer 861 on which a coil array is disposed, a first magnetic layer (MMP1) 862, a conductive layer 863 (e.g., conductive plate), a second magnetic layer (MMP2) 864, and a third magnetic layer 865.

For example, the first magnetic layer 862 may be disposed on the lower part of the flexible printed circuit board layer 861. The conductive layer 863 (e.g., conductive plate) may be disposed on the lower part of the first magnetic layer 862. The second magnetic layer 864 and the third magnetic layer 865 may be located near the lower part (e.g., bottom) of the conductive layer 863 and may not be attached or directly adjoining the conductive layer. For example, the second magnetic layer 864 and the third magnetic layer 865 may be disposed within the bending area 670 below the level of the conductive layer 863 but not overlapping the conductive layer 863 or the first magnetic layer 862. However, in other examples there may be some overlap between these elements.

For example, the first magnetic layer 862, the second magnetic layer 864, and the third magnetic layer 865 may be formed of magnetic metal powder (MMP). The first magnetic layer 862, the second magnetic layer 864, and the third magnetic layer 865 are not limited thereto, and the first magnetic layer 862 and the second magnetic layer 864 may include silicone having magnetism, aluminum, cobalt, nickel, ferrite (e.g., MnZn ferrite), iron, silicon steel, permalloy, wrought iron, steel, or pure iron. The first magnetic layer 862 and the second magnetic layer 864 may be formed of a single material of cobalt having magnetism, nickel, ferrite (e.g., MnZn ferrite), iron, silicon steel, permalloy, wrought iron, steel, or pure iron, or a synthetic material including materials having magnetism.

According to an embodiment, the flexible printed circuit board layer 861 of the digitizer 860 may include a coil array. The flexible printed circuit board layer 861 of the digitizer 860 may be formed with a thickness of about 50 µm to 300 µm. The conductive layer 863 (e.g., conductive plate) of the digitizer 860 may be formed with a thickness of about 5 µm to 200 µm. For example, the conductive layer 863 (e.g., conductive plate) may be formed of a conductive metal material (e.g., aluminum, stainless steel, or copper alloy).

According to an embodiment, when the electronic device 800 is viewed in a vertical direction to the display 610 (e.g., flexible display) in the unfolded state of the electronic device 800, the first magnetic layer (MMP1) 862 may be disposed between the flexible printed circuit board layer 861 and the conductive layer 863 (e.g., conductive plate).

According to an embodiment, when the electronic device 800 is viewed in the vertical direction to the display 610 (e.g., flexible display) in the unfolded state of the electronic device 800, the second magnetic layer (MMP2) 864 may be disposed below (e.g., at the bottom of) the first magnetic layer (MMP1) 862 and the conductive layer 863 (e.g., conductive plate).

According to an embodiment, when the electronic device 800 is viewed in the vertical direction to the display 610 (e.g., flexible display) in the unfolded state of the electronic device 800, the third magnetic layer 865 may be disposed below (e.g., at the bottom of) the first magnetic layer (MMP1) 862 and the conductive layer 863 (e.g., conductive plate). For example, when the electronic device 800 is viewed in the vertical direction to the display 610 (e.g., flexible display) in the unfolded state of the electronic device 800, the third magnetic layer 865 may be disposed adjacent to the second magnetic layer 864.

For example, the first magnetic layer (MMP1) 862 may be disposed on the lower part of the flexible printed circuit board layer 861. The first magnetic layer (MMP1) 862 may be disposed to overlap at least a part of the flexible printed circuit board layer 861.

According to an embodiment, when the electronic device 800 is viewed in the vertical direction to the display 610 (e.g., flexible display) in the unfolded state of the electronic device 800, the first magnetic layer (MMP1) 862 and the second magnetic layer (MMP2) 864 may be disposed in different locations.

For example, the second magnetic layer (MMP2) 864 and the third magnetic layer 865 may be disposed between the flexible printed circuit board layer 861 and the hinge plate 880.

For example, the first magnetic layer (MMP1) 862 may be disposed to substantially contact the flexible printed circuit board layer 861 on the lower part of the flexible printed circuit board layer 861.

For example, the first magnetic layer (MMP1) 862 may be disposed to substantially contact the conductive layer 863 (e.g., conductive plate) on an upper part of the conductive layer 863 (e.g., conductive plate).

For example, the second magnetic layer (MMP2) 864 may be disposed to be spaced apart from the flexible printed circuit board layer 861 for a predetermined distance on the lower part of the flexible printed circuit board layer 861. For example, the second magnetic layer (MMP2) 864 may be disposed to be spaced apart from the first magnetic layer (MMP1) 862 for a predetermined distance on the lower part of the flexible printed circuit board layer 861. For example, the second magnetic layer (MMP2) 864 may be disposed to be spaced apart from the conductive layer 863 (e.g., conductive plate) for a predetermined distance on the lower part of the flexible printed circuit board layer 861. For example, the third magnetic layer 865 may be disposed to be spaced apart from the conductive layer 863 (e.g., conductive plate) on the lower part of the flexible printed circuit board layer 861.

According to an embodiment, the hinge cover 695 may be adhered (or attached) to at least a part of the hinge structure 690, and may support the hinge structure 690.

According to an embodiment, the hinge structure 690 may include the hinge plate 880. For example, the hinge plate 880 may be disposed adjacent to both sides of the bracket 650 or may be connected to both sides of the bracket 650 so as to slide as the electronic device 800 is folded or unfolded.

According to an embodiment, the hinge structure 690 may be connected to both sides of the bracket 650 through a fixing member (not illustrated), or may be connected to the both sides of the bracket 650 through another rotating member (not illustrated).

According to an embodiment, the foldable housing of the electronic device 800 may include the first housing portion (e.g., first housing 210 of FIG. 2A or first housing 310 of FIG. 3A) connected to the first side of the hinge cover 695 (e.g., hinge housing), and the second housing portion (e.g., second housing 220 of FIG. 2A or second housing 320 of FIG. 3A) connected to the second side of the hinge cover 695 (e.g., hinge housing).

According to an embodiment, the hinge structure 690 of the electronic device 800 may be seated on the hinge cover 695 (e.g., hinge housing) at least partly, and may be disposed on the lower part (e.g., bottom) of the digitizer 860.

According to an embodiment, the hinge plate 880 may include a first hinge plate portion 8801 connected to the first housing portion (e.g., first housing 210 of FIG. 2A or first housing 310 of FIG. 3A), and a second hinge plate portion 8802 connected to the second housing portion (e.g., second housing 220 of FIG. 2A or second housing 320 of FIG. 3A).

For example, the second magnetic layer (MMP2) 864 may be disposed to contact the hinge plate 880 on the upper part of the hinge plate 880. For example, the second magnetic layer (MMP2) 864 may be disposed to overlap the hinge plate 880 on the upper part of the hinge plate 880. For example, when the electronic device 800 is viewed in the vertical direction to the display 610 (e.g., flexible display) in the unfolded state of the electronic device 800, the second magnetic layer (MMP2) 864 may be disposed below the first magnetic layer (MMP1) 862. According to an embodiment, the conductive layer 863 (e.g., conductive plate) may be disposed on the lower part of the first magnetic layer (MMP1) 862. The conductive layer 863 (e.g., conductive plate) may be disposed to overlap the first magnetic layer (MMP1) 862.

According to an embodiment, when the electronic device 800 is viewed in the vertical direction to the display 610 (e.g., flexible display) in the unfolded state of the electronic device 800, the first magnetic layer (MMP1) 862 and the second magnetic layer (MMP2) 864 may be disposed not to overlap each other.

According to an embodiment, the conductive layer 863 (e.g., conductive plate) may be disposed not to overlap the second magnetic layer (MMP2) 864. For example, when the electronic device 800 is viewed in the vertical direction to the display 610 (e.g., flexible display) in the unfolded state of the electronic device 800, the second magnetic layer (MMP2) 864 and the conductive layer 863 (e.g., conductive plate) may be disposed not to overlap each other.

According to an embodiment, the first magnetic layer (MMP1) 862 may include a first magnetic layer portion 8621 and a second magnetic layer portion 8622 spaced apart from each other along the folding axis F.

According to an embodiment, the conductive layer 863 (e.g., conductive plate) may include a first conductive layer portion 8631 and a second conductive layer portion 8632 spaced apart from each other along the folding axis F.

According to an embodiment, the second magnetic layer 864 may include a third magnetic layer portion 8641 and a fourth magnetic layer portion 8642 spaced apart from each other along the folding axis F.

According to an embodiment, the third magnetic layer portion 8641 of the second magnetic layer 864 may be disposed to overlap an upper part of a first hinge plate portion 8801 of the hinge plate 880. The fourth magnetic layer portion 8642 of the second magnetic layer 864 may be disposed to overlap an upper part of a second hinge plate portion 8802 of the hinge plate 880. For example, the third magnetic layer portion 8641 may be disposed to be adhered to an upper part of the first hinge plate portion 8801. For example, the fourth magnetic layer portion 8642 may be disposed to be adhered to the upper part of the second hinge plate portion 8802.

According to an embodiment, the hinge structure 690 may include a support member 810 (e.g., center-bar) disposed between the first hinge plate portion 8801 and the second hinge plate portion 8802 along the folding axis F. For example, in the unfolded state of the electronic device 800, the second magnetic layer 864 may be disposed on an upper part of the support member 810 (e.g., center-bar). At least a part of the second magnetic layer 864 may be disposed to be adhered to the support member 810 (e.g., center-bar).

For example, the conductive layer 863 (e.g., conductive plate) may be formed of a conductive metal material (e.g., aluminum, stainless steel, or copper alloy).

For example, the first magnetic layer (MMP1) 862 and the second magnetic layer (MMP2) 864 may be formed with substantially the same thickness. For example, the second magnetic layer 864 and the third magnetic layer 865 may be formed with substantially the same thickness.

The thicknesses of the first magnetic layer (MMP1) 862 and the second magnetic layer (MMP2) 864 are not limited thereto, and the first magnetic layer (MMP1) 862 and the second magnetic layer (MMP2) 864 may be formed with different thicknesses. In this case, the first magnetic layer (MMP1) 862 may be formed with a first thickness, and the second magnetic layer (MMP2) 864 may be formed with a second thickness that is thinner than the first thickness.

According to an embodiment, if the electronic pen (e.g., electronic pen 500 of FIGS. 5A and 5B) approaches the digitizer 860, an electromagnetic induction phenomenon occurs, and a magnetic field of the electronic pen 500 may induce a current in the coil array disposed on the flexible printed circuit board layer 861. By the electromagnetic induction of the electronic pen 500 and the digitizer 860, the coordinates (e.g., location) of the electronic pen 500 can be detected.

According to an embodiment, the flexible printed circuit board layer 861 may be formed as one board without being separated.

According to an embodiment, the flexible printed circuit board layer 861 may include a first flexible printed circuit board portion 8611 and a second flexible printed circuit board portion 8612 spaced apart from each other along the folding axis F. For example, when the electronic device 800 is folded, the first flexible printed circuit board portion 8611 and the second flexible printed circuit board portion 8612 may be separated from each other. Although the first flexible printed circuit board portion 8611 and the second flexible printed circuit board portion 8612 are separated from each other, in the unfolded state of the electronic device 800, the first flexible printed circuit board portion 8611 and the second flexible printed circuit board portion 8612 may be disposed to contact each other without a gap between them.

According to an embodiment, the first magnetic layer portion 8621 and the second magnetic layer portion 8622 of the first magnetic layer (MMP1) 862 may be disposed spaced apart from each other at the first interval w1 (e.g., gap distance). For example, the first interval w1 between the first magnetic layer portion 8621 and the second magnetic layer portion 8622 of the first magnetic layer (MMP1) 862 may be 8 mm to 30 mm.

For example, the first interval w1 between the first magnetic layer portion 8621 and the second magnetic layer portion 8622 may be substantially equal to the second interval w2 between the first conductive layer portion 8631 and the second conductive layer portion 8632. For example, the first interval w1 between the first magnetic layer portion 8621 and the second magnetic layer portion 8622 may be smaller than the second interval w2 between the first conductive layer portion 8631 and the second conductive layer portion 8632. The first interval w1 between the first magnetic layer portion 8621 and the second magnetic layer portion 8622 is not limited thereto, and may be larger than the second interval w2 between the first conductive layer portion 8631 and the second conductive layer portion 8632.

According to an embodiment, the conductive layer 863 (e.g., conductive plate) may include the first conductive layer portion 8631 and the second conductive layer portion 8632 spaced apart from each other. In order to improve the bending feature of the electronic device 800, a part of the conductive layer 863 (e.g., conductive plate) may be removed. For example, a part of the first conductive layer portion 8631 of the conductive layer 863 (e.g., conductive plate) may be removed, and a part of the second conductive layer portion 8632 may be removed, so that the first conductive layer portion 8631 and the second conductive layer portion 8632 may be spaced apart from each other at the second interval w2.

For example, the second interval w2 between the first conductive layer portion 8631 and the second conductive layer portion 8631 may be 10 mm to 30 mm. For example, a part of the conductive layer 863 (e.g., conductive plate) corresponding to the bending area may be removed.

For example, the second interval w2 between the first conductive layer portion 8631 and the second conductive layer portion 8632 may be substantially equal to the first interval w1 between the first magnetic layer portion 8621 and the second magnetic layer portion 8622. For example, the second interval w2 between the first conductive layer portion 8631 and the second conductive layer portion 8632 may be larger than the first interval w1 between the first magnetic layer portion 8621 and the second magnetic layer portion 8622.

According to an embodiment, the second magnetic layer (MMP2) 864 may include a third magnetic layer portion 8641 and a fourth magnetic layer portion 8642 spaced apart from each other. The third magnetic layer portion 8641 and the fourth magnetic layer portion 8642 may be disposed to be spaced apart from each other at an interval, and the third magnetic layer 865 may be disposed between the third magnetic layer portion 8641 and the fourth magnetic layer portion 8642 of the second magnetic layer (MMP2) 864.

According to an embodiment, when the electronic device 800 is unfolded (refer to FIG. 8), the third magnetic layer 865 may be disposed between the third magnetic layer portion 8641 and the fourth magnetic layer portion 8642 spaced apart from each other along the folding axis F. For example, when the electronic device 800 is unfolded, the second magnetic layer 864 and the third magnetic layer 865 may be disposed to be adjacent to each other (e.g., substantially connected form). For example, the third magnetic layer 865 may be formed of the same material with the same thickness (height) as those of the second magnetic layer 864. For example, the third magnetic layer 865 may be disposed to overlap the support member 810 (e.g., center-bar). For example, the third magnetic layer 865 may be adhered (or attached) to the support member 810 (e.g., center-bar) through an adhesive member.

According to an embodiment, when the electronic device 800 is folded (refer to FIG. 9), the second magnetic layer 864 and the third magnetic layer 865 may be spaced apart from each other. For example, when the electronic device 800 is folded (refer to FIG. 9), the hinge plate 880 and the support member 810 (e.g., center-bar) may be disposed to be spaced apart (e.g., separated) from each other, and thus the second magnetic layer 864 and the third magnetic layer 865 may be disposed to be spaced apart (e.g., separated) from each other.

For example, the hinge plate 880 may be formed to have a width that is substantially equal to or larger than the first interval w1 so as to substantially hide the first interval w1. For example, the hinge plate 880 may be formed to have a width that is substantially equal to or larger than the second interval w2 so as to substantially hide the second interval w2.

According to an embodiment, the first magnetic layer (MMP1) 862 may be formed to have a first performance coefficient. For example, the first magnetic layer (MMP1) 862 may be formed of a material having a first permeability with a first thickness, and may have the first performance coefficient. For example, the first magnetic layer (MMP1) 862 may be formed with a thickness of 30 µm to 60 µm. For example, the permeability of the first magnetic layer (MMP1) 862 may be about 95 u'.

According to an embodiment, the second magnetic layer (MMP2) 864 may be formed to have a second performance coefficient that is lower than the first performance coefficient. For example, the second magnetic layer (MMP2) 864 may be formed of a material having a second permeability that is lower than the first permeability with a second thickness that is substantially equal to or thinner than the first thickness (30 µm to 60 µm), and may have the second performance coefficient. For example, the second magnetic layer (MMP2) 864 may be formed with a thickness of 20 µm to 30 µm. For example, the second magnetic layer (MMP2) 864 may have the permeability that is lower than the permeability (e.g., about 95 u') of the first magnetic layer (MMP1) 862. For example, the permeability of the second magnetic layer (MMP2) 864 may be about 60 u'.

For example, the second magnetic layer (MMP2) 864 may be formed of a material having the second permeability that is lower than the first permeability of the first magnetic layer (MMP1) 862, with the thickness that is substantially equal to the first thickness of the first magnetic layer (MMP1) 862, and may have the second performance coefficient.

For example, the second magnetic layer (MMP2) 864 may be formed of the material having the first permeability that is substantially equal to that of the first magnetic layer (MMP1) 862, with the second thickness that is thinner than the first thickness of the first magnetic layer (MMP1) 862, and may have the second performance coefficient.

For example, the second magnetic layer (MMP2) 864 may be formed of the material having the second permeability that is lower than the first permeability of the first magnetic layer (MMP1) 862, with the second thickness that is thinner than the first thickness of the first magnetic layer (MMP1) 862, and may have the second performance coefficient.

According to an embodiment, the lattice portion 622 (e.g., lattice area) may be disposed on a portion corresponding to the bending area 670. For example, the lattice portion 622 (e.g., lattice area) may be disposed to overlap the bending area 670.

According to an embodiment, at least a part of the second magnetic layer (MMP2) 864 may be disposed to overlap the lattice portion 622 (e.g., lattice area). For example, the second magnetic layer (MMP2) 864 may be disposed to overlap the whole lattice portion 622 (e.g., lattice area).

According to an embodiment, the first magnetic layer 862 and the lattice portion 622 (e.g., lattice area) may be disposed not to overlap each other.

The digitizer 860 of the disclosure can be applied to not only the foldable electronic device but also the slidable electronic device or the rollable electronic device. In the disclosure, although a foldable electronic device in which in-folding is possible has been described as an example, the electronic device 800 according to the disclosure is not limited to the foldable electronic device in which the in-folding is possible. For example, the electronic device 800 according to the disclosure may include a foldable electronic device including an out-foldable display. The electronic device 800 according to the disclosure may include a multi-foldable electronic device including a display of which multiple times in-out folding is possible. For example, like an expandable electronic device through slide movement between the housings, the electronic device 800 according to the disclosure may include various electronic devices each including a flexible display of which a partial area (e.g., bending area or folding area) is bendable or rollable.

In the electronic device 800 according to an embodiment of the disclosure, the second magnetic layer (MMP2) 864 may be disposed to overlap the hinge plate 880. On the portion corresponding to the bending area, the second magnetic layer (MMP2) 864 may be disposed, and thus the feature deterioration in the bending area 670, due to the removal of the part of the conductive layer 863 (e.g., conductive plate), can be prevented (or compensated for).

Overall with respect to Figures 8 and 9, portions of the magnetic layer around the hinge axis (i.e. within the bending area 670) have been replaced with portions (MMP2 - 8641, 8642) that have a lower magnetic performance (e.g. thinner and/or lower permeability) in order to reduce the adverse effects of the removal of the conductive layer around the hinge axis in terms of electronic pen detection. In addition to this, positioning the MMP2 portions 8641, 8642 away from the display may reduce the likelihood of damage occurring to the display due to the folding and protrusion of the magnetic layer around the hinge axis during folding. These beneficial effects may be achieved via any of the combinations of relative thickness and overlaps of the flexible printed circuit board layer 661, the conductive layer 663 and the magnetic layer (862, 8641, 8642, 865) described above.

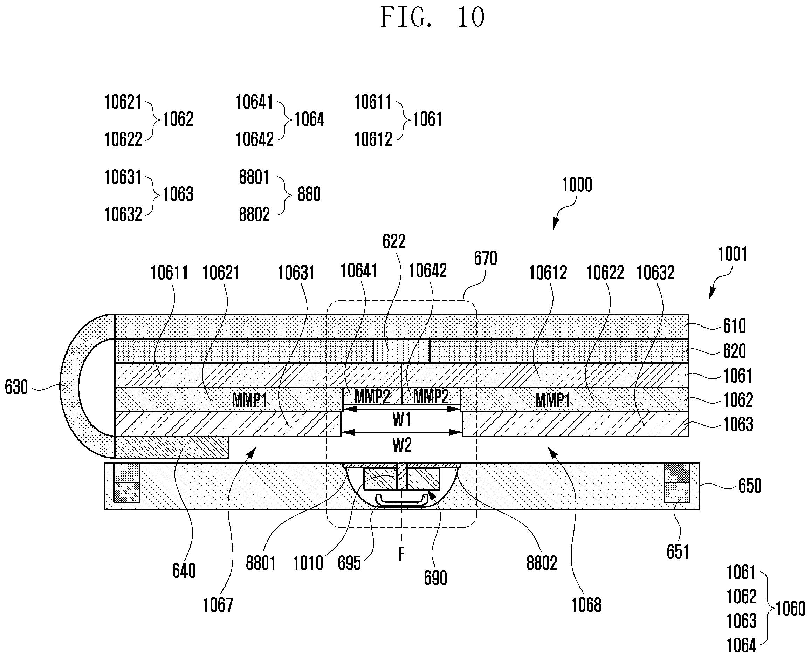

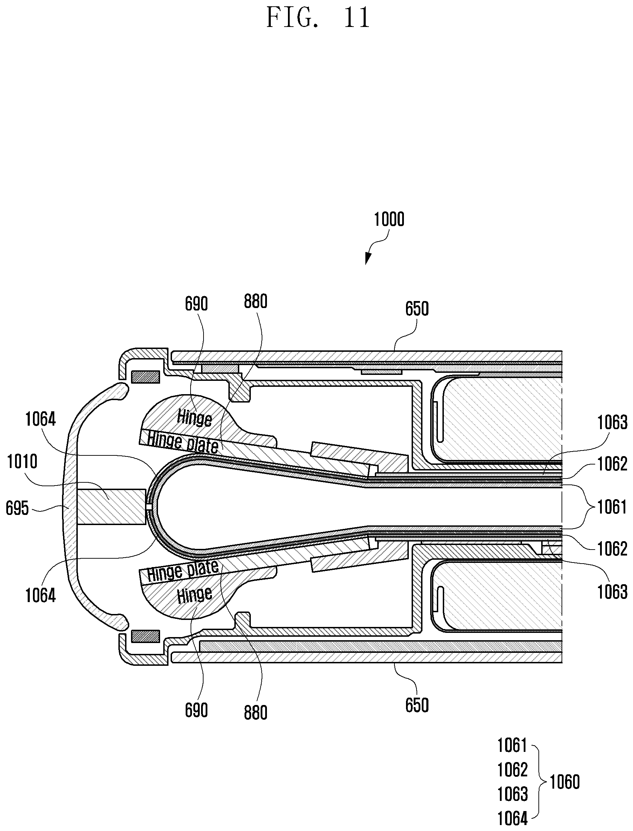

FIG. 10 is a view illustrating an electronic device representing an unfolded state of the electronic device according to an embodiment of the disclosure. FIG. 11 is a view representing a folded state of the electronic device illustrated in FIG. 10.

An electronic device 1000 of FIG. 10 may be similar to the electronic device 600 of FIG. 6 and the electronic device 800 of FIG. 8 at least partly, and may also include features of other embodiments of the electronic device. In explaining the electronic device 1000 of FIGS. 10 and 11, detailed explanation of the constitution that is substantially the same as (or similar to) the constitution of the electronic device 600 of FIG. 6 or the electronic device 800 of FIG. 8 may be omitted.

With reference to FIGS. 10 and 11, an electronic device 1000 (e.g., electronic device 101 of FIG. 1, electronic device 200 of FIG. 2A, and electronic device 300 of FIG. 3A) according to an embodiment of the disclosure may include a display module 1001, a bracket 650, a magnetic component 651, a digitizer 1060, a hinge plate 880, a hinge structure 690, and a hinge cover 695. For example, the display module 1001 may include a display 610 (e.g., flexible display) (e.g., first display 230 of FIG. 2A, flexible display 330 of FIG. 3A, or display 410 of FIG. 4), a flexible plate 620 (e.g., display support member, lattice support member, or lattice plate), a flexible printed circuit board (FPCB) 630, and a printed circuit board (PCB) 640.

For example, in case that the hinge structure 690 has magnetism, a shielding member may be further disposed between the hinge structure 690 and the digitizer 1060. In case that the hinge structure 690 has magnetism, the hinge structure 690 may include a stainless steel having magnetism.

For example, the bracket 650 may be adhered (or attached) to at least a part of the display module 1001 through an adhesive member or the like, and may support the display module 1001. The bracket 650 may include a recess that can accommodate at least a part (e.g., printed circuit board 640) of the display module 1001.

For example, the display 610 (e.g., flexible display) may be electrically connected to the printed circuit board (PCB) 640 through the flexible printed circuit board (FPCB) 630. For example, the digitizer 1060 may be electrically connected to a digitizer driving unit (e.g., digitizer driving unit 470 of FIG. 4) through the flexible printed circuit board.

For example, the printed circuit board (PCB) 640 may include a processor (e.g., processor 120 of FIG. 1), a memory (e.g., memory 130 of FIG. 1), a display driver IC (e.g., display driver IC 430 of FIG. 4), and a digitizer driving unit (e.g., digitizer driving unit 470 of FIG. 4).

According to an embodiment, in case that the electronic device 1000 is folded, the magnetic component 651 may be disposed on both sides of the bracket 650 to fix a folded state. A groove or a hole may be formed on at least a part on both sides of the bracket 650, and the magnetic component 651 may be disposed in the groove or the hole formed on both sides.

According to an embodiment, the hinge plate 880 may include a first hinge plate portion 8801 connected to the first housing portion (e.g., first housing 210 of FIG. 2A or first housing 310 of FIG. 3A), and a second hinge plate portion 8802 connected to the second housing portion (e.g., second housing 220 of FIG. 2A or second housing 320 of FIG. 3A).

According to an embodiment, the hinge structure 690 may include a support member 1010 (e.g., center-bar) disposed between the first hinge plate portion 8801 and the second hinge plate portion 8802 along the folding axis F. For example, the support member 1010 (e.g., center bar) may be disposed between the first hinge plate portion 8801 and the second hinge plate portion 8802.

According to an embodiment, the hinge plate 880, the hinge structure 690, and the support member 1010 (e.g., center-bar) may be disposed to correspond to the bending area 670. The hinge structure 690 and the support member 1010 may be hidden by the hinge cover 695 when viewed from an outside. For example, by the hinge structure 690, the electronic device 1000 may be folded and unfolded in an in-folding method and/or an out-folding method.

According to an embodiment, the hinge cover 695 may be adhered (or attached) to at least a part of the hinge structure 690, and may support the hinge structure 690.

According to an embodiment, the hinge plate 880 may be disposed adjacent to both sides of the bracket 650 or may be connected to both sides of the bracket 650 so as to slide as the electronic device 1000 is folded or unfolded.

According to an embodiment, the hinge structure 690 may be connected to both sides of the bracket 650 through a fixing member (not illustrated), or may be connected to the both sides of the bracket 650 through another rotating member (not illustrated).

For example, in case that the hinge structure 690 has magnetism, a shielding member may be further disposed between the hinge structure 690 and the digitizer 1060.

According to an embodiment, the digitizer 1060 may be disposed on the lower part of the flexible plate 620 (e.g., lattice plate).

For example, for smooth folding and unfolding of the electronic device 1000, at least some constituent elements of the digitizer 1060 may be separated to be spaced apart from each other based on the folding axis F. For example, for the smooth folding and unfolding of the electronic device 1000, the digitizer 1060 may include a first digitizer portion 1067 and a second digitizer portion 1068 which are spaced apart from each other based on the folding axis F.

According to an embodiment, the digitizer 1060 may include a flexible printed circuit board layer 1061 including a coil array, a first magnetic layer (MMP1) 1062, a conductive layer 1063 (e.g., conductive plate), and a second magnetic layer (MMP2) 1064.

According to an embodiment, when the electronic device 1000 is viewed in the vertical direction to the display 610 (e.g., flexible display) in the unfolded state of the electronic device 1000, the first magnetic layer (MMP1) 1062 may be disposed between the flexible printed circuit board layer 1061 and the conductive layer 1063 (e.g., conductive plate).

For example, the first magnetic layer (MMP1) 1062 may be disposed on the lower part of the flexible printed circuit board layer 1061. The first magnetic layer (MMP1) 1062 may be disposed to overlap at least a part of the flexible printed circuit board layer 1061.

For example, the second magnetic layer (MMP2) 1064 may be disposed on the lower part of the flexible printed circuit board 1061. The second magnetic layer (MMP2) 1064 may be disposed to overlap at least a part of the flexible printed circuit board layer 1061.

According to an embodiment, the first magnetic layer (MMP1) 1062 and the second magnetic layer (MMP2) 1064 may be disposed in parallel on the lower part of the flexible printed circuit board layer 1061.

According to an embodiment, the conductive layer 1063 (e.g., conductive plate) may be disposed on the lower part of the first magnetic layer (MMP1) 1062. The conductive layer 1063 (e.g., conductive plate) may be disposed to overlap the first magnetic layer (MMP1) 1062. For example, when the electronic device 1000 is viewed in the vertical direction to the display 610 (e.g., flexible display) in the unfolded state of the electronic device 1000, the first magnetic layer (MMP1) 1062 and the conductive layer 1063 (e.g., conductive plate) may be disposed to substantially overlap each other.

According to an embodiment, when the electronic device 1000 is viewed in the vertical direction to the display 610 (e.g., flexible display) in the unfolded state of the electronic device 1000, the first magnetic layer (MMP1) 1062 and the second magnetic layer (MMP2) 1064 may be disposed not to overlap each other.

According to an embodiment, the conductive layer 1063 (e.g., conductive plate) may be disposed not to overlap the second magnetic layer (MMP2) 1064. For example, the conductive layer 1063 (e.g., conductive plate) may be formed of a conductive metal material (e.g., aluminum, stainless steel, or copper alloy).

For example, the first magnetic layer (MMP1) 1062 and the second magnetic layer (MMP2) 1064 may be formed with substantially the same thickness.

The thickness of the first magnetic layer (MMP1) 1062 and the second magnetic layer (MMP2) 1064 is not limited thereto, and the first magnetic layer (MMP1) 1062 and the second magnetic layer (MMP2) 1064 may be formed with different thicknesses. In this case, the first magnetic layer (MMP1) 1062 may be formed with a first thickness, and the second magnetic layer (MMP2) 1064 may be formed with a second thickness that is thinner than the first thickness.

According to an embodiment, the flexible printed circuit board layer 1061 may be formed as one board without being separated.

According to an embodiment, the flexible printed circuit board layer 1061 may include a first flexible printed circuit board portion 10611 and a second flexible printed circuit board portion 10612 spaced apart from each other along the folding axis F. For example, although the first flexible printed circuit board portion 10611 and the second flexible printed circuit board portion 10612 are separated from each other, in the unfolded state of the electronic device 1000, the first flexible printed circuit board portion 10611 and the second flexible printed circuit board portion 10612 may be disposed to contact each other without a gap between them.

According to an embodiment, the first magnetic layer (MMP1) 1062 may include the first magnetic layer portion 10621 and the second magnetic layer portion 10622 spaced apart from each other along the folding axis F. For example, the first magnetic layer portion 10621 and the second magnetic layer portion 10622 may be disposed spaced apart from each other at the first interval w1 (e.g., gap distance). For example, the first interval w1 between the first magnetic layer portion 10621 and the second magnetic layer portion 10622 may be 8 mm to 30 mm.

For example, the first interval w1 between the first magnetic layer portion 10621 and the second magnetic layer portion 10622 may be substantially equal to the second interval w2 between the first conductive layer portion 10631 and the second conductive layer portion 10632. For example, the first interval w1 between the first magnetic layer portion 10621 and the second magnetic layer portion 8622 may be smaller than the second interval w2 between the first conductive layer portion 10631 and the second conductive layer portion 10632. The first interval w1 between the first magnetic layer portion 10621 and the second magnetic layer portion 10622 is not limited thereto, and may be larger than the second interval w2 between the first conductive layer portion 10631 and the second conductive layer portion 10632.

According to an embodiment, in the parallel direction to the first magnetic layer (MMP1) 1062, the second magnetic layer (MMP2) 1064 may be disposed between the first magnetic layer portion 10621 and the second magnetic layer portion 10622 of the first magnetic layer (MMP1) 1062.

According to an embodiment, in order to improve the bending feature of the electronic device 1000, a part of the conductive layer 1063 (e.g., conductive plate) may be removed. For example, a part of the first conductive layer portion 10631 of the conductive layer 1063 (e.g., conductive plate) may be removed, and a part of the second conductive layer portion 10632 may be removed, so that the first conductive layer portion 10631 and the second conductive layer portion 10632 may be spaced apart from each other at the second interval w2. For example, the second interval w2 between the first conductive layer portion 10631 and the second conductive layer portion 10632 may be 10 mm to 30 mm. For example, a part of the conductive layer 1063 (e.g., conductive plate) corresponding to the bending area 670 may be removed.

For example, the second interval w2 between the first conductive layer portion 10631 and the second conductive layer portion 10632 may be substantially equal to the first interval w1 between the first magnetic layer portion 10621 and the second magnetic layer portion 10622. For example, the second interval w2 between the first conductive layer portion 10631 and the second conductive layer portion 10632 may be larger than the first interval w1 between the first magnetic layer portion 10621 and the second magnetic layer portion 10622. The second interval w2 between the first conductive layer portion 10631 and the second conductive layer portion 10632 is not limited thereto, and may be smaller than the first interval w1 between the first magnetic layer portion 10621 and the second magnetic layer portion 10622.

According to an embodiment, the second magnetic layer (MMP2) 1064 may be formed to have a substantially equal width to the first interval w1. For example, the second magnetic layer (MMP2) 1064 may include a third magnetic layer portion 10641 and a fourth magnetic layer portion 10642 spaced apart from each other along the folding axis F. For example, when the electronic device 1000 is unfolded, the third magnetic layer portion 10641 and the fourth magnetic layer portion 10642 may be disposed to contact each other. For example, when the electronic device 1000 is unfolded, the third magnetic layer portion 10641 and the fourth magnetic layer portion 10642 may be disposed to contact each other without being separated. For example, when the electronic device 1000 is folded, the third magnetic layer portion 10641 and the fourth magnetic layer portion 10642 may be disposed to contact each other without being separated.

For example, the hinge plate 880 may be formed to have a width that is substantially equal to or larger than the first interval w1 so as to substantially hide the first interval w1.

For example, the hinge plate 880 may be formed to have the width that is substantially equal to or larger than the second interval w2 so as to substantially hide the second interval w2.

According to an embodiment, the first magnetic layer (MMP1) 1062 may be formed to have a first performance coefficient. For example, the first magnetic layer (MMP1) 1062 may be formed of a material having a first permeability with a first thickness, and may have the first performance coefficient. For example, the first magnetic layer (MMP1) 1062 may be formed with a thickness of 30 µm to 60 µm. For example, the permeability of the first magnetic layer (MMP1) 1062 may be about 95 u'.

According to an embodiment, the second magnetic layer (MMP2) 1064 may be formed to have a second performance coefficient that is lower than the first performance coefficient. For example, the second magnetic layer (MMP2) 1064 may be formed of a material having a second permeability that is lower than the first permeability with a second thickness that is thinner than the first thickness, and may have the second performance coefficient. For example, the second magnetic layer (MMP2) 1064 may be formed of the material having the second permeability that is lower than the first permeability with the first thickness, and may have the second performance coefficient. For example, the second magnetic layer (MMP2) 1064 may be formed of the material having the first permeability with the second thickness that is thinner than the first thickness, and may have the second performance coefficient.

For example, the second magnetic layer (MMP2) 1064 may be formed with a thickness of 20 µm to 30 µm. For example, the second magnetic layer (MMP2) 1064 may have the permeability that is lower than the permeability (e.g., about 95 u') of the first magnetic layer (MMP1) 1062. For example, the permeability of the second magnetic layer (MMP2) 1064 may be about 60 u'.

During the folding of the electronic device 1000, for smooth folding and unfolding of the display 610 (e.g., flexible display) based on the folding axis F and for support of the display 610 (e.g., flexible display), the flexible plate 620 (e.g., lattice plate) may include a lattice portion 622 (e.g., lattice area).

According to an embodiment, the lattice portion 622 (e.g., lattice area) may be disposed on a portion corresponding to the bending area 670. For example, the lattice portion 622 (e.g., lattice area) may be disposed to overlap the bending area 670.

According to an embodiment, at least a part of the second magnetic layer (MMP2) 1064 may be disposed to overlap the lattice portion 622 (e.g., lattice area). For example, the second magnetic layer (MMP2) 1064 may be disposed to overlap the whole lattice portion 622 (e.g., lattice area).

According to an embodiment, the first magnetic layer 1062 and the lattice portion 622 (e.g., lattice area) may be disposed not to overlap each other.

The digitizer 1060 of the disclosure can be applied to not only the foldable electronic device but also the slidable electronic device or the rollable electronic device. In the disclosure, although a foldable electronic device in which in-folding is possible has been described as an example, the electronic device 1000 according to the disclosure is not limited to the foldable electronic device in which the in-folding is possible. For example, the electronic device 1000 according to the disclosure may include a foldable electronic device including an out-foldable display. The electronic device 1000 according to the disclosure may include a multi-foldable electronic device including a display of which multiple times in-out folding is possible. For example, like an expandable electronic device through slide movement between the housings, the electronic device 1000 according to the disclosure may include various electronic devices each including a flexible display of which a partial area (e.g., bending area or folding area) is bendable or rollable.

In the electronic device 1000 according to an embodiment of the disclosure, the second magnetic layer (MMP2) 1064 may be disposed on the portion corresponding to the bending area 670, and thus the deterioration of the electronic pen detection in the bending area 670, due to the removal of the part of the conductive layer 1063 (e.g., conductive plate), can be prevented, reduced, or compensated for in a similar manner set out above for FIGS. 6, 7, 8, and 9.

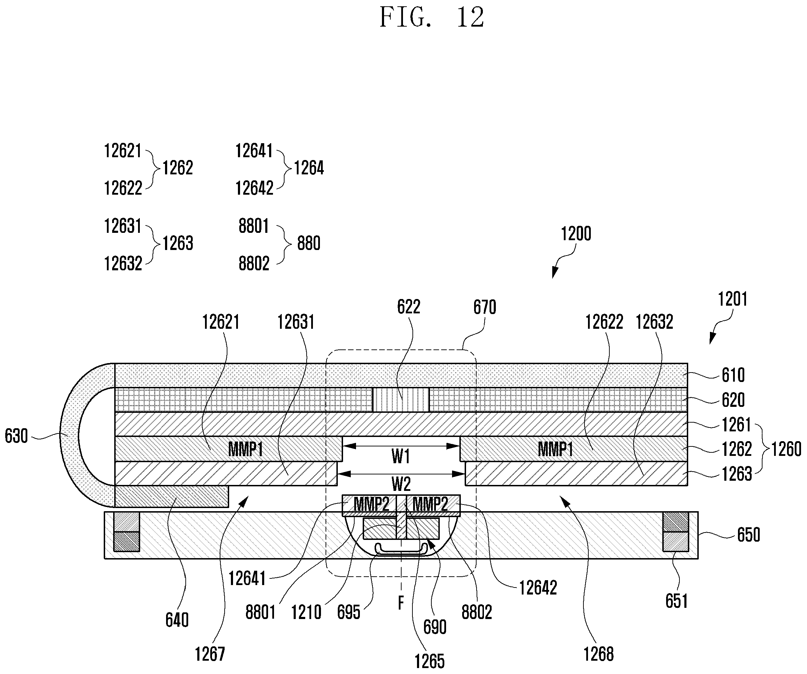

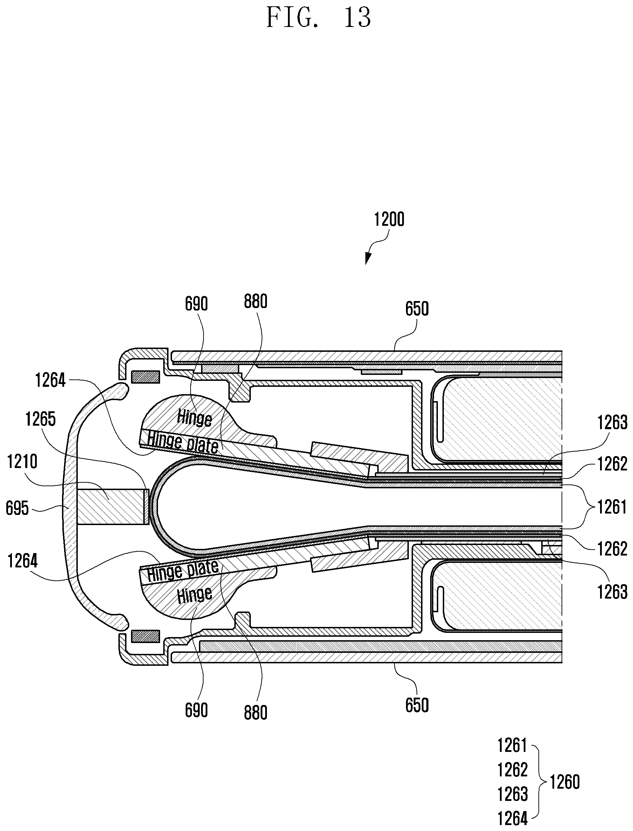

FIG. 12 is a view illustrating an electronic device representing an unfolded state of the electronic device according to an embodiment of the disclosure. FIG. 13 is a view representing a folded state of the electronic device illustrated in FIG. 12.

An electronic device 1200 of FIG. 12 may be similar to the electronic device 800 of FIG. 8 at least partly, and may also include features of other embodiments of the electronic device. In explaining the electronic device 1200 of FIGS. 12 and 13, detailed explanation of the constitution that is substantially the same as (or similar to) the constitution of the electronic device 800 of FIG. 8 or the electronic device 1000 of FIG. 10 may be omitted.

With reference to FIGS. 12 and 13, an electronic device 1200 (e.g., electronic device 101 of FIG. 1, electronic device 200 of FIG. 2A, and electronic device 300 of FIG. 3A) according to an embodiment of the disclosure may include a display module 1201, a bracket 650, a magnetic component 651, a digitizer 1260, a hinge plate 880, a hinge structure 690, and a hinge cover 695. For example, the display module 1201 may include a display 610 (e.g., flexible display) (e.g., first display 230 of FIG. 2A, flexible display 330 of FIG. 3A, or display 410 of FIG. 4), a flexible plate 620 (e.g., display support member, lattice support member, or lattice plate), a flexible printed circuit board (FPCB) 630, and a printed circuit board (PCB) 640.

For example, in case that the hinge structure 690 has magnetism, a shielding member may be further disposed between the hinge structure 690 and the digitizer 1260. In case that the hinge structure 690 has magnetism, the hinge structure 690 may include a stainless steel having magnetism.

For example, the bracket 650 may be adhered (or attached) to at least a part of the display module 1201 through an adhesive member or the like, and may support the display module 1201. The bracket 650 may include a recess that can accommodate at least a part (e.g., printed circuit board 640) of the display module 1201.

For example, the display 610 (e.g., flexible display) may be electrically connected to the printed circuit board (PCB) 640 through the flexible printed circuit board (FPCB) 630.

For example, the digitizer 1260 may be electrically connected to a digitizer driving unit (e.g., digitizer driving unit 470 of FIG. 4) through the flexible printed circuit board.

For example, the printed circuit board (PCB) 640 may include a processor (e.g., processor 120 of FIG. 1), a memory (e.g., memory 130 of FIG. 1), a display driver IC (e.g., display driver IC 430 of FIG. 4), and a digitizer driving unit (e.g., digitizer driving unit 470 of FIG. 4).

According to an embodiment, in case that the electronic device 1200 is folded, the magnetic component 651 may be disposed on both sides of the bracket 650 to fix a folded state. A groove or a hole may be formed on at least a part on both sides of the bracket 650, and the magnetic component 651 may be disposed in the groove or the hole formed on both sides.

According to an embodiment, the hinge plate 880 may include a first hinge plate portion 8801 connected to the first housing portion (e.g., first housing 210 of FIG. 2A or first housing 310 of FIG. 3A), and a second hinge plate portion 8802 connected to the second housing portion (e.g., second housing 220 of FIG. 2A or second housing 320 of FIG. 3A).

According to an embodiment, the hinge structure 690 may include a support member 1210 (e.g., center-bar) disposed between the first hinge plate portion 8801 and the second hinge plate portion 8802 along the folding axis F. For example, the support member 1210 (e.g., center bar) may be disposed between the first hinge plate portion 8801 and the second hinge plate portion 8802.

According to an embodiment, the hinge plate 880, the hinge structure 690, and the support member 1210 (e.g., center-bar) may be disposed to correspond to the bending area 670. The hinge structure 690 and the support member 1210 may be hidden by the hinge cover 695 when viewed from an outside. For example, by the hinge structure 690, the electronic device 1200 may be folded and unfolded in an in-folding method and/or an out-folding method.

According to an embodiment, the hinge cover 695 may be adhered (or attached) to at least a part of the hinge structure 690, and may support the hinge structure 690.

According to an embodiment, the hinge plate 880 may be disposed adjacent to both sides of the bracket 650 or may be connected to both sides of the bracket 650 so as to slide as the electronic device 1200 is folded or unfolded.

According to an embodiment, the hinge structure 690 may be connected to both sides of the bracket 650 through a fixing member (not illustrated), or may be connected to the both sides of the bracket 650 through another rotating member (not illustrated).

For example, in case that the hinge structure 690 has magnetism, a shielding member may be further disposed between the hinge structure 690 and the digitizer 1260.

According to an embodiment, the digitizer 1260 may be disposed on the lower part of the flexible plate 620 (e.g., lattice plate). For example, during the folding of the electronic device 1200, for smooth folding and unfolding of the display 610 (e.g., flexible display) based on the folding axis F and for support of the display 810 (e.g., flexible display), the flexible plate 620 (e.g., lattice plate) may include a lattice portion 622 (e.g., lattice area). For example, the width of the lattice portion 622 may be 8 mm to 12 mm.

For example, for smooth folding and unfolding of the electronic device 1200, at least some constituent elements of the digitizer 1260 may be separated to be spaced apart from each other based on the folding axis F. For example, for the smooth folding and unfolding of the electronic device 1200, the digitizer 1260 may include a first digitizer portion 1267 and a second digitizer portion 1268 which are spaced apart from each other based on the folding axis F.

According to an embodiment, the digitizer 1260 may include a flexible printed circuit board layer 1261 including a coil array, a first magnetic layer (MMP1) 1262, a conductive layer 1263 (e.g., conductive plate), a second magnetic layer (MMP2) 1264, and a third magnetic layer 1265.

According to an embodiment, in contrast to the approach of FIG. 8, the flexible printed circuit board 1261 may be formed as one board without being separated (i.e. a single continuous flexible circuit board) such that the first and second portions of the flexible printed circuit board described with respect to Figure 6 for example form a single continuous flexible circuit board that extends across the hinge.

According to an embodiment, the flexible printed circuit board layer 1261 of the digitizer 1260 may include a coil array. The flexible printed circuit board layer 1261 of the digitizer 1260 may be formed with a thickness of about 50 µm to 300 µm. The conductive layer 1263 (e.g., conductive plate) of the digitizer 1260 may be formed with a thickness of about 5 µm to 200 µm. For example, the conductive layer 1263 (e.g., conductive plate) may be formed of a conductive metal material (e.g., aluminum, stainless steel, or copper alloy).

According to an embodiment, the first magnetic layer 1262, the second magnetic layer 1264, and the third magnetic layer 1265 may be disposed on the lower part of the flexible printed circuit board layer 1261. The conductive layer 1263 (e.g., conductive plate) may be disposed on the lower part of the first magnetic layer 1262. The second magnetic layer 1264 and the third magnetic layer 1265 may be located below (e.g., at the bottom of) the conductive layer 1263.

According to an embodiment, when the electronic device 1200 is viewed in the vertical direction to the display 610 (e.g., flexible display) in the unfolded state of the electronic device 1200, the first magnetic layer (MMP1) 1262 may be disposed between the flexible printed circuit board layer 1261 and the conductive layer 1263 (e.g., conductive plate).

According to an embodiment, when the electronic device 1200 is viewed in the vertical direction to the display 610 (e.g., flexible display) in the unfolded state of the electronic device 1200, the second magnetic layer (MMP2) 1264 may be disposed below (e.g., at the bottom of) the first magnetic layer (MMP1) 1262 and the conductive layer 1263 (e.g., conductive plate).

According to an embodiment, when the electronic device 1200 is viewed in the vertical direction to the display 610 (e.g., flexible display) in the unfolded state of the electronic device 1200, the third magnetic layer 1265 may be disposed below (e.g., at the bottom of) the first magnetic layer (MMP1) 1262 and the conductive layer 1263 (e.g., conductive plate). For example, when the electronic device 1200 is viewed in the vertical direction to the display 610 (e.g., flexible display) in the unfolded state of the electronic device 1200, the third magnetic layer 1265 may be disposed adjacent to the second magnetic layer 1264.

For example, the first magnetic layer (MMP1) 1262 may be disposed on the lower part of the flexible printed circuit board layer 1261. The first magnetic layer (MMP1) 1262 may be disposed to overlap at least a part of the flexible printed circuit board layer 1261.

According to an embodiment, when the electronic device 1200 is viewed in the vertical direction to the display 610 (e.g., flexible display) in the unfolded state of the electronic device 1200, the first magnetic layer (MMP1) 1262 and the second magnetic layer (MMP2) 1264 may be disposed in different locations.

For example, the second magnetic layer (MMP2) 1264 may be disposed between the flexible printed circuit board layer 1261 and the hinge plate 880.

For example, the first magnetic layer (MMP1) 1262 may be disposed to substantially contact the flexible printed circuit board layer 1261 on the lower part of the flexible printed circuit board layer 1261.

For example, the first magnetic layer (MMP1) 1262 may be disposed to substantially contact the conductive layer 1263 (e.g., conductive plate) on the upper part of the conductive layer 1263 (e.g., conductive plate).

For example, the second magnetic layer (MMP2) 1264 may be disposed to be spaced apart from the flexible printed circuit board layer 1261 for a predetermined distance on the lower part of the flexible printed circuit board layer 1261.

For example, the second magnetic layer (MMP2) 1264 may be disposed to be spaced apart from the first magnetic layer (MMP1) 1262 for a predetermined distance on the lower part of the flexible printed circuit board layer 1261. For example, the second magnetic layer (MMP2) 1264 may be disposed to be spaced apart from the conductive layer 1263 (e.g., conductive plate) for a predetermined distance on the lower part of the flexible printed circuit board layer 1261. For example, the third magnetic layer 1265 may be disposed to be spaced apart from the conductive layer 1263 (e.g., conductive plate) on the lower part of the flexible printed circuit board layer 1261.

According to an embodiment, the hinge cover 695 may be adhered (or attached) to at least a part of the hinge structure 690, and may support the hinge structure 690.

According to an embodiment, the hinge structure 690 may include the hinge plate 880. For example, the hinge plate 880 may be disposed adjacent to both sides of the bracket 650 or may be connected to the both sides of the bracket 650 so as to slide as the electronic device 1200 is folded or unfolded.

According to an embodiment, the hinge structure 690 may be connected to both sides of the bracket 650 through a fixing member (not illustrated), or may be connected to the both sides of the bracket 650 through another rotating member (not illustrated).

According to an embodiment, the foldable housing of the electronic device 1200 may include the first housing portion (e.g., first housing 210 of FIG. 2A or first housing 310 of FIG. 3A) connected to the first side of the hinge cover 695 (e.g., hinge housing), and the second housing portion (e.g., second housing 220 of FIG. 2A or second housing 320 of FIG. 3A) connected to the second side of the hinge cover 695 (e.g., hinge housing).

According to an embodiment, the hinge structure 1290 of the electronic device 1200 may be seated on the hinge cover 695 (e.g., hinge housing) at least partly, and may be disposed on the lower part (e.g., bottom) of the digitizer 1260.

For example, the hinge plate 880 may include a first hinge plate portion 8801 connected to the first housing portion (e.g., first housing 210 of FIG. 2A or first housing 310 of FIG. 3A), and a second hinge plate portion 8802 connected to the second housing portion (e.g., second housing 220 of FIG. 2A or second housing 320 of FIG. 3A).

For example, the second magnetic layer (MMP2) 1264 may be disposed to contact the hinge plate 880 on the upper part of the hinge plate 880. For example, the second magnetic layer (MMP2) 1264 may be disposed to overlap the hinge plate 880. For example, the magnetic layer (MMP2) 1264 may be adhered (or attached) to the hinge plate 880 through an adhesive member.

For example, when the electronic device 1200 is viewed in the vertical direction to the display 610 (e.g., flexible display) in the unfolded state of the electronic device 1200, the second magnetic layer (MMP2) 1264 may be disposed below the first magnetic layer (MMP1) 1262.

According to an embodiment, the conductive layer 1263 (e.g., conductive plate) may be disposed on the lower part of the first magnetic layer (MMP1) 1262. The conductive layer 1263 (e.g., conductive plate) may be disposed to overlap the first magnetic layer (MMP1) 1262.

According to an embodiment, when the electronic device 1200 is viewed in the vertical direction to the display 610 (e.g., flexible display) in the unfolded state of the electronic device 1200, the first magnetic layer (MMP1) 1262 and the second magnetic layer (MMP2) 1264 may be disposed not to overlap each other.

According to an embodiment, the conductive layer 1263 (e.g., conductive plate) may be disposed not to overlap the second magnetic layer (MMP2) 1264. For example, when the electronic device 1200 is viewed in the vertical direction to the display 610 (e.g., flexible display) in the unfolded state of the electronic device 1200, the second magnetic layer (MMP2) 1264 and the conductive layer 1263 (e.g., conductive plate) may be disposed not to overlap each other.

According to an embodiment, the first magnetic layer (MMP1) 1262 may include a first magnetic layer portion 12621 and a second magnetic layer portion 12622 spaced apart from each other along the folding axis F.

According to an embodiment, the conductive layer 1263 (e.g., conductive plate) may include a first conductive layer portion 12631 and a second conductive layer portion 12632 spaced apart from each other along the folding axis F.

According to an embodiment, the second magnetic layer 1264 may include a third magnetic layer portion 12641 and a fourth magnetic layer portion 12642 spaced apart from each other along the folding axis F.

According to an embodiment, the third magnetic layer portion 12641 of the second magnetic layer 1264 may be disposed to overlap the upper part of the first hinge plate portion 8801 of the hinge plate 880. The fourth magnetic layer portion 12642 of the second magnetic layer 1264 may be disposed to overlap the upper part of a second hinge plate portion 8802 of the hinge plate 880. For example, the third magnetic layer portion 12641 may be disposed to be adhered to the upper part of the first hinge plate portion 8801. For example, the fourth magnetic layer portion 12642 may be disposed to be adhered to the upper part of the second hinge plate portion 8802.

According to an embodiment, the hinge structure 690 may include a support member 1210 (e.g., center-bar) disposed between the first hinge plate portion 8801 and the second hinge plate portion 8802 along the folding axis F. For example, in the unfolded state of the electronic device 1200, the third magnetic layer 1265 may be disposed between the third magnetic layer portion 12641 and the fourth magnetic layer portion 12642 spaced apart from each other along the folding axis F. For example, in the unfolded state of the electronic device 1200, the second magnetic layer 1264 and the third magnetic layer 1265 may be disposed to be adjacent to each other (e.g., substantially connected form). For example, the third magnetic layer 1265 may be formed of the same material with the same thickness (height) as those of the second magnetic layer 1264. For example, the third magnetic layer 1265 may be disposed to overlap the support member 1210 (e.g., center-bar). For example, the third magnetic layer 1265 may be adhered (or attached) to the support member 1210 (e.g., center-bar) through the adhesive member.

According to an embodiment, when the electronic device 1200 is folded, the second magnetic layer 1264 and the third magnetic layer 1265 may be spaced apart from each other. For example, when the electronic device 1200 is folded (refer to FIG. 9), the hinge plate 880 and the support member 1210 (e.g., center-bar) may be disposed to be spaced apart (e.g., separated) from each other, and thus the second magnetic layer 1264 and the third magnetic layer 1265 may be disposed to be spaced apart (e.g., separated) from each other.

For example, the hinge plate 880 may be formed to have a width that is substantially equal to or larger than the first interval w1 so as to substantially hide the first interval w1. For example, the hinge plate 880 may be formed to have a width that is substantially equal to or larger than the second interval w2 so as to substantially hide the second interval w2. For example, the conductive layer 1263 (e.g., conductive plate) may be formed of a conductive metal material (e.g., aluminum, stainless steel, or copper alloy).

For example, the first magnetic layer (MMP1) 1262 and the second magnetic layer (MMP2) 1264 may be formed with substantially the same thickness.

The thicknesses of the first magnetic layer (MMP1) 1262 and the second magnetic layer (MMP2) 1264 are not limited thereto, and the first magnetic layer (MMP1) 1262 and the second magnetic layer (MMP2) 1264 may be formed with different thicknesses. In this case, the first magnetic layer (MMP1) 1262 may be formed with a first thickness, and the second magnetic layer (MMP2) 1264 may be formed with a second thickness that is thinner than the first thickness.

According to an embodiment, the first magnetic layer portion 12621 and the second magnetic layer portion 12622 of the first magnetic layer (MMP1) 1262 may be disposed spaced apart from each other at the first interval w1. For example, the first interval w1 between the first magnetic layer portion 12621 and the second magnetic layer portion 12622 may be 8 mm to 30 mm. For example, the first interval w1 between the first magnetic layer portion 12621 and the second magnetic layer portion 12622 may be substantially equal to the second interval w2 between the first conductive layer portion 12631 and the second conductive layer portion 12632. For example, the first interval w1 between the first magnetic layer portion 12621 and the second magnetic layer portion 12622 may be smaller than the second interval w2 between the first conductive layer portion 12631 and the second conductive layer portion 12632. The first interval w1 between the first magnetic layer portion 12621 and the second magnetic layer portion 12622 is not limited thereto, and may be larger than the second interval w2 between the first conductive layer portion 12631 and the second conductive layer portion 12632.

According to an embodiment, in order to improve the bending feature of the electronic device 1200, a part of the conductive layer 1263 (e.g., conductive plate) may be removed. For example, a part of the first conductive layer portion 12631 of the conductive layer 1263 (e.g., conductive plate) may be removed, and a part of the second conductive layer portion 12632 may be removed, so that the first conductive layer portion 12631 and the second conductive layer portion 12632 may be spaced apart from each other at the second interval w2. For example, a part of the conductive layer 1263 (e.g., conductive plate) corresponding to the bending area may be removed. For example, the second interval w2 between the first conductive layer portion 12631 and the second conductive layer portion 12632 may be 10 mm to 30 mm.

For example, the second interval w2 between the first conductive layer portion 12631 and the second conductive layer portion 12632 may be substantially equal to the first interval w1 between the first magnetic layer portion 12621 and the second magnetic layer portion 12622. For example, the second interval w2 between the first conductive layer portion 12631 and the second conductive layer portion 12632 may be larger than the first interval w1 between the first magnetic layer portion 12621 and the second magnetic layer portion 12622. The second interval w2 between the first conductive layer portion 12631 and the second conductive layer portion 12632 is not limited thereto, and may be smaller than the first interval w1 between the first magnetic layer portion 12621 and the second magnetic layer portion 12622.

For example, the hinge plate 880 may be formed to have a width that is substantially equal to or larger than the first interval w1 so as to substantially hide the first interval w1.

For example, the hinge plate 880 may be formed to have the width that is substantially equal to or larger than the second interval w2 so as to substantially hide the second interval w2.

According to an embodiment, the first magnetic layer (MMP1) 1262 may be formed to have a first performance coefficient. For example, the first magnetic layer (MMP1) 1262 may be formed of a material having a first permeability with a first thickness, and may have the first performance coefficient. For example, the first magnetic layer (MMP1) 1262 may be formed with a thickness of 30 µm to 60 µm. For example, the permeability of the first magnetic layer (MMP1) 1262 may be about 95 u'.

According to an embodiment, the second magnetic layer (MMP2) 1264 may be formed to have a second performance coefficient that is lower than the first performance coefficient. For example, the second magnetic layer (MMP2) 1264 may be formed of a material having a second permeability that is lower than the first permeability with a second thickness that is thinner than the first thickness, and may have the second performance coefficient.

For example, the second magnetic layer (MMP2) 1264 may be formed with a thickness of 20 µm to 30 µm. For example, the second magnetic layer (MMP2) 1264 may have the permeability that is lower than the permeability (e.g., about 95 u') of the first magnetic layer (MMP1) 1262. For example, the permeability of the second magnetic layer (MMP2) 1264 may be about 60 u'.

For example, the second magnetic layer (MMP2) 1264 may be formed of a material having the second permeability that is lower than the first permeability with a thickness substantially equal to the first thickness, and may have the second performance coefficient. For example, the second magnetic layer (MMP2) 1264 may be formed of a material having the first permeability with a second thickness that is thinner than the first thickness, and may have the second performance coefficient.

For example, the second magnetic layer (MMP2) 1264 may be formed of a material having the second permeability that is lower than the first permeability of the first magnetic layer (MMP1) 1262 with the second thickness that is thinner than the first thickness of the first magnetic layer (MMP1) 1262, and may have the second performance coefficient.

According to an embodiment, the lattice portion 622 (e.g., lattice area) may be disposed on the portion corresponding to the bending area 670. For example, the lattice portion 622 (e.g., lattice area) may be disposed to overlap the bending area 670.

According to an embodiment, at least a part of the second magnetic layer (MMP2) 1264 may be disposed to overlap the lattice portion 622 (e.g., lattice area). For example, the second magnetic layer (MMP2) 1264 may be disposed to overlap the whole lattice portion 622 (e.g., lattice area).

According to an embodiment, the first magnetic layer 1262 and the lattice portion 622 (e.g., lattice area) may be disposed not to overlap each other.

The digitizer 1260 of the disclosure can be applied to not only the foldable electronic device but also the slidable electronic device or the rollable electronic device. In the disclosure, although a foldable electronic device in which in-folding is possible has been described as an example, the electronic device 1200 according to the disclosure is not limited to the foldable electronic device in which the in-folding is possible. For example, the electronic device 1200 according to the disclosure may include the foldable electronic device including an out-foldable display. The electronic device 1200 according to the disclosure may include a multi-foldable electronic device including a display of which multiple times in-out folding is possible. For example, like an expandable electronic device through slide movement between the housings, the electronic device 1200 according to the disclosure may include various electronic devices each including a flexible display of which a partial area (e.g., bending area or folding area) is bendable or rollable.

In the electronic device 1200 according to an embodiment of the disclosure, the second magnetic layer (MMP2) 1264 may be disposed to overlap the hinge plate 880. On the portion corresponding to the bending area, the second magnetic layer (MMP2) 1264 may be disposed, and thus the deterioration in electronic pen detection in the bending area 670, due to the removal of the part of the conductive layer 1263 (e.g., conductive plate), can be prevented, reduced, or compensated for.

With respect to Figures 12 and 13, portions of the magnetic layer around the hinge axis (i.e. within the bending area 670) have been replaced with portions (MMP2 - 12641, 12642) that have a lower magnetic performance (e.g. thinner and/or lower permeability) in order to reduce the adverse effects of the removal of the conductive layer around the hinge axis in terms of electronic pen detection. In addition to this, positioning the MMP2 portions 12641, 12642 away from the display may reduce the likelihood of damage occurring to the display due to the folding and protrusion of the magnetic layer around the hinge axis during folding. These beneficial effects may be achieved via any of the combinations of relative thickness and overlaps of the flexible printed circuit board layer 1261, the conductive layer 1263 and the magnetic layer (1262, 12641, 12642, 1265) described above

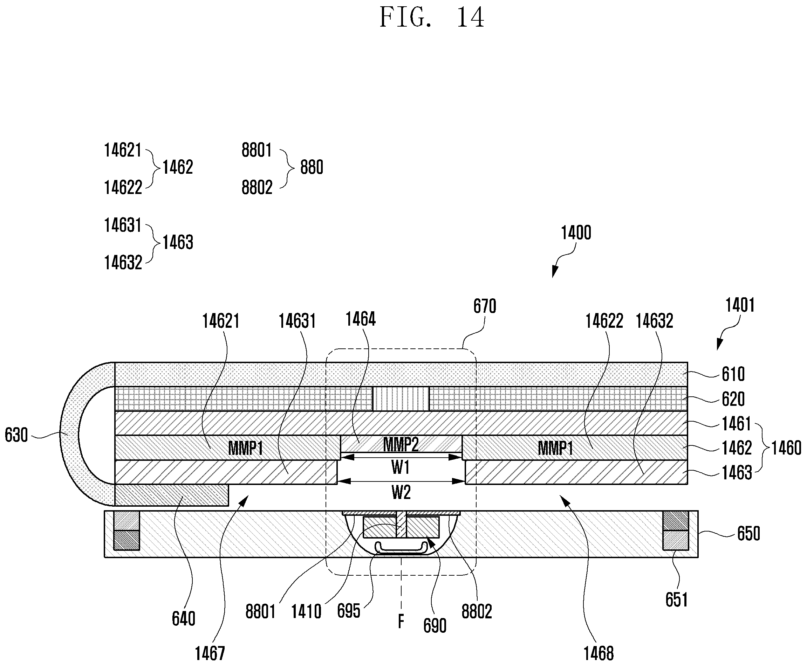

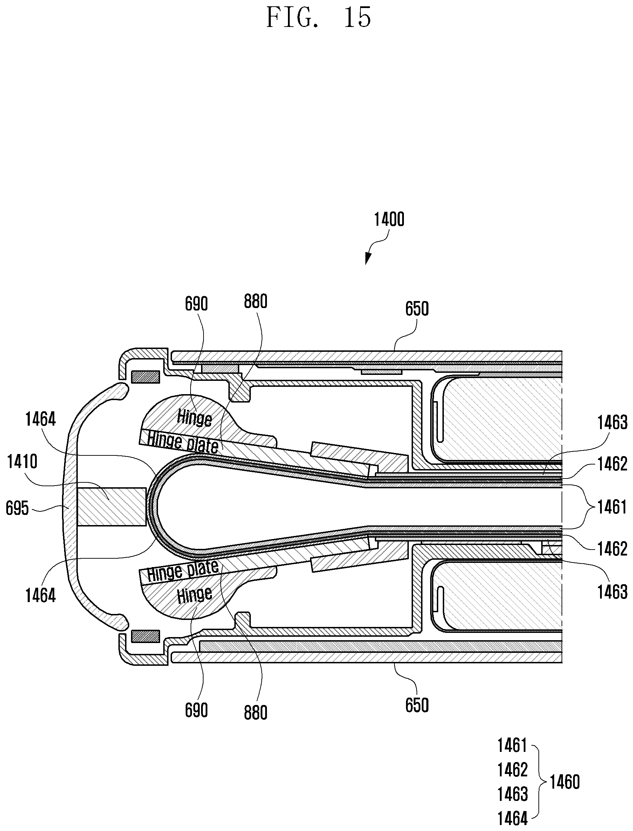

FIG. 14 is a view illustrating an electronic device representing an unfolded state of the electronic device according to an embodiment of the disclosure. FIG. 15 is a view representing a folded state of the electronic device illustrated in FIG. 14.

An electronic device 1400 of FIG. 14 may be similar to the electronic device 1000 of FIG. 10 at least partly, and may also include features of other embodiments of the electronic device. In explaining the electronic device 1400 of FIGS. 14 and 15, detailed explanation of the constitution that is substantially the same as (or similar to) the constitution of the electronic device 1000 of FIG. 10 may be omitted.

With reference to FIGS. 14 and 15, an electronic device 1400 (e.g., electronic device 101 of FIG. 1, electronic device 200 of FIG. 2A, and electronic device 300 of FIG. 3A) according to an embodiment of the disclosure may include a display module 1401, a bracket 650, a magnetic component 651, a digitizer 1460, a hinge plate 880, a hinge structure 690, and a hinge cover 695. For example, the display module 1401 may include a display 610 (e.g., flexible display) (e.g., first display 230 of FIG. 2A, flexible display 330 of FIG. 3A, or display 410 of FIG. 4), a flexible plate 620 (e.g., display support member, lattice support member, or lattice plate), a flexible printed circuit board (FPCB) 630, and a printed circuit board (PCB) 640.

For example, in case that the hinge structure 690 has magnetism, a shielding member may be further disposed between the hinge structure 690 and the digitizer 1460. In case that the hinge structure 690 has magnetism, the hinge structure 690 may include a stainless steel having magnetism.

For example, the bracket 650 may be adhered (or attached) to at least a part of the display module 1401, and may support the display module 1401. The bracket 650 may include a recess that can accommodate at least a part (e.g., printed circuit board 640) of the display module 1401.

For example, the display 610 (e.g., flexible display) may be electrically connected to the printed circuit board (PCB) 640 through the flexible printed circuit board (FPCB) 630.

For example, the digitizer 1460 may be electrically connected to a digitizer driving unit (e.g., digitizer driving unit 470 of FIG. 4) through the flexible printed circuit board.

For example, the printed circuit board (PCB) 640 may include a processor (e.g., processor 120 of FIG. 1), a memory (e.g., memory 130 of FIG. 1), a display driver IC (e.g., display driver IC 430 of FIG. 4), and a digitizer driving unit (e.g., digitizer driving unit 470 of FIG. 4).

According to an embodiment, in case that the electronic device 1400 is folded, the magnetic component 651 may be disposed on both sides of the bracket 650 to fix a folded state. A groove or a hole may be formed on at least a part on both sides of the bracket 650, and the magnetic component 651 may be disposed in the groove or the hole formed on both sides.

According to an embodiment, the hinge plate 880 may include a first hinge plate portion 8801 connected to the first housing portion (e.g., first housing 210 of FIG. 2A or first housing 310 of FIG. 3A), and a second hinge plate portion 8802 connected to the second housing portion (e.g., second housing 220 of FIG. 2A or second housing 320 of FIG. 3A).

According to an embodiment, the hinge structure 690 may include a support member 1410 (e.g., center-bar) disposed between the first hinge plate portion 8801 and the second hinge plate portion 8802. For example, the support member 1410 (e.g., center bar) may be disposed between the first hinge plate portion 8801 and the second hinge plate portion 8802.

According to an embodiment, the hinge plate 880, the hinge structure 690, and the support member 1610 (e.g., center-bar) may be disposed to correspond to the bending area 670. The hinge structure 690 and the support member 1610 may be hidden by the hinge cover 695 when viewed from an outside. For example, by the hinge structure 690, the electronic device 1400 may be folded and unfolded in an in-folding method and/or an out-folding method.

According to an embodiment, the hinge cover 695 may be adhered (or attached) to at least a part of the hinge structure 690, and may support the hinge structure 690.

According to an embodiment, the hinge plate 880 may be disposed adjacent to both sides of the bracket 650 or may be connected to both sides of the bracket 650 so as to slide as the electronic device 1400 is folded or unfolded.

According to an embodiment, the hinge structure 690 may be connected to both sides of the bracket 650 through a fixing member (not illustrated), or may be connected to the both sides of the bracket 650 through another rotating member (not illustrated).

For example, in case that the hinge structure 690 has magnetism, a shielding member may be further disposed between the hinge structure 690 and the digitizer 1460.

According to an embodiment, the digitizer 1460 may be disposed on the lower part of the flexible plate 620 (e.g., lattice plate).

For example, for smooth folding and unfolding of the electronic device 1400, at least some constituent elements of the digitizer 1460 may be separated to be spaced apart from each other based on the folding axis F. For example, for the smooth folding and unfolding of the electronic device 1400, the digitizer 1460 may include a first digitizer portion 1467 and a second digitizer portion 1468 which are spaced apart from each other based on the folding axis F.

According to an embodiment, the digitizer 1460 may include a flexible printed circuit board layer 1461 including a coil array, a first magnetic layer (MMP1) 1462, a conductive layer 1463 (e.g., conductive plate), and a second magnetic layer (MMP2) 1464.

According to an embodiment, when the electronic device 1400 is viewed in the vertical direction to the display 610 (e.g., flexible display) in the unfolded state of the electronic device 1400, the first magnetic layer (MMP1) 1462 may be disposed between the flexible printed circuit board layer 1461 and the conductive layer 1463 (e.g., conductive plate).

According to an embodiment, when the electronic device 1400 is viewed in the vertical direction to the display 610 (e.g., flexible display) in the unfolded state of the electronic device 1400, the second magnetic layer (MMP2) 1464 may be disposed between the flexible printed circuit board layer 1461 and the hinge plate 880.

For example, the first magnetic layer (MMP1) 1462 may be disposed on the lower part of the flexible printed circuit board layer 1461. The first magnetic layer (MMP1) 1462 may be disposed to overlap at least a part of the flexible printed circuit board layer 1461.

For example, the second magnetic layer (MMP2) 1464 may be disposed on the lower part of the flexible printed circuit board layer 1461. The second magnetic layer (MMP2) 1464 may be disposed to overlap at least a part of the flexible printed circuit board 1461.

According to an embodiment, the first magnetic layer (MMP1) 1462 and the second magnetic layer (MMP2) 1464 may be disposed in parallel on the lower part of the flexible printed circuit board layer 1461.

According to an embodiment, the conductive layer 1463 (e.g., conductive plate) may be disposed on the lower part of the first magnetic layer (MMP1) 1462. The conductive layer 1463 (e.g., conductive plate) may be disposed to overlap the first magnetic layer (MMP1) 1462. For example, when the electronic device 1400 is viewed in the vertical direction to the display 610 (e.g., flexible display) in the unfolded state of the electronic device 1400, the first magnetic layer (MMP1) 1462 and the conductive layer 1463 (e.g., conductive plate) may be disposed to substantially overlap each other.

According to an embodiment, when the electronic device 1400 is viewed in the vertical direction to the display 610 (e.g., flexible display) in the unfolded state of the electronic device 1400, the first magnetic layer (MMP1) 1462 and the second magnetic layer (MMP2) 1464 may be disposed not to overlap each other.

According to an embodiment, the conductive layer 1463 (e.g., conductive plate) may be disposed not to overlap the second magnetic layer (MMP2) 1464. For example, the conductive layer 1463 (e.g., conductive plate) may be formed of a conductive metal material (e.g., aluminum, stainless steel, or copper alloy).

For example, the first magnetic layer (MMP1) 1462 and the second magnetic layer (MMP2) 1464 may be formed with substantially the same thickness.

The thickness of the first magnetic layer (MMP1) 1462 and the second magnetic layer (MMP2) 1464 is not limited thereto, and the first magnetic layer (MMP1) 1462 and the second magnetic layer (MMP2) 1464 may be formed with different thicknesses. In this case, the first magnetic layer (MMP1) 1462 may be formed with the first thickness, and the second magnetic layer (MMP2) 1464 may be formed with the second thickness that is thinner than the first thickness.

According to an embodiment, the flexible printed circuit board layer 1461 may be formed as one board without being separated.

According to an embodiment, the first magnetic layer (MMP1) 1462 may be separated.

According to an embodiment, the conductive layer 1463 (e.g., conductive plate) may be separated.

According to an embodiment, the second magnetic layer (MMP2) 1464 may be formed as one layer without being separated. (i.e. as a single continuous layer).

According to an embodiment, the flexible printed circuit board layer 1461 may be separated in the bending area 670 and the second magnetic layer (MMP2) 1464 may be formed as one layer without being separated.

According to an embodiment, the first magnetic layer (MMP1) 1462 may include a first magnetic layer portion 14621 and a second magnetic layer portion 14622 spaced apart from each other along the folding axis F. For example, the first magnetic layer portion 14621 and the second magnetic layer portion 14622 may be disposed to be spaced apart from each other in the first interval w1 (e.g., gap distance). For example, the first interval w1 between the first magnetic layer portion 14621 and the second magnetic layer portion 14622 may be 8 mm to 30 mm.

For example, the first interval w1 between the first magnetic layer portion 14621 and the second magnetic layer portion 14622 may be substantially equal to the second interval w2 between the first conductive layer portion 14631 and the second conductive layer portion 14632. For example, the first interval w1 between the first magnetic layer portion 14621 and the second magnetic layer portion 14622 may be smaller than the second interval w2 between the first conductive layer portion 14631 and the second conductive layer portion 14632. The first interval w1 between the first magnetic layer portion 14621 and the second magnetic layer portion 14622 is not limited thereto, and may be larger than the second interval w2 between the first conductive layer portion 14631 and the second conductive layer portion 14632.

According to an embodiment, in a direction parallel to the first magnetic layer (MMP1) 1462, the second magnetic layer (MMP2) 1464 may be disposed between the first magnetic layer portion 14621 and the second magnetic layer portion 14622.

According to an embodiment, in order to improve the bending feature of the electronic device 1400, a part of the conductive layer 1463 (e.g., conductive plate) may be removed. For example, a part of the first conductive layer portion 14631 of the conductive layer 1463 (e.g., conductive plate) may be removed, and a part of the second conductive layer portion 14632 may be removed, so that the first conductive layer portion 14631 and the second conductive layer portion 14632 may be spaced apart from each other at the second interval w2. For example, the second interval w2 between the first conductive layer portion 14631 and the second conductive layer portion 14632 may be 10 mm to 30 mm. For example, a part of the conductive layer 1463 (e.g., conductive plate) corresponding to the bending area 670 may be removed.

For example, the second interval w2 between the first conductive layer portion 14631 and the second conductive layer portion 14632 may be substantially equal to the first interval w1 between the first magnetic layer portion 14621 and the second magnetic layer portion 14622. For example, the second interval w2 between the first conductive layer portion 14631 and the second conductive layer portion 14632 may be larger than the first interval w1 between the first magnetic layer portion 14621 and the second magnetic layer portion 14622. The second interval w2 between the first conductive layer portion 14631 and the second conductive layer portion 14632 is not limited thereto, and may be smaller than the first interval w1 between the first magnetic layer portion 14621 and the second magnetic layer portion 14622.

According to an embodiment, the second magnetic layer (MMP2) 1464 may be formed to have a width that is substantially equal to the first interval w1. For example, when the electronic device 1400 is unfolded, the first magnetic layer (MMP1) 1462 and the second magnetic layer (MMP2) 1464 may be disposed to contact each other.

For example, when the electronic device 1400 is folded, the first magnetic layer (MMP1) 1462 and the second magnetic layer (MMP2) 1464 may be disposed to be spaced apart from each other.

According to an embodiment, the second magnetic layer (MMP2) 1464 that is formed as one layer may be disposed to overlap the portion from which a part of the conductive layer 1463 (e.g., conductive plate) is removed.

For example, the second magnetic layer (MMP2) 1464 may be formed as one layer, or may be formed to be separated.

For example, the hinge plate 880 may be formed to have a width that is substantially equal to or larger than the first interval w1 so as to substantially hide the first interval w1.

For example, the hinge plate 880 may be formed to have a width that is substantially equal to or larger than the second interval w2 so as to substantially hide the second interval w2.

According to an embodiment, the first magnetic layer (MMP1) 1462 may be formed to have a first performance coefficient. For example, the first magnetic layer (MMP1) 1462 may be formed of a material having a first permeability with a first thickness, and may have the first performance coefficient. For example, the first magnetic layer (MMP1) 1462 may be formed with a thickness of 30 µm to 60 µm. For example, the permeability of the first magnetic layer (MMP1) 1462 may be about 95 u'.

According to an embodiment, the second magnetic layer (MMP2) 1464 may be formed to have a second performance coefficient that is lower than the first performance coefficient. For example, the second magnetic layer (MMP2) 1464 may be formed of a material having a second permeability that is lower than the first permeability with a second thickness that is thinner than the first thickness, and may have the second performance coefficient. For example, the second magnetic layer (MMP2) 1464 may be formed of a material having the first permeability with the second thickness that is thinner than the first thickness, and may have the second performance coefficient.

For example, the second magnetic layer (MMP2) 1464 may be formed with a thickness of 20 µm to 30 µm. For example, the second magnetic layer (MMP2) 1464 may have the permeability that is lower than the permeability (e.g., about 95 u') of the first magnetic layer (MMP1) 1462. For example, the permeability of the second magnetic layer (MMP2) 1464 may be about 60 u'.

During the folding of the electronic device 1400, for smooth folding and unfolding of the display 610 (e.g., flexible display) based on the folding axis F and for support of the display 610 (e.g., flexible display), the flexible plate 620 (e.g., lattice plate) may include a lattice portion 622 (e.g., lattice area).

According to an embodiment, the lattice portion 622 (e.g., lattice area) may be disposed on the portion corresponding to the bending area 670. For example, the lattice portion 622 (e.g., lattice area) may be disposed to overlap the bending area 670.

According to an embodiment, at least a part of the second magnetic layer (MMP2) 1464 may be disposed to overlap the lattice portion 622 (e.g., lattice area). For example, the second magnetic layer (MMP2) 1464 may be disposed to overlap the whole lattice portion 622 (e.g., lattice area).

According to an embodiment, the first magnetic layer 1462 and the lattice portion 622 (e.g., lattice area) may be disposed not to overlap each other.

The digitizer 1460 of the disclosure can be applied to not only the foldable electronic device but also the slidable electronic device or the rollable electronic device. In the disclosure, although a foldable electronic device in which in-folding is possible has been described as an example, the electronic device 1400 according to the disclosure is not limited to the foldable electronic device in which the in-folding is possible. For example, the electronic device 1400 according to the disclosure may include the foldable electronic device including an out-foldable display. The electronic device 1400 according to the disclosure may include a multi-foldable electronic device including a display of which multiple times in-out folding is possible. For example, like an expandable electronic device through slide movement between the housings, the electronic device 1400 according to the disclosure may include various electronic devices each including a flexible display of which a partial area (e.g., bending area or folding area) is bendable or rollable.

In the electronic device 1400 according to an embodiment of the disclosure, the second magnetic layer (MMP2) 1464 may be disposed on the portion corresponding to the bending area 670, and thus the deterioration in detection of the electronic pen in the bending area 670, due to the removal of the part of the conductive layer 1463 (e.g., conductive plate), can be prevented, reduced, or compensated for in a similar manner to that set out with respect to FIG. 10.

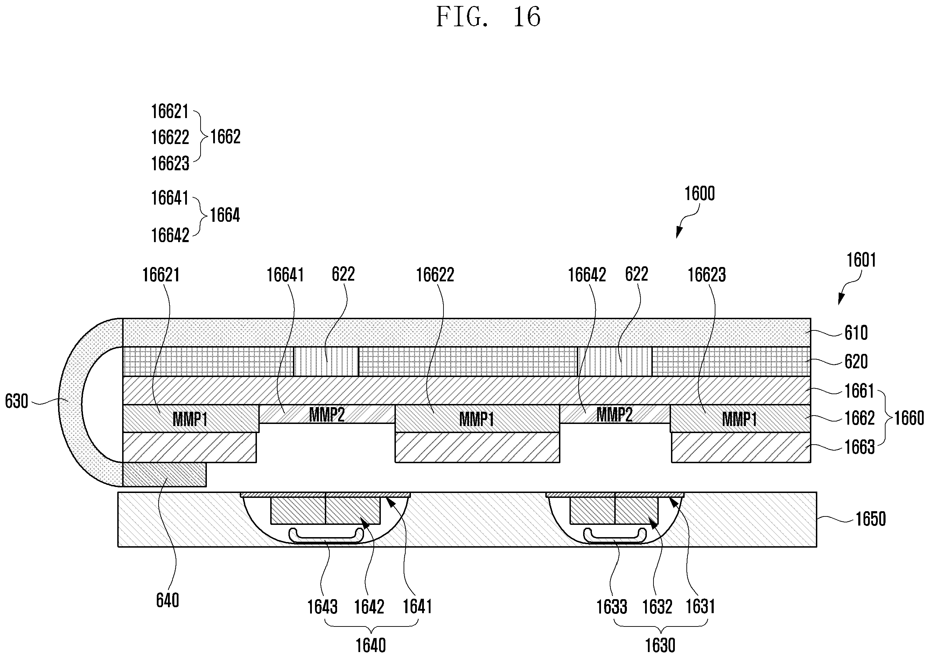

FIG. 16 is a view illustrating a multi-foldable electronic device representing an unfolded state of the multi-foldable electronic device according to an embodiment of the disclosure.

A multi-foldable electronic device 1600 of FIG. 16 may be similar to the electronic device 1000 of FIG. 10 at least partly, and may also include features of other embodiments of the electronic device. In explaining the electronic device 1600 of FIG. 16, detailed explanation of the constitution that is substantially the same as (or similar to) the constitution of the electronic device 1000 of FIG. 10 may be omitted.

With reference to FIG. 16, a multi-foldable electronic device 1600 (e.g., electronic device 101 of FIG. 1, electronic device 200 of FIG. 2A, and electronic device 300 of FIG. 3A) according to an embodiment of the disclosure may include a display module 1601, a bracket 1650, a digitizer 1660, a first hinge part 1630, and a second hinge part 1640.

For example, the display module 1601 may include a display 610 (e.g., flexible display) (e.g., first display 230 of FIG. 2A, flexible display 330 of FIG. 3A, or display 410 of FIG. 4), a flexible plate 620 (e.g., display support member, lattice support member, or lattice plate), a flexible printed circuit board (FPCB) 630, and a printed circuit board (PCB) 640.

According to an embodiment, the multi-foldable electronic device 1600 may be folded in a multi-foldable form through the first hinge part 1630 and the second hinge part 1640. For example, the first hinge part 1630 may include a first hinge plate 1631, a first hinge structure 1632, and a first hinge cover 1633. For example, the second hinge part 1640 may include a second hinge plate 1641, a second hinge structure 1642, and a second hinge cover 1643.

For example, in case that the first hinge structure 1632 and the second hinge structure 1642 have magnetism, a shielding member may be further disposed between the first hinge structure 1632 and the second hinge structure 1642 and the digitizer 1660. In case that the first hinge structure 1632 and the second hinge structure 1642 have magnetism, the first hinge structure 1632 and the second hinge structure 1642 may include a stainless steel having magnetism.

For example, the bracket 1650 may be adhered (or attached) to at least a part of the display module 1601, and may support the display module 1601. The bracket 1650 may include a recess that can accommodate at least a part (e.g., printed circuit board 640) of the display module 1601.

For example, the display 610 (e.g., flexible display) may be electrically connected to the printed circuit board (PCB) 640 through the flexible printed circuit board (FPCB) 630.

For example, the digitizer 1660 may be electrically connected to a digitizer driving unit (e.g., digitizer driving unit 470 of FIG. 4) through the flexible printed circuit board.

For example, the printed circuit board (PCB) 640 may include a processor (e.g., processor 120 of FIG. 1), a memory (e.g., memory 130 of FIG. 1), a display driver IC (e.g., display driver IC 430 of FIG. 4), and a digitizer driving unit (e.g., digitizer driving unit 470 of FIG. 4).

According to an embodiment, the digitizer 1660 may be disposed on the lower part of the flexible plate 620 (e.g., lattice plate).

For example, for smooth folding and unfolding of the multi-foldable electronic device 1600, at least some constitutions of the digitizer 1660 may be separated to be spaced apart from each other based on the folding axis F.

According to an embodiment, the digitizer 1660 may include a flexible printed circuit board layer 1661 including a coil array, a first magnetic layer (MMP1) 1662, a conductive layer 1663 (e.g., conductive plate), and a second magnetic layer (MMP2) 1664.

According to an embodiment, when the multi-foldable electronic device 1600 is viewed in the vertical direction to the display 610 (e.g., flexible display) in the unfolded state of the multi-foldable electronic device 1600, the first magnetic layer (MMP1) 1662 and the second magnetic layer (MMP2) 1664 may be disposed between the flexible printed circuit board layer 1661 and the conductive layer 1663 (e.g., conductive plate).

For example, the first magnetic layer (MMP1) 1662 may be disposed on the lower part of the flexible printed circuit board layer 1661. The first magnetic layer (MMP1) 1662 may be disposed to overlap at least a part of the flexible printed circuit board layer 1661.

For example, the second magnetic layer (MMP2) 1664 may be disposed on the lower part of the flexible printed circuit board layer 1661. The second magnetic layer (MMP2) 1664 may be disposed to overlap at least a part of the flexible printed circuit board 1661.

According to an embodiment, the first magnetic layer (MMP1) 1662 and the second magnetic layer (MMP2) 1664 may be disposed in parallel on the lower part of the flexible printed circuit board layer 1661.

According to an embodiment, the conductive layer 1663 (e.g., conductive plate) may be disposed on the lower part of the first magnetic layer (MMP1) 1662. The conductive layer 1663 (e.g., conductive plate) may be disposed to overlap the first magnetic layer (MMP1) 1662. For example, when the multi-foldable electronic device 1600 is viewed in the vertical direction to the display 610 (e.g., flexible display) in the unfolded state of the electronic device 1600, the first magnetic layer (MMP1) 1662 and the conductive layer 1663 (e.g., conductive plate) may be disposed to substantially overlap each other.

According to an embodiment, when the multi-foldable electronic device 1600 is viewed in the vertical direction to the display 610 (e.g., flexible display) in the unfolded state of the multi-foldable electronic device 1600, the first magnetic layer (MMP1) 1662 and the second magnetic layer (MMP2) 1664 may be disposed not to overlap each other.

According to an embodiment, the first magnetic layer (MMP1) 1662 may include a first magnetic layer portion 16621, a second magnetic layer portion 16622, and a third magnetic layer portion 16623.

According to an embodiment, the second magnetic layer (MMP2) 1664 may include a fourth magnetic layer portion 16641 and a fifth magnetic layer portion 16642.

For example, the fourth magnetic layer portion 16641 of the second magnetic layer (MMP2) 1664 may be disposed between the first magnetic layer portion 16621 and the second magnetic layer portion 16622 of the first magnetic layer (MMP1) 1662.

For example, the fifth magnetic layer portion 16642 of the second magnetic layer (MMP2) 1664 may be disposed between the second magnetic layer portion 16622 and the third magnetic layer portion 16623.

According to an embodiment, the first magnetic layer portion 16621, the second magnetic layer portion 16622, and the third magnetic layer portion 16623 of the first magnetic layer (MMP1) 1662 and the conductive layer 1663 (e.g., conductive plate) may be disposed to overlap each other.

According to an embodiment, the conductive layer 1663 (e.g., conductive plate) may be disposed not to overlap the second magnetic layer (MMP2) 1664.

For example, the first magnetic layer (MMP1) 1662 and the second magnetic layer (MMP2) 1664 may be formed with substantially the same thickness.

The thickness of the first magnetic layer (MMP1) 1662 and the second magnetic layer (MMP2) 1664 is not limited thereto, and the first magnetic layer (MMP1) 1662 and the second magnetic layer (MMP2) 1664 may be formed with different thicknesses. In this case, the first magnetic layer (MMP1) 1662 may be formed with the first thickness, and the second magnetic layer (MMP2) 1664 may be formed with the second thickness that is thinner than the first thickness.

According to an embodiment, the flexible printed circuit board layer 1661 may be formed as one board without being separated.

According to an embodiment, the first magnetic layer (MMP1) 1662 may be formed to have a first performance coefficient. For example, the first magnetic layer (MMP1) 1662 may be formed of a material having a first permeability with a first thickness, and may have the first performance coefficient.

According to an embodiment, the second magnetic layer (MMP2) 1664 may be formed to have a second performance coefficient that is lower than the first performance coefficient. For example, the second magnetic layer (MMP2) 1664 may be formed of a material having a second permeability that is lower than the first permeability with a second thickness that is thinner than the first thickness, and may have the second performance coefficient. For example, the second magnetic layer (MMP2) 1664 may be formed of a material having the second permeability that is lower than the first permeability with the first thickness, and may have the second performance coefficient. For example, the second magnetic layer (MMP2) 1664 may be formed of a material having the first permeability with the second thickness that is thinner than the first thickness, and may have the second performance coefficient.

For example, the first magnetic layer (MMP1) 1662 may be formed with a thickness of 30 µm to 60 µm. For example, the permeability of the first magnetic layer (MMP1) 1662 may be about 95 u'.

For example, the second magnetic layer (MMP2) 1664 may be formed with a thickness of 20 µm to 30 µm. For example, the second magnetic layer (MMP2) 1664 may have the permeability that is lower than the permeability (e.g., about 95 u') of the first magnetic layer (MMP1) 1662. For example, the permeability of the second magnetic layer (MMP2) 1664 may be about 60 u'.

During the folding of the multi-foldable electronic device 1600, for smooth folding and unfolding of the display 610 (e.g., flexible display) and for support of the display 610 (e.g., flexible display), the flexible plate 620 (e.g., lattice plate) may include a plurality of lattice portions 622 (e.g., lattice areas).

According to an embodiment, the lattice portion 622 (e.g., lattice area) may be disposed on the portion corresponding to the bending area. For example, the lattice portion 622 (e.g., lattice area) may be disposed to overlap the bending area.

According to an embodiment, at least a part of the second magnetic layer (MMP2) 1664 may be disposed to overlap the lattice portion 622 (e.g., lattice area). For example, the second magnetic layer (MMP2) 1664 may be disposed to overlap the whole lattice portion 622 (e.g., lattice area).

According to an embodiment, the first magnetic layer 1662 and the lattice portion 622 (e.g., lattice area) may be disposed not to overlap each other.

The digitizer 1660 of the disclosure can be applied to not only the foldable electronic device but also the slidable electronic device or the rollable electronic device. The electronic device 1600 according to the disclosure may include a multi-foldable electronic device including a display of which multiple times in-out folding is possible. For example, like an expandable electronic device through slide movement between the housings, the electronic device 1600 according to the disclosure may include various electronic devices each including a flexible display of which a partial area (e.g., bending area or folding area) is bendable or rollable.

In the electronic device 1600 according to an embodiment of the disclosure, the second magnetic layer (MMP2) 1664 may be disposed on the portion corresponding to the bending area, and thus the deterioration in electronic pen detection in the bending area, due to the removal of the part of the conductive layer 1663 (e.g., conductive plate), can be prevented, reduced, or compensated for.

Although each of the hinge portions 1630 and 1640 have been described separately, they may each be formed in accordance with the hinges of any of FIGS. 6 to 15, with the advantages of each approach be equally applicable.

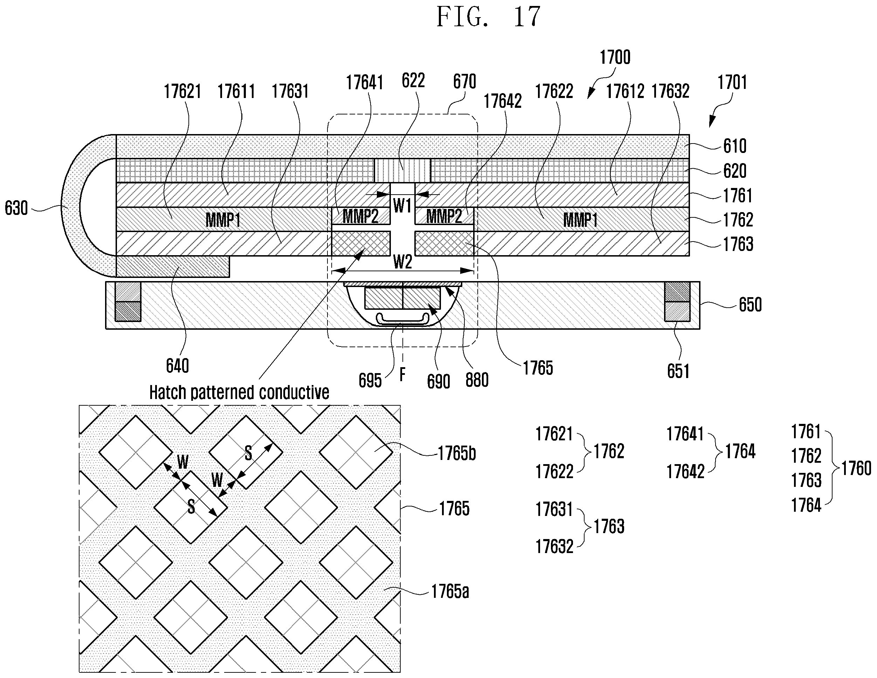

FIG. 17 is a view illustrating an electronic device representing an unfolded state of the electronic device according to an embodiment of the disclosure.

An electronic device 1700 of FIG. 17 may be similar to the electronic device 1000 of FIG. 10 at least partly, and may also include features of other embodiments of the electronic device. In explaining the electronic device 1700 of FIG. 17, detailed explanation of the constitution that is substantially the same as (or similar to) the constitution of the electronic device 1000 of FIG. 10 may be omitted.

With reference to FIG. 17, an electronic device 1700 (e.g., electronic device 101 of FIG. 1, electronic device 200 of FIG. 2A, or electronic device 300 of FIG. 3A) according to an embodiment of the disclosure may include a display module 1701, a bracket 650, a magnetic component 651, a digitizer 1760, a second conductive layer 1765, a hinge plate 880, a hinge structure 690, and a hinge cover 695. For example, the display module 1701 may include a display 610 (e.g., flexible display) (e.g., first display 230 of FIG. 2A, flexible display 330 of FIG. 3A, or display 410 of FIG. 4), a flexible plate 620 (e.g., display support member, lattice support member, or lattice plate), a flexible printed circuit board (FPCB) 630, and a printed circuit board (PCB) 640.

For example, the digitizer 1760 and the second conductive layer 1765 may be integrally disposed.

For example, the digitizer 1760 and the second conductive layer 1765 may be separately formed and disposed.

For example, in case that the hinge structure 690 has magnetism, a shielding member may be further disposed between the hinge structure 690 and the digitizer 1760. In case that the hinge structure 690 has magnetism, the hinge structure 690 may include a stainless steel having magnetism.

For example, the bracket 650 may be adhered (or attached) to at least a part of the display module 1701, and may support the display module 1701. The bracket 650 may include a recess that can accommodate at least a part (e.g., printed circuit board 640) of the display module 1701.

For example, the display 610 (e.g., flexible display) may be electrically connected to the printed circuit board (PCB) 640 through the flexible printed circuit board (FPCB) 630.

For example, the digitizer 1760 may be electrically connected to a digitizer driving unit (e.g., digitizer driving unit 470 of FIG. 4) through the flexible printed circuit board.

For example, the printed circuit board (PCB) 640 may include a processor (e.g., processor 120 of FIG. 1), a memory (e.g., memory 130 of FIG. 1), a display driver IC (e.g., display driver IC 430 of FIG. 4), and a digitizer driving unit (e.g., digitizer driving unit 470 of FIG. 4).

According to an embodiment, in case that the electronic device 1700 is folded, the magnetic component 651 may be disposed on both sides of the bracket 650 to fix a folded state. A groove or a hole may be formed on at least a part on both sides of the bracket 650, and the magnetic component 651 may be disposed in the groove or the hole formed on the both sides.

According to an embodiment, when the electronic device 1700 is folded, the hinge plate 880 may include a first hinge plate portion (e.g., first hinge plate portion 8801 of FIG. 10) being separated based on the folding axis F, and a second hinge plate portion (e.g., second hinge plate portion 8802 of FIG. 10).

According to an embodiment, the hinge plate 880 and the hinge structure 690 may be disposed to correspond to the bending area 670. The hinge structure 690 may be hidden by the hinge cover 695 when viewed from an outside. For example, by the hinge structure 690, the electronic device 1700 may be folded and unfolded in an in-folding method and/or an out-folding method.

According to an embodiment, the digitizer 1760 and the second conductive layer 1765 may be disposed on the lower part of the flexible plate 620 (e.g., lattice plate).

For example, for smooth folding and unfolding of the electronic device 1700, at least some constitutions of the digitizer 1760 may be separated to be spaced apart from each other based on the folding axis F.

For example, for the smooth folding and unfolding of the electronic device 1700, the second conductive layer 1765 may be separated and disposed.

According to an embodiment, the digitizer 1760 may include a flexible printed circuit board layer 1761 including a coil array, a first magnetic layer (MMP1) 1762, a first conductive layer 1763 (e.g., conductive plate), and a second magnetic layer (MMP2) 1764.

According to an embodiment, when the electronic device 1700 is viewed in the vertical direction to the display 610 (e.g., flexible display) in the unfolded state of the electronic device 1700, the first magnetic layer (MMP1) 1762 may be disposed between the flexible printed circuit board layer 1761 and the conductive layer 1763 (e.g., conductive plate).

According to an embodiment, when the electronic device 1700 is viewed in the vertical direction to the display 610 (e.g., flexible display) in the unfolded state of the electronic device 1700, the second conductive layer 1765 may be disposed between the second magnetic layer (MMP2) 1764 and the hinge plate 880.

For example, the first magnetic layer (MMP1) 1762 may be disposed on the lower part of the flexible printed circuit board layer 1761. The first magnetic layer (MMP1) 1762 may be disposed to overlap at least a part of the flexible printed circuit board layer 1761 (e.g., coil array layer).

For example, the second magnetic layer (MMP2) 1764 may be disposed on the lower part of the flexible printed circuit board layer 1761. The second magnetic layer (MMP2) 1764 may be disposed to overlap at least a part of the flexible printed circuit board 1761.

According to an embodiment, the first magnetic layer (MMP1) 1762 and the second magnetic layer (MMP2) 1764 may be disposed in parallel on the lower part of the flexible printed circuit board layer 1761.

According to an embodiment, the first conductive layer 1763 (e.g., conductive plate) may be disposed on the lower part of the first magnetic layer (MMP1) 1762. The first conductive layer 1763 (e.g., conductive plate) may be disposed to overlap the first magnetic layer (MMP1) 1762. For example, when the electronic device 1700 is viewed in the vertical direction to the display 610 (e.g., flexible display) in the unfolded state of the electronic device 1700, the first magnetic layer (MMP1) 1762 and the first conductive layer 1763 (e.g., conductive plate) may be disposed to substantially overlap each other.

According to an embodiment, when the electronic device 1700 is viewed in the vertical direction to the display 610 (e.g., flexible display) in the unfolded state of the electronic device 1700, the first magnetic layer (MMP1) 1762 and the second magnetic layer (MMP2) 1764 may be disposed not to overlap each other.

According to an embodiment, the first conductive layer 1763 (e.g., conductive plate) may be disposed not to overlap the second magnetic layer (MMP2) 1764.

For example, the second conductive layer 1765 and the second magnetic lay (MMP2) 1764 may be formed with substantially the same width. The width of the second conductive layer 1765 and the second magnetic lay (MMP2) 1764 is not limited thereto, and the second conductive layer 1765 may be formed to have the width that is wider than the width of the second magnetic layer (MMP2) 1764.

According to an embodiment, the first magnetic layer (MMP1) 1762 may include a first magnetic layer portion and a second magnetic layer portion spaced apart from each other along the folding axis F. In the direction parallel to the first magnetic layer (MMP1) 1762, the second magnetic layer (MMP2) 1764 may be disposed between the first magnetic layer portion and the second magnetic layer portion of the first magnetic layer (MMP1) 1762.

For example, the first magnetic layer (MMP1) 1762 and the second magnetic layer (MMP2) 1764 may be formed with substantially the same thickness.

The thickness of the first magnetic layer (MMP1) 1762 and the second magnetic layer (MMP2) 1764 is not limited thereto, and the first magnetic layer (MMP1) 1762 and the second magnetic layer (MMP2) 1764 may be formed with different thicknesses. In this case, the first magnetic layer (MMP1) 1762 may be formed with the first thickness, and the second magnetic layer (MMP2) 1764 may be formed with the second thickness that is thinner than the first thickness.

According to an embodiment, the flexible printed circuit board layer 1761 may be separated and disposed. For example, the flexible printed circuit board layer 1761 may include a first flexible printed circuit board portion 17611 and a second flexible printed circuit board portion 17612. The first flexible printed circuit board portion 17611 and the second flexible printed circuit board portion 17612 may be disposed to be spaced apart from each other at the first interval w1 (e.g., gap distance). For example, the first interval w1 between the first flexible printed circuit board portion 17611 and the second flexible printed circuit board portion 17612 may be 0 to 3 mm. For example, in case that the first flexible printed circuit board portion 17611 and the second flexible printed circuit board portion 17612 are disposed to contact each other, the first interval w1 between the first flexible printed circuit board portion 17611 and the second flexible printed circuit board portion 17612 may be substantially "0". For example, in case that the first flexible printed circuit board portion 17611 and the second flexible printed circuit board portion 17612 are separated from each other, the first interval w1 between the first flexible printed circuit board portion 17611 and the second flexible printed circuit board portion 17612 may be equal to or smaller than 3 mm.

For example, the first interval w1 between the first flexible printed circuit board portion 17611 and the second flexible printed circuit board portion 17612 may be substantially equal to the interval between the third magnetic layer portion 17641 and the fourth magnetic layer portion 17642. For example, the first interval w1 between the first flexible printed circuit board portion 17611 and the second flexible printed circuit board portion 17612 may be smaller than the interval between the third magnetic layer portion 17641 and the fourth magnetic layer portion 17642. The first interval w1 between the first flexible printed circuit board portion 17611 and the second flexible printed circuit board portion 17612 is not limited thereto, and may be larger than the interval between the third magnetic layer portion 17641 and the fourth magnetic layer portion 17642.

For example, the first interval w1 between the first flexible printed circuit board portion 17611 and the second flexible printed circuit board portion 17612 may be 8 mm to 12 mm. In case that the first interval w1 between the first flexible printed circuit board portion 17611 and the second flexible printed circuit board portion 17612 is formed with 8 mm to 12 mm, the first interval w1 between the first flexible printed circuit board portion 17611 and the second flexible printed circuit board portion 17612 may be substantially equal to the second interval w2 between the first conductive layer portion 17631 and the second conductive layer portion 17632. For example, the first interval w1 between the first flexible printed circuit board portion 17611 and the second flexible printed circuit board portion 17612 may be smaller than the second interval w2 between the first conductive layer portion 17631 and the second conductive layer portion 17632. The first interval w1 between the first flexible printed circuit board portion 17611 and the second flexible printed circuit board portion 17612 is not limited thereto, and may be larger than the second interval w2 between the first conductive layer portion 17631 and the second conductive layer portion 17632.

The flexible printed circuit board layer 1761 is not limited thereto, and may be formed as one board without being separated.

According to an embodiment, the first conductive layer 1763 (e.g., conductive plate) may include the first conductive layer portion 17631 and the second conductive layer portion 17632 spaced apart from each other. In order to improve the bending feature of the electronic device 1700, a part of the first conductive layer 1763 (e.g., conductive plate) may be removed. For example, a part of the first conductive layer portion 17631 of the first conductive layer 1763 (e.g., conductive plate) is removed, and a part of the second conductive layer portion 17632 is removed, so that the first conductive layer portion 17631 and the second conductive layer portion 17632 may be spaced apart from each other at the second interval w2. For example, the part of the first conductive layer 1763 (e.g., conductive plate) corresponding to the bending area 670 may be removed.

According to an embodiment, the first magnetic layer (MMP1) 1762 may include the first magnetic layer portion 17621 and the second magnetic layer portion 17622 spaced apart from each other. The first magnetic layer portion 17621 and the second magnetic layer portion 17622 of the first magnetic layer (MMP1) 1762 may be disposed to be spaced apart from each other at the second interval w2. For example, the second interval w2 may be 10 mm to 30 mm.

For example, the second interval w2 between the first magnetic layer portion 17621 and the second magnetic layer portion 17622 may be substantially equal to the second interval w2 between the first conductive layer portion 17631 and the second conductive layer portion 17632. The second intervals w2 are not limited thereto, and the second interval w2 between the first magnetic layer portion 17621 and the second magnetic layer portion 17622 may be different from the second interval w2 between the first conductive layer portion 17631 and the second conductive layer portion 17632.

According to an embodiment, the second magnetic layer (MMP2) 1764 may be disposed to overlap the portion from which a part of the first conductive layer 1763 (e.g., conductive plate) is removed.

According to an embodiment, the second magnetic layer (MMP2) 1764 may be disposed between the first magnetic layer portion 17621 and the second magnetic layer portion 17622 of the first magnetic layer (MMP1) 1762. For example, the second magnetic layer (MMP2) 1764 may include a third magnetic layer portion 17641 and a fourth magnetic layer portion 17642 being separated based on the folding axis F. For example, the third magnetic layer portion 17641 may be disposed adjacent to the first magnetic layer portion 17621. For example, the fourth magnetic layer portion 17642 may be disposed adjacent to the second magnetic layer portion 17622. For example, the third magnetic layer portion 17641 and the fourth magnetic layer portion 17642 may be disposed at the first interval w1.

According to an embodiment, when the electronic device 1700 is viewed in the vertical direction to the display 610 (e.g., flexible display) in the unfolded state of the electronic device 1700, the second conductive layer 1765 may be disposed under the second magnetic layer (MMP2) 1764. For example, the second conductive layer 1765 may be disposed to overlap the second magnetic layer (MMP2) 1764.

According to an embodiment, the first magnetic layer (MMP1) 1762 may be formed to have a first performance coefficient. For example, the first magnetic layer (MMP1) 1762 may be formed of a material having a first permeability with a first thickness, and may have the first performance coefficient.

According to an embodiment, the second magnetic layer (MMP2) 1764 may be formed to have a second performance coefficient that is lower than the first performance coefficient. For example, the second magnetic layer (MMP2) 1764 may be formed of a material having a second permeability that is lower than the first permeability with a second thickness that is thinner than the first thickness, and may have the second performance coefficient. For example, the second magnetic layer (MMP2) 1764 may be formed of a material having the second permeability that is lower than the first permeability with the first thickness, and may have the second performance coefficient. For example, the second magnetic layer (MMP2) 1764 may be formed of a material having the first permeability with the second thickness that is thinner than the first thickness, and may have the second performance coefficient.

For example, the first magnetic layer (MMP1) 1762 may be formed with a thickness of 30 µm to 60 µm. For example, the permeability of the first magnetic layer (MMP1) 1762 may be about 95 u'.

For example, the second magnetic layer (MMP2) 1764 may be formed with a thickness of 20 µm to 30 µm. For example, the second magnetic layer (MMP2) 1764 may have the permeability that is lower than the permeability (e.g., about 95 u') of the first magnetic layer (MMP1) 1762. For example, the permeability of the second magnetic layer (MMP2) 1764 may be about 60 u'.

In order to prevent the non-uniform signal distribution from occurring in the bending area 670, the second permeability of the second magnetic layer (MMP2) 1764 may be formed to be lower than the first permeability of the first magnetic layer (MMP1) 1762, and the second conductive layer 1765 may be disposed on the lower part of the second magnetic layer (MMP2) 1764.

According to an embodiment, the second conductive layer 1765 may be disposed between the second magnetic layer 1764 and the hinge plate 880, and may have conductivity that is different from the conductivity of the first conductive layer 1763.

For example, the second conductive layer 1765 may include a second material having a lower conductivity than the conductivity of a first material included in the first conductive layer 1763.

For example, the second conductive layer 1765 may be formed with substantially the same thickness as the first conductive layer 1763.

For example, the second conductive layer 1765 may be formed with the thickness that is thinner than the thickness of the first conductive layer 1763.

According to an embodiment, the first conductive layer 1763 and the second conductive layer 1765 may be electrically connected to each other. For example, the second conductive layer 1765 may be formed by patterning the portion extending from the first conductive layer 1763. For example, the second conductive layer 1765 may include a conductive pattern 1765a formed of a conductive material and a space 1765b between the conductive material or formed from conductive material and spaces formed of a non-conductive material. For example, since the second permeability of the second magnetic layer (MMP2) 1764 is lower than the first permeability of the first magnetic layer (MMP1) 1762, it is possible to tune the conductivity of the second conductive layer 1765 in consideration of the signal strength and the resonance frequency of the electronic pen (e.g., electronic pen 500 of FIGS. 5A and 5B). For example, by adjusting the line width w of the conductive pattern 1765a and the width s of the space 1765b, the conductivity of the second conductive layer 1765 and the conductivity of the digitizer 1760 can be tuned.

During the folding of the electronic device 1700, for smooth folding and unfolding of the display 610 (e.g., flexible display) based on the folding axis F and for support of the display 610 (e.g., flexible display), the flexible plate 620 (e.g., lattice plate) may include a lattice portion 622 (e.g., lattice area).

According to an embodiment, the lattice portion 622 (e.g., lattice area) may be disposed on the portion corresponding to the bending area 670. For example, the lattice portion 622 (e.g., lattice area) may be disposed to overlap the bending area 670.

According to an embodiment, at least a part of the second magnetic layer (MMP2) 1764 may be disposed to overlap the lattice portion 622 (e.g., lattice area).

According to an embodiment, the first magnetic layer 1762 and the lattice portion 622 (e.g., lattice area) may be disposed not to overlap each other.

The digitizer 1760 of the disclosure can be applied to not only the foldable electronic device but also the slidable electronic device or the rollable electronic device. In the disclosure, although a foldable electronic device in which in-folding is possible has been described as an example, the electronic device 1700 according to the disclosure is not limited to the foldable electronic device in which the in-folding is possible. For example, the electronic device 1700 according to the disclosure may include the foldable electronic device including an out-foldable display. The electronic device 1700 according to the disclosure may include a multi-foldable electronic device including a display of which multiple times in-out folding is possible. For example, like an expandable electronic device through slide movement between the housings, the electronic device 1700 according to the disclosure may include various electronic devices each including a flexible display of which a partial area (e.g., bending area or folding area) is bendable or rollable.

In the electronic device 1700 according to an embodiment of the disclosure, the second magnetic layer (MMP2) 1764 and the second conductive layer 1765 may be disposed to overlap the portion from which a part of the first conductive layer 1763 (e.g., conductive plate) is removed. The second magnetic layer (MMP2) 1764 and the second conductive layer 1765 may be disposed on the portion corresponding to the bending area 670, and thus the deterioration of the electronic pen detection in the bending area 670, due to the removal of the part of the conductive layer 1763 (e.g., conductive plate), can be prevented, reduced, or compensated for.

Furthermore, the tunable nature of the characteristics of the conductive layer 1765 may allow for more precise compensation of the deterioration compared to the provision of the second magnetic layer (MPP2) 1764 alone. The use of the conductive layer 1765 of FIG. 17 may also be applied to the approaches described with reference to FIGS. 6, 10, 14, and 16.

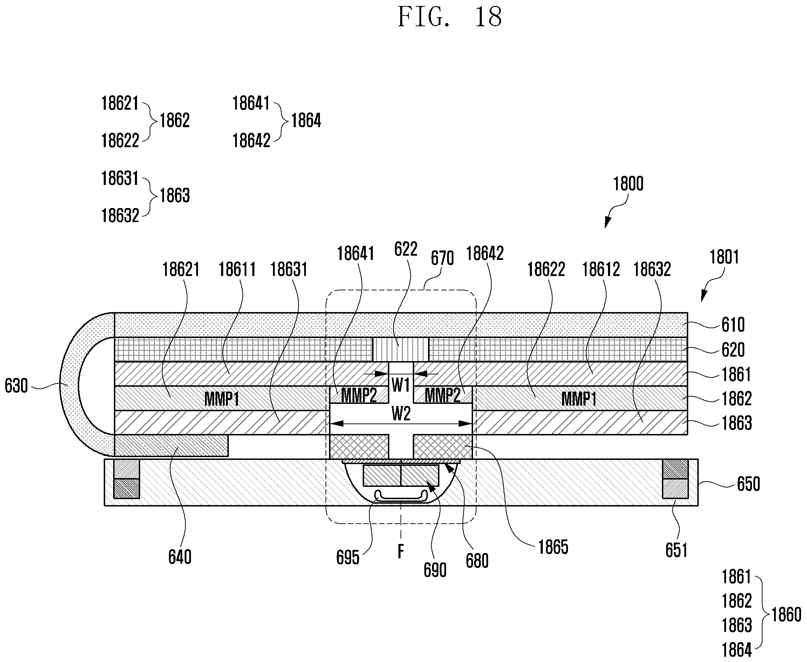

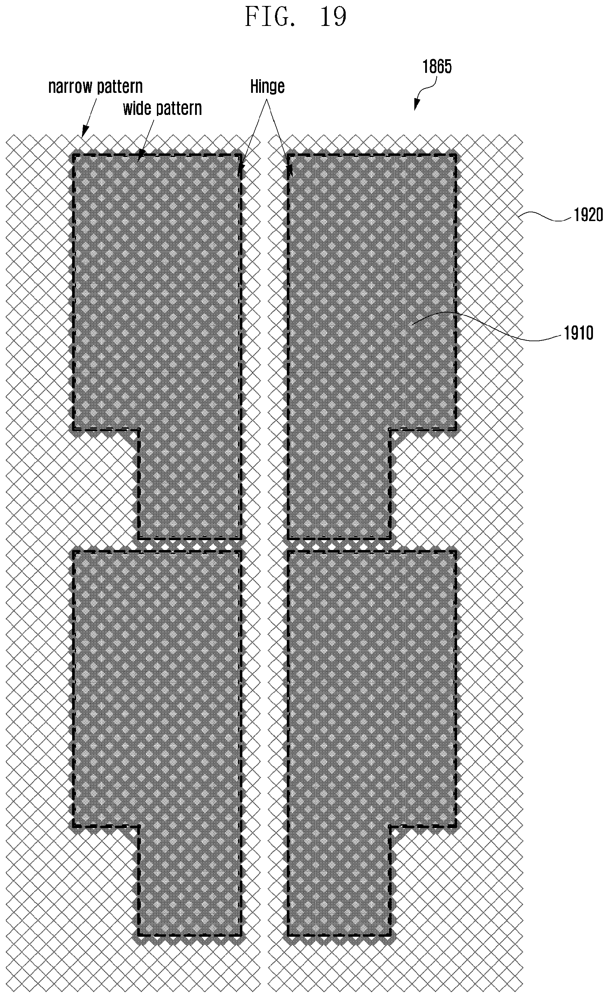

FIG. 18 is a view illustrating an electronic device representing an unfolded state of the electronic device according to an embodiment of the disclosure. FIG. 19 is a view representing a second conductive layer disposed to overlap a second magnetic layer.

An electronic device 1800 of FIG. 18 may be similar to the electronic device 1000 of FIG. 10 at least partly, and may also include features of other embodiments of the electronic device. In explaining the electronic device 1800 of FIG. 18, detailed explanation of the constitution that is substantially the same as (or similar to) the constitution of the electronic device 1000 of FIG. 10 and the electronic device 1700 of FIG. 17 may be omitted.

With reference to FIGS. 18 and 19, an electronic device 1800 (e.g., electronic device 101 of FIG. 1, electronic device 200 of FIG. 2A, or electronic device 300 of FIG. 3A) according to an embodiment of the disclosure may include a display module 1801, a bracket 650, a magnetic component 651, a digitizer 1860, a second conductive layer 1865, a hinge plate 880, a hinge structure 690, and a hinge cover 695. For example, the display module 1801 may include a display 610 (e.g., flexible display) (e.g., first display 230 of FIG. 2A, flexible display 330 of FIG. 3A, or display 410 of FIG. 4), a flexible plate 620 (e.g., display support member, lattice support member, or lattice plate), a flexible printed circuit board (FPCB) 630, and a printed circuit board (PCB) 640.

For example, the digitizer 1860 and the second conductive layer 1865 may be separately formed and disposed.

For example, in case that the hinge structure 690 has magnetism, a shielding member may be further disposed between the hinge structure 690 and the digitizer 1860. In case that the hinge structure 690 has magnetism, the hinge structure 690 may include a stainless steel having magnetism.

For example, the bracket 650 may be adhered (or attached) to at least a part of the display module 1801, and may support the display module 1801. The bracket 650 may include a recess that can accommodate at least a part (e.g., printed circuit board 640) of the display module 1801.

For example, the display 610 (e.g., flexible display) may be electrically connected to the printed circuit board (PCB) 640 through the flexible printed circuit board (FPCB) 630.

For example, the digitizer 1860 may be electrically connected to a digitizer driving unit (e.g., digitizer driving unit 470 of FIG. 4) through the flexible printed circuit board.

For example, the printed circuit board (PCB) 640 may include a processor (e.g., processor 120 of FIG. 1), a memory (e.g., memory 130 of FIG. 1), a display driver IC (e.g., display driver IC 430 of FIG. 4), and a digitizer driving unit (e.g., digitizer driving unit 470 of FIG. 4).

According to an embodiment, in case that the electronic device 1800 is folded, the magnetic component 651 may be disposed on both sides of the bracket 650 to fix a folded state. A groove or a hole may be formed on at least a part on both sides of the bracket 650, and the magnetic component 651 may be disposed in the groove or the hole formed on the both sides.

According to an embodiment, when the electronic device 1800 is folded, the hinge plate 880 may include a first hinge plate portion (e.g., first hinge plate portion 8801 of FIG. 10) being separated based on the folding axis F, and a second hinge plate portion (e.g., second hinge plate portion 8802 of FIG. 10).

According to an embodiment, the hinge plate 880 and the hinge structure 690 may be disposed to correspond to the bending area 670. The hinge structure 690 may be hidden by the hinge cover 695 when viewed from an outside. For example, by the hinge structure 690, the electronic device 1800 may be folded and unfolded in an in-folding method and/or an out-folding method.

According to an embodiment, the digitizer 1860 and the second conductive layer 1865 may be disposed on the lower part of the flexible plate 620 (e.g., lattice plate). The second conductive layer 1865 may be disposed below (i.e. at a lower level) and separated from the other elements of the digitizer.

For example, for smooth folding and unfolding of the electronic device 1800, at least some constitutions of the digitizer 1860 may be separated to be spaced apart from each other based on the folding axis F.

For example, for the smooth folding and unfolding of the electronic device 1800, the second conductive layer 1865 may be separated and disposed.

According to an embodiment, the digitizer 1860 may include a flexible printed circuit board layer 1861 including a coil array, a first magnetic layer (MMP1) 1862, a first conductive layer 1863 (e.g., conductive plate), and a second magnetic layer (MMP2) 1864.

According to an embodiment, when the electronic device 1800 is viewed in the vertical direction to the display 610 (e.g., flexible display) in the unfolded state of the electronic device 1700, the first magnetic layer (MMP1) 1862 and the second magnetic layer (MMP2) 1864 may be disposed between the flexible printed circuit board layer 1861 and the conductive layer 1863 (e.g., conductive plate).

For example, the first magnetic layer (MMP1) 1862 may be disposed on the lower part of the flexible printed circuit board layer 1861. The first magnetic layer (MMP1) 1862 may be disposed to overlap at least a part of the flexible printed circuit board layer 1861.

For example, the second magnetic layer (MMP2) 1864 may be disposed on the lower part of the flexible printed circuit board layer 1861. The second magnetic layer (MMP2) 1864 may be disposed to overlap at least a part of the flexible printed circuit board 1861.

According to an embodiment, the first magnetic layer (MMP1) 1862 and the second magnetic layer (MMP2) 1864 may be disposed in parallel on the lower part of the flexible printed circuit board layer 1861.

According to an embodiment, the first conductive layer 1863 (e.g., conductive plate) may be disposed on the lower part of the first magnetic layer (MMP1) 1862. The first conductive layer 1863 (e.g., conductive plate) may be disposed to overlap the first magnetic layer (MMP1) 1862. For example, when the electronic device 1800 is viewed in the vertical direction to the display 610 (e.g., flexible display) in the unfolded state of the electronic device 1700, the first magnetic layer (MMP1) 1862 and the first conductive layer 1863 (e.g., conductive plate) may be disposed to substantially overlap each other.

According to an embodiment, when the electronic device 1800 is viewed in the vertical direction to the display 610 (e.g., flexible display) in the unfolded state of the electronic device 1700, the first magnetic layer (MMP1) 1862 and the second magnetic layer (MMP2) 1864 may be disposed not to overlap each other.

According to an embodiment, the first conductive layer 1863 (e.g., conductive plate) may be disposed not to overlap the second magnetic layer (MMP2) 1864.

According to an embodiment, when the electronic device 1800 is viewed in the vertical direction to the display 610 (e.g., flexible display) in the unfolded state of the electronic device 1800, the second magnetic layer (MMP2) 1864 and the second conductive layer 1865 may be disposed to substantially overlap each other.

For example, the second conductive layer 1865 may be disposed above the hinge plate 880.

For example, the second conductive layer 1865 and the second magnetic lay (MMP2) 1864 may be formed with substantially the same width. The width of the second conductive layer 1865 and the second magnetic lay (MMP2) 1864 is not limited thereto, and the second conductive layer 1865 may be formed to have the width that is wider than the width of the second magnetic layer (MMP2) 1864.

According to an embodiment, the first magnetic layer (MMP1) 1862 may include a first magnetic layer portion and a second magnetic layer portion spaced apart from each other along the folding axis F. In the direction parallel to the first magnetic layer (MMP1) 1862, the second magnetic layer (MMP2) 1864 may be disposed between the first magnetic layer portion and the second magnetic layer portion of the first magnetic layer (MMP1) 1862.

For example, the first magnetic layer (MMP1) 1862 and the second magnetic layer (MMP2) 1864 may be formed with substantially the same thickness.

The thickness of the first magnetic layer (MMP1) 1862 and the second magnetic layer (MMP2) 1864 is not limited thereto, and the first magnetic layer (MMP1) 1862 and the second magnetic layer (MMP2) 1864 may be formed with different thicknesses. In this case, the first magnetic layer (MMP1) 1862 may be formed with the first thickness, and the second magnetic layer (MMP2) 1864 may be formed with the second thickness that is thinner than the first thickness.

According to an embodiment, the flexible printed circuit board layer 1861 may be separated and disposed. For example, the flexible printed circuit board layer 1861 may include a first flexible printed circuit board portion 18611 and a second flexible printed circuit board portion 18612. The first flexible printed circuit board portion 18611 and the second flexible printed circuit board portion 18612 may be disposed to be spaced apart from each other at the first interval w1 (e.g., gap distance).

For example, the first interval w1 between the first flexible printed circuit board portion 18611 and the second flexible printed circuit board portion 18612 may be 0 to 3 mm. For example, in case that the first flexible printed circuit board portion 18611 and the second flexible printed circuit board portion 18612 are disposed to contact each other, the first interval w1 between the first flexible printed circuit board portion 18611 and the second flexible printed circuit board portion 18612 may be substantially "0". For example, in case that the first flexible printed circuit board portion 18611 and the second flexible printed circuit board portion 18612 are separated from each other, the first interval w1 between the first flexible printed circuit board portion 18611 and the second flexible printed circuit board portion 18612 may be equal to or smaller than 3 mm.

For example, the first interval w1 between the first flexible printed circuit board portion 18611 and the second flexible printed circuit board portion 18612 may be substantially equal to the interval between the third magnetic layer portion 18641 and the fourth magnetic layer portion 18642. For example, the first interval w1 between the first flexible printed circuit board portion 18611 and the second flexible printed circuit board portion 18612 may be smaller than the interval between the third magnetic layer portion 18641 and the fourth magnetic layer portion 18642. The first interval w1 between the first flexible printed circuit board portion 18611 and the second flexible printed circuit board portion 18612 is not limited thereto, and may be larger than the interval between the third magnetic layer portion 18641 and the fourth magnetic layer portion 18642.

For example, the first interval w1 between the first flexible printed circuit board portion 18611 and the second flexible printed circuit board portion 18612 may be 8 mm to 12 mm. In case that the first interval w1 between the first flexible printed circuit board portion 18611 and the second flexible printed circuit board portion 18612 is formed with 8 mm to 12 mm, the first interval w1 between the first flexible printed circuit board portion 18611 and the second flexible printed circuit board portion 18612 may be substantially equal to the second interval w2 between the first conductive layer portion 18631 and the second conductive layer portion 18632. For example, the first interval w1 between the first flexible printed circuit board portion 18611 and the second flexible printed circuit board portion 18612 may be smaller than the second interval w2 between the first conductive layer portion 18631 and the second conductive layer portion 18632. The first interval w1 between the first flexible printed circuit board portion 18611 and the second flexible printed circuit board portion 18612 is not limited thereto, and may be larger than the second interval w2 between the first conductive layer portion 18631 and the second conductive layer portion 18632.

The flexible printed circuit board layer 1861 is not limited thereto, and may be formed as one board without being separated.

According to an embodiment, the first conductive layer 1863 (e.g., conductive plate) may include the first conductive layer portion 18631 and the second conductive layer portion 18632 spaced apart from each other. In order to improve the bending feature of the electronic device 1800, a part of the first conductive layer 1863 (e.g., conductive plate) may be removed. For example, a part of the first conductive layer portion 18631 of the first conductive layer 1863 (e.g., conductive plate) is removed, and a part of the second conductive layer portion 18632 is removed, so that the first conductive layer portion 18631 and the second conductive layer portion 18632 may be spaced apart from each other at the second interval w2. For example, the part of the first conductive layer 1863 (e.g., conductive plate) corresponding to the bending area 670 may be removed.

According to an embodiment, the first magnetic layer (MMP1) 1862 may include the first magnetic layer portion 18621 and the second magnetic layer portion 18622 spaced apart from each other. The first magnetic layer portion 18621 and the second magnetic layer portion 18622 of the first magnetic layer (MMP1) 1862 may be disposed to be spaced apart from each other at the second interval w2. For example, the second interval w2 may be 10 mm to 30 mm.

For example, the second interval w2 between the first magnetic layer portion 18621 and the second magnetic layer portion 18622 may be substantially equal to the second interval w2 between the first conductive layer portion 18631 and the second conductive layer portion 18632. The second intervals w2 are not limited thereto, and the second interval w2 between the first magnetic layer portion 18621 and the second magnetic layer portion 18622 may be different from the second interval w2 between the first conductive layer portion 18631 and the second conductive layer portion 18632.

According to an embodiment, the second magnetic layer (MMP2) 1864 may be disposed to overlap the portion from which a part of the first conductive layer 1863 (e.g., conductive plate) is removed.

According to an embodiment, the second magnetic layer (MMP2) 1864 may be disposed between the first magnetic layer portion 18621 and the second magnetic layer portion 18622 of the first magnetic layer (MMP1) 1862.

For example, the second magnetic layer (MMP2) 1864 may include a third magnetic layer portion 18641 and a fourth magnetic layer portion 18642 being separated based on the folding axis F.

For example, the third magnetic layer portion 18641 may be disposed adjacent to the first magnetic layer portion 18621. For example, the fourth magnetic layer portion 18642 may be disposed adjacent to the second magnetic layer portion 18622. For example, the third magnetic layer portion 18641 and the fourth magnetic layer portion 18642 may be disposed at the first interval w1.

According to an embodiment, when the electronic device 1800 is viewed in the vertical direction to the display 610 (e.g., flexible display) in the unfolded state of the electronic device 1800, the second conductive layer 1865 may be disposed under the second magnetic layer (MMP2) 1864. For example, the second conductive layer 1865 may be disposed to overlap the second magnetic layer (MMP2) 1864. For example, the second conductive layer 1865 may be disposed to overlap the hinge plate 880. For example, the second conductive layer 1865 may be adhered (or attached) to the hinge plate 880 through an adhesive member.

For example, the second conductive layer 1865 and the first magnetic layer (MMP1) 1862 may be electrically separated from each other.

For example, the second conductive layer 1865 and the first conductive layer 1863 may be electrically separated and/or physically separated from each other.

For example, the second conductive layer 1865 and the second magnetic layer (MMP1) 1864 may be electrically separated from each other.

According to an embodiment, the first magnetic layer (MMP1) 1862 may be formed to have a first performance coefficient. For example, the first magnetic layer (MMP1) 1862 may be formed of a material having a first permeability with a first thickness, and may have the first performance coefficient.

According to an embodiment, the second magnetic layer (MMP2) 1864 may be formed to have a second performance coefficient that is lower than the first performance coefficient. For example, the second magnetic layer (MMP2) 1864 may be formed of a material having a second permeability that is lower than the first permeability with a second thickness that is thinner than the first thickness, and may have the second performance coefficient. For example, the second magnetic layer (MMP2) 1864 may be formed of a material having the second permeability that is lower than the first permeability with the first thickness, and may have the second performance coefficient. For example, the second magnetic layer (MMP2) 1864 may be formed of a material having the first permeability with the second thickness that is thinner than the first thickness, and may have the second performance coefficient.

For example, the first magnetic layer (MMP1) 1862 may be formed with a thickness of 30 µm to 60 µm. For example, the permeability of the first magnetic layer (MMP1) 1862 may be about 95 u'.

For example, the second magnetic layer (MMP2) 1864 may be formed with a thickness of 20 µm to 30 µm. For example, the second magnetic layer (MMP2) 1864 may have the permeability that is lower than the permeability (e.g., about 95 u') of the first magnetic layer (MMP1) 1862. For example, the permeability of the second magnetic layer (MMP2) 1864 may be about 60 u'.

In order to prevent the non-uniform signal distribution from occurring in the bending area 670, the second permeability of the second magnetic layer (MMP2) 1864 may be formed to be lower than the first permeability of the first magnetic layer (MMP1) 1862, and the second conductive layer 1865 may be disposed on the lower part of the second magnetic layer (MMP2) 1864.

According to an embodiment, the second conductive layer 1865 may be disposed between the second magnetic layer 1864 and the hinge plate 880, and may have conductivity that is different from the conductivity of the first conductive layer 1863.

For example, the second conductive layer 1865 may include a second material having a lower conductivity than the conductivity of a first material included in the first conductive layer 1863.

For example, the second conductive layer 1865 may be formed with substantially the same thickness as the first conductive layer 1863.

For example, the second conductive layer 1865 may be formed with the thickness that is thinner than the thickness of the first conductive layer 1863.

According to an embodiment, the second conductive layer 1865 may include a conductive pattern (e.g., conductive pattern 1765a of FIG. 17) and a space (e.g., space 1765b of FIG. 17). By adjusting the line width w of the conductive pattern 1765a and the width s of the space 1765b, the conductivity of the second conductive layer 1765 and the conductivity of the digitizer 1760 can be tuned as described with reference to FIG. 17.

For example, in the whole area of the second conductive layer 1865, a first pattern portion 1910 that overlaps the second magnetic layer (MMP2) 1864 may be formed as a wide pattern. For example, in the whole area of the second conductive layer 1865, the first pattern portion 1910 that overlaps the second magnetic layer (MMP2) 1864 may be formed so that the conductive pattern (e.g., conductive pattern 1765a of FIG. 17) has the first line width w1.

For example, in the whole area of the second conductive layer 1865, a second pattern portion 1920 that does not overlap the second magnetic layer (MMP2) 1864 may be formed as a narrow pattern. For example, in the whole area of the second conductive layer 1865, the second pattern portion 1920 that does not overlap the second magnetic layer (MMP2) 1864 may be formed so that the conductive pattern (e.g., conductive pattern 1765a of FIG. 17) has the second line width that is narrower than the first line width w1.

For example, since the second permeability of the second magnetic layer (MMP2) 1864 is lower than the first permeability of the first magnetic layer (MMP1) 1862, it is possible to tune the conductivity of the second conductive layer 1865 in consideration of the signal strength and the resonance frequency of the electronic pen (e.g., electronic pen 500 of FIGS. 5A and 5B). For example, by adjusting the line width w of the conductive pattern 1765a and the width s of the space (e.g., space 1765b of FIG. 17), the conductivity of the second conductive layer 1865 and the conductivity of the digitizer 1860 can be tuned.

If a material having high permeability (e.g., ferrite-based material, martensite-based material, or Fe-based material) or magnetic material is located on the lower part of the conductive layer 1863 (e.g., conductive plate) of the digitizer 1860, it may exert an influence on the signal distribution of the electronic pen 500 that is detected by the digitizer 1860. As the conductivity of the conductive layer 1863 (e.g., conductive plate) is higher, the resonance frequency of the electronic pen 500 can be higher, and thus it is possible that the signal distribution of the electronic pen 500 becomes uniform through disposition of the second conductive layer 1865. Similar tuning to that described with reference to FIG. 19 may also be applied to the structure of FIG. 17.

During the folding of the electronic device 1800, for smooth folding and unfolding of the display 610 (e.g., flexible display) based on the folding axis F and for support of the display 610 (e.g., flexible display), the flexible plate 620 (e.g., lattice plate) may include a lattice portion 622 (e.g., lattice area).

According to an embodiment, the lattice portion 622 (e.g., lattice area) may be disposed on the portion corresponding to the bending area 670. For example, the lattice portion 622 (e.g., lattice area) may be disposed to overlap the bending area 670.

According to an embodiment, at least a part of the second magnetic layer (MMP2) 1864 may be disposed to overlap the lattice portion 622 (e.g., lattice area).

According to an embodiment, the first magnetic layer 1862 and the lattice portion 622 (e.g., lattice area) may be disposed not to overlap each other.

The digitizer 1860 of the disclosure can be applied to not only the foldable electronic device but also the slidable electronic device or the rollable electronic device. In the disclosure, although a foldable electronic device in which in-folding is possible has been described as an example, the electronic device 1800 according to the disclosure is not limited to the foldable electronic device in which the in-folding is possible. For example, the electronic device 1800 according to the disclosure may include the foldable electronic device including an out-foldable display. The electronic device 1800 according to the disclosure may include a multi-foldable electronic device including a display of which multiple times in-out folding is possible. For example, like an expandable electronic device through slide movement between the housings, the electronic device 1700 according to the disclosure may include various electronic devices each including a flexible display of which a partial area (e.g., bending area or folding area) is bendable or rollable.

In the electronic device 1800 according to an embodiment of the disclosure, the second magnetic layer (MMP2) 1864 and the second conductive layer 1865 may be disposed to overlap the portion from which a part of the first conductive layer 1863 (e.g., conductive plate) is removed. The second magnetic layer (MMP2) 1864 and the second conductive layer 1865 may be disposed on the portion corresponding to the bending area 670, and thus the feature deterioration in the bending area 670, due to the removal of the part of the conductive layer 1863 (e.g., conductive plate), can be prevented (or compensated for).

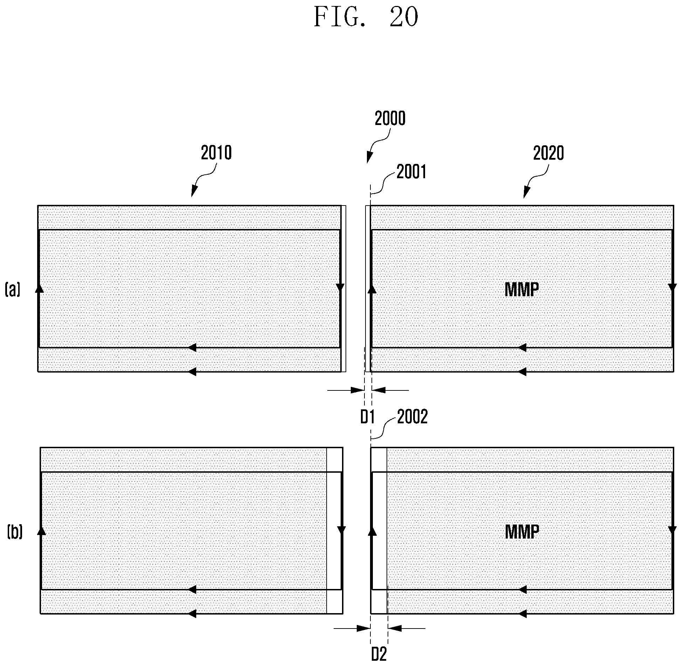

FIG. 20 is a view representing an interval between a first magnetic part and a second magnetic part of a first magnetic layer and locations where the first magnetic part and the second magnetic part of the first magnetic layer are disposed from a reference point.

With reference to FIG. 20, a digitizer 2000 (e.g., detachable digitizer) may include a first digitizer portion 2010 and a second digitizer portion 2020.

According to an embodiment, a reference line (e.g., portion on which wirings of the flexible printed circuit board layer 1861 are disposed) may be set as an origin, and locations where the first digitizer portion 2010 and the second digitizer portion 2020 are disposed may be adjusted.

For example, the first digitizer portion 2010 and the second digitizer portion 2020 can be disposed so that they are closer to the folding axis F than the reference line 2001 (e.g., portion where wirings of the flexible printed circuit board layer 1861 are disposed).

For example, the first digitizer portion 2010 and the second digitizer portion 2020 can be disposed to be close to the folding axis F as long as about -0.5 mm from the reference line 2001 (e.g., portion where wirings of the flexible printed circuit board layer 1861 are disposed).

For example, the first digitizer portion 2010 and the second digitizer portion 2020 can be disposed so that they get farther away from the folding axis F rather than a reference line 2002 (e.g., portion where wirings of the flexible printed circuit board layer 1861 are disposed).

For example, the first digitizer portion 2010 and the second digitizer portion 2020 can be disposed to get farther away from the folding axis F as long as about 2.0 mm from the reference line 2002 (e.g., portion where wirings of the flexible printed circuit board layer 1861 are disposed).

According to an embodiment, in the digitizer 2000 (e.g., detachable digitizer), the first digitizer portion 2010 and the second digitizer portion 2020 may form a closed loop. An area between the digitizer portion 2010 and the second digitizer portion 2020 becomes an outside of the closed loop. When the digitizer 2000 operates as a receiver Rx, the phase of the magnetic field coming from the area between the first digitizer portion 2010 and the second digitizer portion 2020 may be opposite to the phase of the magnetic field inside the first digitizer portion 2010 and the second digitizer portion 2020. Due to the occurrence of the opposite phase, the strength of the received signal of the digitizer 2000 (e.g., detachable digitizer) may be reduced, or the signal strength may become "0" at the portion where the phase is changed. The same phenomenon may occur even when the digitizer 2000 (e.g., detachable digitizer) operates as a transmitter Tx. In order to reduce the induced electromotive force by the magnetic field occurring between the first digitizer portion 2010 and the second digitizer portion 2020, a part of the magnetic layer (e.g., first magnetic layer (MMP1) 1862 and second magnetic layer (MMP2) 1864) may be removed, or the second magnetic layer (MMP2) 1864 may be formed of a material having low permeability.

The digitizer 2000 of the disclosure can be applied to not only the foldable electronic device but also the slidable electronic device or the rollable electronic device. In the disclosure, although a foldable electronic device in which in-folding is possible has been described as an example, the electronic device according to the disclosure is not limited to the foldable electronic device in which the in-folding is possible. For example, the electronic device 1800 according to the disclosure may include the foldable electronic device including an out-foldable display. The electronic device according to the disclosure may include a multi-foldable electronic device including a display of which multiple times in-out folding is possible. For example, like an expandable electronic device through slide movement between the housings, the electronic device according to the disclosure may include various electronic devices each including a flexible display of which a partial area (e.g., bending area or folding area) is bendable or rollable.

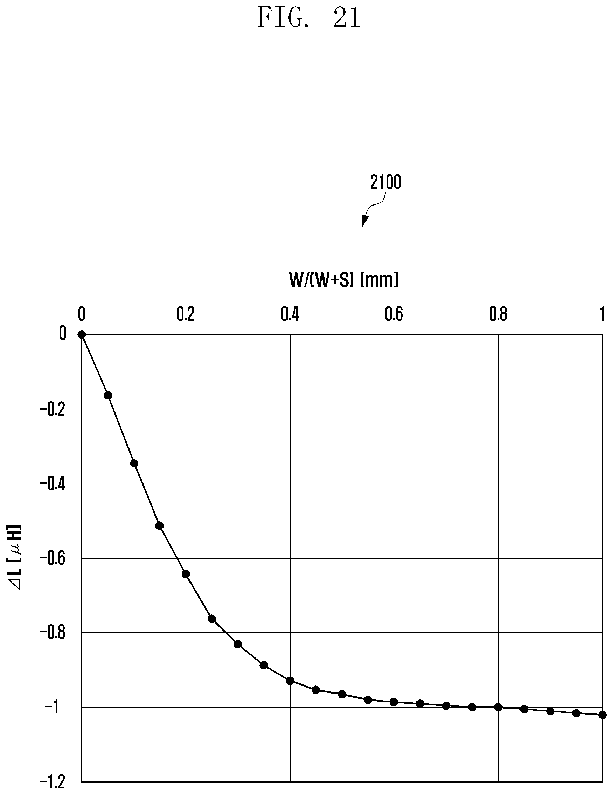

FIG. 21 is a diagram 2100 representing an inductance change (µH) inside an electronic pen according to a pattern density (e.g., ratio of a width w of a conductive pattern to a space s - see FIG. 17) of a conductive layer disposed to overlap a second magnetic layer.

With reference to FIG. 21, depending on the ratio (e.g., pattern ratio) of the line width w of the pattern 1765a of the second conductive layer (e.g., second conductive layer 1765 of FIG. 17 or second conductive layer 1865 of FIG. 18) to the width s of the space 1765b, the inductance change inside the electronic pen (electronic pen 500 of FIGS. 5A and 5B) may differ. For example, as the pattern ratio of the second conductive layer 1765 and 1865 becomes higher, the inductance reduction rate inside the electronic pen 500 is increased, and above a predetermined level thereof, the inductance reduction rate inside the electronic pen 500 may be saturated. The resonance frequency of the electronic pen 500 may be changed according to the inductance of an inductor disposed inside the electronic pen 500, and thus by adjusting the pattern ratio of the second conductive layer 1765 and 1865, the signal distribution of the electronic pen 500 can be adjusted.

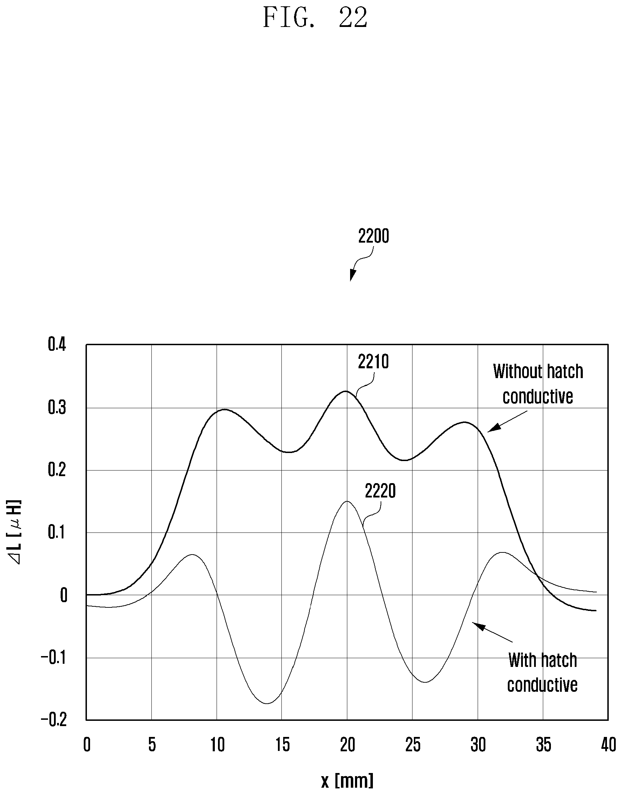

FIG. 22 is a diagram 2200 representing an inductance change inside an electronic pen according to existence/nonexistence of a second conductive layer disposed to overlap a second magnetic layer.

With reference to FIG. 22, depending on whether or not the second conductive layer (e.g., second conductive layer 1765, or second conductive layer 1865 of FIG. 18) is disposed under the second magnetic layer (e.g., second magnetic layer (MMP2) 1764 or second magnetic layer (MMP2) 1864), an inductance change inside the electronic pen (e.g., electronic pen 500 of FIGS. 5A and 5B) may occur.

For example, when the second conductive layer 1765 and 1865 is not disposed under the second magnetic layer 1764 and 1864, the inductance 2210 inside the electronic pen 500 may be non-uniformly distributed. In contrast, if the second conductive layer 1765 and 1865 is disposed under the second magnetic layer 1764 and 1864, the inductance 2220 inside the electronic pen 500 may be uniformly distributed. If the pattern ratio of the second conductive layer 1765 and 1865 is applied in detail, the inductance distribution inside the electronic pen 500 can be uniformly tuned.

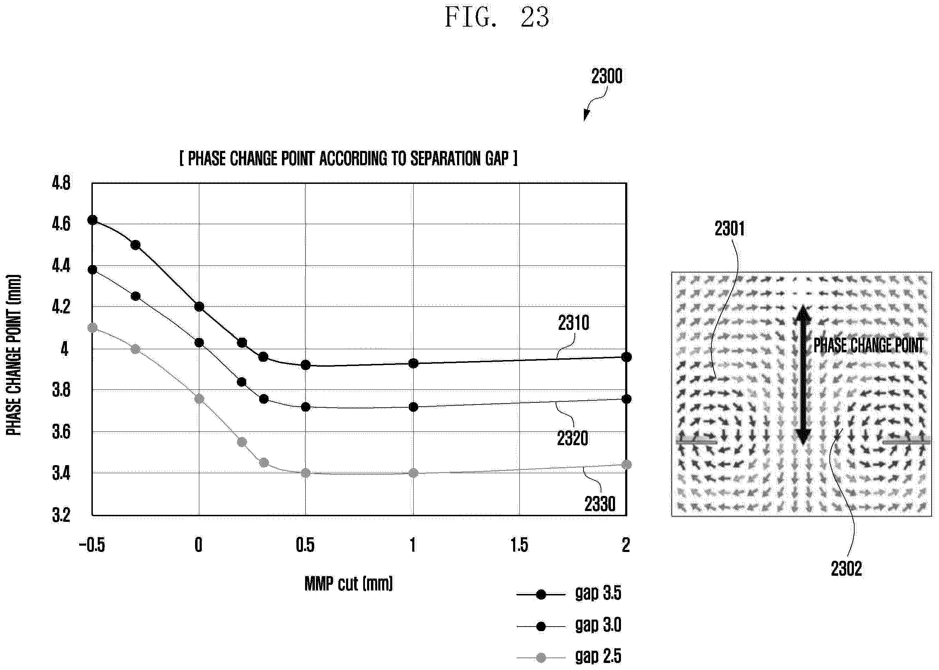

FIG. 23 is a diagram 2300 representing a phase change point according to an interval between a first portion and a second portion of a first magnetic layer.

With reference to FIG. 23, according to the width with which the magnetic layer MMP is removed, the phase change of signal occurring in the center (e.g., folding axis) of the segmented part (e.g., bending area) of the detachable digitizer may differ.

For example, the trend of a phase change point 2310 has been indicated in case that the magnetic layer (MMP) is disposed at an interval of a first gap (e.g., 3.5 µm) based on the center (e.g., folding axis) of the segmented part (e.g., bending area) of the detachable digitizer. For example, the trend of a phase change point 2320 has been indicated in case that the magnetic layer (MMP) is disposed at an interval of a second gap (e.g., 3.0 µm) based on the center (e.g., folding axis) of the segmented part (e.g., bending area) of the detachable digitizer. For example, the trend of a phase change point 2330 has been indicated in case that the magnetic layer (MMP) is disposed at an interval of a third gap (e.g., 2.5 µm) based on the center (e.g., folding axis) of the segmented part (e.g., bending area) of the detachable digitizer. In case of removing a part of the magnetic layer (MMP) from the center (e.g., folding axis) of the segmented part (e.g., bending area) of the detachable digitizer, the phase change point may be lowered. If the phase change point is lowered, reduction of the signal strength of the electronic pen 500 in the segmented part (e.g., bending area) of the detachable digitizer can be decreased. And the phase inversion phenomenon can be improved (decreased).

An electronic device (e.g., electronic device 600 of FIG. 6 or electronic device 800 of FIG. 8) according to an embodiment of the disclosure may include: a foldable housing; a flexible display (e.g., flexible display 610 of FIGS. 6 and 8) accommodated in the foldable housing; and a digitizer (e.g., digitizer 660 of FIG. 6 or digitizer 860 of FIG. 8) disposed under the flexible display 610. The digitizer 660 and 860 may include: a flexible printed circuit board layer (e.g., flexible printed circuit board layer 661 of FIG. 6 and flexible printed circuit board layer 861 of FIG. 8); a first conductive layer (e.g., first conductive layer 663 of FIG. 6 or first conductive layer 863 of FIG. 8) disposed under the flexible printed circuit board layer 661 and 861; and a magnetic layer (e.g., magnetic layer 662 and 664 of FIG. 6 or magnetic layer 862 and 864 of FIG. 8) disposed under the flexible printed circuit board layer 661. A part of the magnetic layer 662, 664, 862, and 864 may be disposed between the flexible printed circuit board layer 661 and 861 and the first conductive layer 663. The magnetic layer 662, 664, 862, and 864 may include: a first magnetic layer (e.g., first magnetic layer 662 of FIG. 6 or first magnetic layer 862 of FIG. 8) having a first magnetic feature, and a second magnetic layer (e.g., second magnetic layer 664 of FIG. 6 or second magnetic layer 864 of FIG. 8) having a second magnetic feature that is different from the first magnetic feature. **In** case that the electronic device 600 and 800 is viewed in a vertical direction to the flexible display 610 in the unfolded state of the electronic device, the first magnetic layer 662 and 862 and the first conductive layer 663 and 863 may be disposed to substantially overlap each other. **In** case that the electronic device 600 and 800 is viewed in the vertical direction to the flexible display 610 in the unfolded state of the electronic device 600 and 800, the second magnetic layer 664 and 964 and the first conductive layer 663 and 863 may be disposed not to overlap each other.

According to an embodiment, the first magnetic layer 662 and 862 and the second magnetic layer 664 and 864 may be disposed not to overlap each other in the vertical direction.

According to an embodiment, the first magnetic layer 662 may include a first magnetic layer portion 6621 and a second magnetic layer portion 6622 spaced apart from each other along a folding axis of the flexible display 610. When viewed in a parallel direction to the first magnetic layer 662, the second magnetic layer 664 may be disposed between the first magnetic layer portion 6621 and the second magnetic layer portion 6622.

According to an embodiment, the first magnetic layer 862 may include a first magnetic layer portion 8621 and a second magnetic layer portion 8622 spaced apart from each other along a folding axis of the flexible display 610. When viewed in a parallel direction to the first magnetic layer 862, the second magnetic layer 664 may be located below the first magnetic layer 862.

According to an embodiment, the flexible printed circuit board layer 661 and 861 may include a first flexible printed circuit board portion 6611 and 8611 and a second flexible printed circuit board portion 6612 and 8612, spaced apart from each other along the folding axis of the flexible display 610.

According to an embodiment, the first conductive layer 663 and 863 may include a first conductive layer portion 6631 and 8631 and a second conductive layer portion 6632 and 8632 spaced apart from each other along the folding axis of the flexible display 610.

According to an embodiment, the first conductive layer portion 6631 and 8631 may be disposed to overlap under the first flexible printed circuit board portion 6611 and 8611. The second conductive layer portion 6632 and 8632 may be disposed to overlap under the second flexible printed circuit board portion 6612 and 8612.

According to an embodiment, when viewed in the vertical direction to the flexible display 610, the first magnetic layer portion 6621 and 8621 of the first magnetic layer 662 and 862 may be disposed between the first flexible printed circuit board portion 6611 and 8611 and the first conductive layer portion 6631 and 8631. When viewed in the vertical direction to the flexible display 610, the second magnetic layer portion 6622 and 8622 of the first magnetic layer 662 and 862 may be disposed between the second flexible printed circuit board portion 6612 and the second conductive layer portion 6632 and 8632.

According to an embodiment, the second magnetic layer 664 and 864 may include a third magnetic layer portion 6641 and 8641 and a fourth magnetic layer portion 6642 and 8642 spaced apart from each other along the folding axis of the flexible display 610.

According to an embodiment, when viewed in the vertical direction to the flexible display 610, the third magnetic layer portion 8641 of the second magnetic layer 864 may be spaced apart from the first magnetic layer portion 8621 of the first magnetic layer 862, and may be located below the first conductive layer portion 8631 of the first conductive layer 863. When viewed in the vertical direction to the flexible display 610, the fourth magnetic layer portion 8642 of the second magnetic layer 864 may be spaced apart from the second magnetic layer portion 8622 of the first magnetic layer 862, and is located below the second conductive layer portion 8632 of the first conductive layer 863.

According to an embodiment, when the electronic device 600 and 800 is viewed in the vertical direction of the flexible display 610 in the unfolded state of the electronic device, the first flexible printed circuit board portion 6611 and the second flexible printed circuit board portion 6612 may be spaced apart from each other at a first interval w1. When the electronic device 600 and 800 is viewed in the vertical direction of the flexible display 610 in the unfolded state of the electronic device, the first conductive layer portion 6631 and the second conductive layer portion 6632 may be spaced apart from each other at a second interval w2 that is equal to or longer than the first interval w1. When the electronic device 600 and 800 is viewed in the vertical direction of the flexible display 610 in the unfolded state of the electronic device, the third magnetic layer portion 6641 and the fourth magnetic layer portion 6642 may be spaced apart from each other at a third interval w3 that is equal to or longer than the first interval w1.

According to an embodiment, the foldable housing may include a hinge housing, a first housing portion 310 located on a first side of the hinge housing, and a second housing portion 310 located on a second side of the hinge housing. The electronic device 600 and 800 may further include a hinge structure 690 seated at least partly on the hinge housing and disposed under the digitizer 660 and 860. The hinge structure 690 may include a hinge plate 680 and 880. The hinge plate 680 and 880 may include a first hinge plate 6801 and 8801 located close to the first housing portion 310 and a second hinge plate 6802 and 8802 located close to the second housing portion 310. In case that the electronic device 600 is unfolded, the first interval w1 may be smaller than a sum of a first width of the first hinge plate 6801 and a second width of the second hinge plate.

According to an embodiment, in case that the electronic device 800 is unfolded, the first magnetic layer portion 8621 may be disposed more adjacent to the folding axis than the first conductive layer portion 8631. The second magnetic layer portion 8622 may be disposed more adjacent to the folding axis than the second conductive layer portion 8632.

According to an embodiment, the foldable housing may include a hinge housing, a first housing portion 310 located on a first side of the hinge housing, and a second housing portion 320 located on a second side of the hinge housing. The electronic device 600 and 800 may further include a hinge structure 690 seated at least partly on the hinge housing and disposed under the digitizer 660 and 860. The hinge structure 690 may include a first hinge plate 6801 and 8801 located close to the first housing portion 310 and a second hinge plate 6802 and 8802 located close to the second housing portion. In case that the electronic device 600 and 800 is unfolded, the second interval w2 between the first conductive layer portion 6631 and the second conductive layer portion 6632 may be larger than a sum of a first width of the first hinge plate 6801 and a second width of the second hinge plate.

According to an embodiment, the first magnetic layer 662 and 862 may have a first magnetic property of a first permeability. The second magnetic layer 664 and 864 may have a second magnetic property of a second permeability that is lower than the first permeability.

According to an embodiment, the first magnetic layer 662 and 862 may have a first thickness in the vertical direction. The second magnetic layer 662 and 862 may have a second thickness that is thinner than the first thickness in the vertical direction.

According to an embodiment, a first performance coefficient of the first magnetic layer 662 and 862 may be determined based on the first permeability and the first thickness of the first magnetic layer 662 and 862. A second performance coefficient of the second magnetic layer 662 and 862 may be determined based on the second permeability and the second thickness of the second magnetic layer 662 and 862. The second performance coefficient may be lower than the first performance coefficient.

According to an embodiment, an upper surface of the second magnetic layer 664 and 864 may be disposed to be in substantially planer with an upper surface of the first magnetic layer 662 and 862.

According to an embodiment, the first magnetic layer 662 and 862 may have a first thickness (height) in the vertical direction. The second magnetic layer 664 and 864 may have a second thickness (height) that is thinner than the first thickness in the vertical direction.

According to an embodiment, at least a part of the second magnetic layer 864 may be attached to the hinge plate 880.

According to an embodiment, the third magnetic layer portion 8641 of the second magnetic layer 864 may be attached to the first hinge plate 8801 of the hinge plate 880. The fourth magnetic layer portion 8642 of the second magnetic layer 864 may be attached to the second hinge plate 8802 of the hinge plate 880.

According to an embodiment, the electronic device may further include a support member 810 disposed between the hinge structures 690.

According to an embodiment, the electronic device may further include a support member 810 disposed between the first hinge plate 8801 and the second hinge plate 8802.

According to an embodiment, the electronic device may further include a third magnetic layer 865 disposed to overlap the support member 810 when viewed in the vertical direction to the flexible display 610 in a state where the electronic device 800 is unfolded.

According to an embodiment, the third magnetic layer 865 may be attached to the support member 1010.

According to an embodiment, the first conductive layer 1763 may include a first conductive layer portion 17631 and a second conductive layer portion 17632 spaced apart from each other along the folding axis of the flexible display 610. The electronic device may further include a second conductive layer 1765 disposed between the first conductive layer portion 17631 and the second conductive layer portion 17632.

According to an embodiment, the first conductive layer 1763 may include a first conductive layer portion 17631 and a second conductive layer portion 17632 spaced apart from each other along the folding axis of the flexible display 610. The electronic device may further include a second conductive layer 1865 disposed to be attached to the hinge plate 880.

According to an embodiment, the first conductive layer 1863 may include a first material having a first conductivity. The second conductive layer 1765 and 1865 may include a second material having a second conductivity that is lower than the first conductivity.

According to an embodiment, the first conductive layer 1863 may have a first thickness in the vertical direction to the flexible display 610. The second conductive layer 1765 and 1865 may have a second thickness that is thinner than the first thickness in the vertical direction to the flexible display 610.

According to an embodiment, the second conductive layer 1765 and 1865 may include a conductive pattern 1765a formed of a conductive material and a space 1765b that is an empty space.

According to an embodiment, the hinge structure 690 may include a stainless steel having magnetism.

According to an embodiment, the electronic device may further include a flexible plate 620 disposed under the flexible display 610 and configured to support the flexible display 610. The flexible plate 620 may include a lattice portion 622 disposed on a portion corresponding to the folding axis of the flexible display 610.

According to an embodiment, in case that the electronic device 600 and 800 is unfolded, when viewed in the vertical direction to the flexible display 610, at least a part of the second magnetic layer 664 and 864 may overlap the lattice portion 622.

According to an embodiment, in case that the electronic device 600 and 800 is unfolded, when viewed in the vertical direction to the flexible display 610, the first magnetic layer 662 and 862 may not overlap the lattice portion 622.

According to an embodiment, in a state where the electronic device 600 and 800 is unfolded, when viewed in the vertical direction to the flexible display 610, the second magnetic layer 664 and 864 may be disposed to overlap the hinge plate 680 and 880.

According to an embodiment, the first magnetic layer 662 and 862 may include a first magnetic metal powder layer. The first conductive layer 663 and 863 may include a copper alloy layer coming in contact with the first magnetic metal powder layer. The flexible printed circuit board layer 661 may include a plurality of conductive lines configured to detect a stylus pen 500.

A foldable electronic device according to an embodiment of the disclosure may include a second magnetic layer MMP2 disposed to overlap a part from which a part of a conductive layer (e.g., conductive plate) of a digitizer is removed. By disposing the second magnetic layer MMP2 on the part corresponding to the bending area of the electronic device, it is possible to prevent (or compensate for) the feature deterioration in the bending area due to the removal of the conductive layer (e.g., conductive plate).

The foldable electronic device according to an embodiment of the disclosure can improve the detection performance and the pen pressure performance of an electronic pen in a bending area.

The foldable electronic device according to an embodiment of the disclosure can prevent (reduce) magnetization of hinge components from exerting an influence on a digitizer.

The foldable electronic device according to an embodiment of the disclosure can improve the folding/unfolding performance by reducing the thickness of a magnetic layer MMP in a folding area.

The foldable electronic device according to an embodiment of the disclosure can improve the electronic pen detection performance of a digitizer in a segmented part (e.g., bending area) of a detachable digitizer.

Effects that can be obtained in the disclosure are not limited to the above-mentioned effects, and other unmentioned effects will be able to be clearly understood by those of ordinary skill in the art to which the disclosure pertains from the following description.

## Claims

1. An electronic device (600, 800) comprising:
a foldable housing;
a flexible display (610) accommodated in the foldable housing; and
a digitizer (660, 860) disposed under the flexible display (610),
wherein the digitizer (660, 860) includes:
a flexible printed circuit board layer (661, 861);
a first conductive layer (663, 863) disposed under the flexible printed circuit board layer (661, 861); and
a magnetic layer (662, 664, 862, 864) disposed under the flexible printed circuit board layer (661, 861),
wherein a part of the magnetic layer (662, 664, 862, 864) is disposed between the flexible printed circuit board layer (661, 861) and the first conductive layer (663),
wherein the magnetic layer (662, 664, 862, 864) includes a first magnetic layer (662, 862) having a first magnetic property and a second magnetic layer (664,864) having a second magnetic property that is different from the first magnetic property,
wherein, when the electronic device (600, 800) is in an unfolded state, when viewed in a vertical direction to the flexible display 610, the first magnetic layer (662, 862) and the first conductive layer (663, 863) are disposed to substantially overlap each other, and the second magnetic layer (664, 964) and the first conductive layer (663, 863) are disposed not to overlap each other, and
wherein the first magnetic layer (662, 862) and the second magnetic layer (664, 864) are disposed not to overlap each other in the vertical direction.

2. The electronic device of claim 1, wherein the first magnetic layer (662) comprises a first magnetic layer portion (6621) and a second magnetic layer portion (6622) spaced apart from each other along a folding axis of the flexible display (610), and
wherein when viewed in a parallel direction to the first magnetic layer (662), the second magnetic layer (664) is disposed between the first magnetic layer portion (6621) and the second magnetic layer portion (6622).

3. The electronic device of claim 1, wherein the first magnetic layer (862) comprises a first magnetic layer portion (8621) and a second magnetic layer portion (8622) spaced apart from each other along a folding axis of the flexible display (610), and
wherein when viewed in a parallel direction to the first magnetic layer (862), the second magnetic layer (664) is located below the first magnetic layer (862).

4. The electronic device of claims 2 or 3, wherein the flexible printed circuit board layer (661, 861) comprises a first flexible printed circuit board portion (6611, 8611) and a second flexible printed circuit board portion (6612, 8612) disposed on either side of the folding axis of the flexible display (610).

5. The electronic device of claim 3, wherein the first conductive layer (663, 863) comprises a first conductive layer portion (6631, 8631) and a second conductive layer portion (6632, 8632), spaced apart from each other along the folding axis of the flexible display (610).

6. The electronic device of claim 5, wherein the first conductive layer portion (6631, 8631) is disposed to overlap under the first flexible printed circuit board portion (6611, 8611), and
wherein the second conductive layer portion (6632, 8632) is disposed to overlap under the second flexible printed circuit board portion (6612, 8612).

7. The electronic device of claim 5, wherein when viewed in the vertical direction to the flexible display (610), the first magnetic layer portion (6621, 8621) of the first magnetic layer (662, 862) is disposed between the first flexible printed circuit board portion (6611, 8611) and the first conductive layer portion (6631, 8631), and
the second magnetic layer portion (6622, 8622) of the first magnetic layer (662) and (862) is disposed between the second flexible printed circuit board portion (6612) and the second conductive layer portion (6632, 8632).

8. The electronic device of any one of claims 1 to 7, wherein the second magnetic layer (664,. 864) comprises a third magnetic layer portion (6641, 8641) and a fourth magnetic layer portion (6642, 8642), disposed either side of the folding axis of the flexible display 610.

9. The electronic device of claim 8, wherein when viewed in the vertical direction to the flexible display (610), the third magnetic layer portion (8641) of the second magnetic layer (864) is spaced apart from the first magnetic layer portion (8621) of the first magnetic layer (862), and is located below the first conductive layer portion (8631) of the first conductive layer (863), and
the fourth magnetic layer portion (8642) of the second magnetic layer (864) is spaced apart from the second magnetic layer portion (8622) of the first magnetic layer (862), and is located below the second conductive layer portion (8632) of the first conductive layer (863).

10. The electronic device of claims 8 or 9, wherein when the electronic device (600, 800) is in an unfolded state, the first flexible printed circuit board portion (6611) and the second flexible printed circuit board portion (6612) are spaced apart from each other at a first interval (w1),
the first conductive layer portion (6631) and the second conductive layer portion (6632) are spaced apart from each other at a second interval (w2) that is equal to or longer than the first interval (w1), and
the third magnetic layer portion (6641) and the fourth magnetic layer portion (6642) are spaced apart from each other at a third interval (w3) that is equal to or longer than the first interval (w1).

11. The electronic device of claim 10, wherein the foldable housing comprises a hinge housing, a first housing portion (310) located on a first side of the hinge housing, and a second housing portion (310) located on a second side of the hinge housing,
wherein the electronic device (600, 800) further includes a hinge structure (690) seated at least partly on the hinge housing and disposed under the digitizer (660, 860),
wherein the hinge structure (690) includes a hinge plate (680, 880),
wherein the hinge plate (680, 880) includes a first hinge plate (6801, 8801) located close to the first housing portion (310) and a second hinge plate (6802, 8802) located close to the second housing portion (310), and
wherein, when the electronic device (600) is in an unfolded state, the first interval (w1) is smaller than a sum of a first width of the first hinge plate (6801) and a second width of the second hinge plate.

12. The electronic device of claim 10, wherein, when the electronic device (800) is in an unfolded state, the first magnetic layer portion (8621) extends closer to the folding axis than the first conductive layer portion (8631), and
the second magnetic layer portion (8622) extends closer to the folding axis than the second conductive layer portion (8632).

13. The electronic device of claim 10, wherein the foldable housing comprises a hinge housing, a first housing portion (310) located on a first side of the hinge housing, and a second housing portion (320) located on a second side of the hinge housing,
wherein the electronic device (600, 800) further includes a hinge structure (690) seated at least partly on the hinge housing and disposed under the digitizer (660, 860),
wherein the hinge structure (690) includes a first hinge plate (6801, 8801) located close to the first housing portion (310) and a second hinge plate (6802, 8802) located close to the second housing portion, and
wherein when the electronic device (600, 800) is in an unfolded state, the second interval (w2) between the first conductive layer portion (6631) and the second conductive layer portion (6632) is larger than a sum of a first width of the first hinge plate (6801) and a second width of the second hinge plate.

14. The electronic device of any one of claims 1 to 13, wherein the first magnetic layer (662, 862) has a first magnetic property of a first permeability, and
the second magnetic layer (664, 864) has a second magnetic property of a second permeability that is lower than the first permeability.

## Patentansprüche

1. Elektronische Vorrichtung (600, 800), umfassend:
ein klappbares Gehäuse;
eine flexible Anzeige (610), die in dem klappbaren Gehäuse untergebracht ist; und
einen Digitalisierer (660, 860), der unter der flexiblen Anzeige (610) angeordnet ist,
wobei der Digitalisierer (660, 860) Folgendes beinhaltet:
eine flexible Leiterplattenschicht (661, 861);
eine erste Leitschicht (663, 863), die unter der flexiblen Leiterplattenschicht (661, 861) angeordnet ist; und
eine Magnetschicht (662, 664, 862, 864), die unter der flexiblen Leiterplattenschicht (661, 861) angeordnet ist,
wobei ein Teil der Magnetschicht (662, 664, 862, 864) zwischen der flexiblen Leiterplattenschicht (661, 861) und der ersten Leitschicht (663) angeordnet ist,
wobei die Magnetschicht (662, 664, 862, 864) eine erste Magnetschicht (662, 862) mit einer ersten Magneteigenschaft und eine zweite Magnetschicht (664, 864) mit einer zweiten Magneteigenschaft, die sich von der ersten Magneteigenschaft unterscheidet, beinhaltet,
wobei, wenn die elektronische Vorrichtung (600, 800) in einem aufgeklappten Zustand ist, wenn in einer vertikalen Richtung zu der flexiblen Anzeige (610) betrachtet, die erste Magnetschicht (662, 862) und die erste Leitschicht (663, 863) dazu angeordnet sind, einander im Wesentlichen zu überlappen, und die zweite Magnetschicht (664, 964) und die erste Leitschicht (663, 863) dazu angeordnet sind, einander nicht zu überlappen, und
wobei die erste Magnetschicht (662, 862) und die zweite Magnetschicht (664, 864) dazu angeordnet sind, einander in der vertikalen Richtung nicht zu überlappen.

2. Elektronische Vorrichtung nach Anspruch 1, wobei die erste Magnetschicht (662) einen ersten Magnetschichtabschnitt (6621) und einen zweiten Magnetschichtabschnitt (6622) umfasst, die entlang einer Klappachse der flexiblen Anzeige (610) voneinander beabstandet sind, und
wobei, wenn in einer parallelen Richtung zu der ersten Magnetschicht (662) betrachtet, die zweite Magnetschicht (664) zwischen dem ersten Magnetschichtabschnitt (6621) und dem zweiten Magnetschichtabschnitt (6622) angeordnet ist.

3. Elektronische Vorrichtung nach Anspruch 1, wobei die erste Magnetschicht (862) einen ersten Magnetschichtabschnitt (8621) und einen zweiten Magnetschichtabschnitt (8622) umfasst, die entlang einer Klappachse der flexiblen Anzeige (610) voneinander beabstandet sind, und
wobei, wenn in einer parallelen Richtung zu der ersten Magnetschicht (862) betrachtet, sich die zweite Magnetschicht (664) unter der ersten Magnetschicht (862) befindet.

4. Elektronische Vorrichtung nach Anspruch 2 oder 3, wobei die flexible Leiterplattenschicht (661, 861) einen ersten flexiblen Leiterplattenabschnitt (6611, 8611) und einen zweiten flexiblen Leiterplattenabschnitt (6612, 8612) umfasst, die auf jeder Seite der Klappachse der flexiblen Anzeige (610) angeordnet sind.

5. Elektronische Vorrichtung nach Anspruch 3, wobei die erste Leitschicht (663, 863) einen ersten Leitschichtabschnitt (6631, 8631) und einen zweiten Leitschichtabschnitt (6632, 8632) umfasst, die entlang der Klappachse der flexiblen Anzeige (610) voneinander beabstandet sind.

6. Elektronische Vorrichtung nach Anspruch 5, wobei der erste Leitschichtabschnitt (6631, 8631) dazu angeordnet ist, unter dem ersten flexiblen Leiterplattenabschnitt (6611, 8611) zu überlappen, und
wobei der zweite Leitschichtabschnitt (6632, 8632) dazu angeordnet ist, unter dem zweiten flexiblen Leiterplattenabschnitt (6612, 8612) zu überlappen.

7. Elektronische Vorrichtung nach Anspruch 5, wobei, wenn in der vertikalen Richtung zu der flexiblen Anzeige (610) betrachtet, der erste Magnetschichtabschnitt (6621, 8621) der ersten Magnetschicht (662, 862) zwischen dem ersten flexiblen Leiterplattenabschnitt (6611, 8611) und dem ersten Leitschichtabschnitt (6631, 8631) angeordnet ist, und
der zweite Magnetschichtabschnitt (6622, 8622) der ersten Magnetschicht (662) und (862) zwischen dem zweiten flexiblen Leiterplattenabschnitt (6612) und dem zweiten Leitschichtabschnitt (6632, 8632) angeordnet ist.

8. Elektronische Vorrichtung nach einem der Ansprüche 1 bis 7, wobei die zweite Magnetschicht (664, 864) einen dritten Magnetschichtabschnitt (6641, 8641) und einen vierten Magnetschichtabschnitt (6642, 8642) umfasst, die auf jeder Seite der Klappachse der flexiblen Anzeige (610) angeordnet sind.

9. Elektronische Vorrichtung nach Anspruch 8, wobei, wenn in der vertikalen Richtung zu der flexiblen Anzeige (610) betrachtet, der dritte Magnetschichtabschnitt (8641) der zweiten Magnetschicht (864) von dem ersten Magnetschichtabschnitt (8621) der ersten Magnetschicht (862) beabstandet ist und sich unter dem ersten Leitschichtabschnitt (8631) der ersten Leitschicht (863) befindet, und
der vierte Magnetschichtabschnitt (8642) der zweiten Magnetschicht (864) von dem zweiten Magnetschichtabschnitt (8622) der ersten Magnetschicht (862) beabstandet ist und sich unter dem zweiten Leitschichtabschnitt (8632) der ersten Leitschicht (863) befindet.

10. Elektronische Vorrichtung nach Anspruch 8 oder 9, wobei, wenn die elektronische Vorrichtung (600, 800) in einem aufgeklappten Zustand ist, der erste flexible Leiterplattenabschnitt (6611) und der zweite flexible Leiterplattenabschnitt (6612) in einem ersten Intervall (w1) voneinander beabstandet sind,
der erste Leitschichtabschnitt (6631) und der zweite Leitschichtabschnitt (6632) in einem zweiten Intervall (w2), das gleich dem oder länger als das erste Intervall (w1) ist, voneinander beabstandet sind, und
der dritte Magnetschichtabschnitt (6641) und der vierte Magnetschichtabschnitt (6642) in einem dritten Intervall (w3), das gleich dem oder länger als das erste Intervall (w1) ist, voneinander beabstandet sind.

11. Elektronische Vorrichtung nach Anspruch 10, wobei das klappbare Gehäuse ein Scharniergehäuse, einen ersten Gehäuseabschnitt (310), der sich auf einer ersten Seite des Scharniergehäuses befindet, und einen zweiten Gehäuseabschnitt (310), der sich auf einer zweiten Seite des Scharniergehäuses befindet, umfasst,
wobei die elektronische Vorrichtung (600, 800) ferner eine Scharnierstruktur (690) beinhaltet, die zumindest teilweise auf dem Scharniergehäuse sitzt und unter dem Digitalisierer (660, 860) angeordnet ist,
wobei die Scharnierstruktur (690) eine Scharnierplatte (680, 880) beinhaltet,
wobei die Scharnierplatte (680, 880) eine erste Scharnierplatte (6801, 8801), die sich nahe dem ersten Gehäuseabschnitt (310) befindet, und eine zweite Scharnierplatte (6802, 8802), die sich nahe dem zweiten Gehäuseabschnitt (310) befindet, beinhaltet, und
wobei, wenn die elektronische Vorrichtung (600) in einem aufgeklappten Zustand ist, das erste Intervall (w1) kleiner als eine Summe einer ersten Breite der ersten Scharnierplatte (6801) und einer zweiten Breite der zweiten Scharnierplatte ist.

12. Elektronische Vorrichtung nach Anspruch 10, wobei, wenn die elektronische Vorrichtung (800) in einem aufgeklappten Zustand ist, sich der erste Magnetschichtabschnitt (8621) näher zu der Klappachse als der erste Leitschichtabschnitt (8631) erstreckt, und
sich der zweite Magnetschichtabschnitt (8622) näher zu der Klappachse als der zweite Leitschichtabschnitt (8632) erstreckt.

13. Elektronische Vorrichtung nach Anspruch 10, wobei das klappbare Gehäuse ein Scharniergehäuse, einen ersten Gehäuseabschnitt (310), der sich auf einer ersten Seite des Scharniergehäuses befindet, und einen zweiten Gehäuseabschnitt (320), der sich auf einer zweiten Seite des Scharniergehäuses befindet, umfasst,
wobei die elektronische Vorrichtung (600, 800) ferner eine Scharnierstruktur (690) beinhaltet, die zumindest teilweise auf dem Scharniergehäuse sitzt und unter dem Digitalisierer (660, 860) angeordnet ist,
wobei die Scharnierstruktur (690) eine erste Scharnierplatte (6801, 8801), die sich nahe dem ersten Gehäuseabschnitt (310) befindet, und eine zweite Scharnierplatte (6802, 8802), die sich nahe dem zweiten Gehäuseabschnitt befindet, beinhaltet, und
wobei, wenn die elektronische Vorrichtung (600, 800) in einem aufgeklappten Zustand ist, das zweite Intervall (w2) zwischen dem ersten Leitschichtabschnitt (6631) und dem zweiten Leitschichtabschnitt (6632) größer als eine Summe einer ersten Breite der ersten Scharnierplatte (6801) und einer zweiten Breite der zweiten Scharnierplatte ist.

14. Elektronische Vorrichtung nach einem der Ansprüche 1 bis 13, wobei die erste Magnetschicht (662, 862) eine erste Magneteigenschaft einer ersten Permeabilität aufweist, und
die zweite Magnetschicht (664, 864) eine zweite Magneteigenschaft einer zweiten Permeabilität aufweist, die niedriger als die erste Permeabilität ist.

## Revendications

1. Dispositif électronique (600, 800) comprenant :
un boîtier pliable ;
un affichage souple (610) logé dans le boîtier pliable ; et
un numériseur (660, 860) disposé sous l'affichage souple (610),
dans lequel le numériseur (660, 860) comprend :
une couche de carte de circuit imprimé souple (661, 861) ;
une première couche conductrice (663, 863) disposée sous la couche de carte de circuit imprimé souple (661, 861) ; et
une couche magnétique (662, 664, 862, 864) disposée sous la couche de carte de circuit imprimé souple (661, 861),
dans lequel une portion de la couche magnétique (662, 664, 862, 864) est disposée entre la couche de carte de circuit imprimé souple (661, 861) et la première couche conductrice (663),
dans lequel la couche magnétique (662, 664, 862, 864) comprend une première couche magnétique (662, 862) présentant une première propriété magnétique et une seconde couche magnétique (664, 864) présentant une seconde propriété magnétique qui est différente de la première propriété magnétique,
dans lequel, lorsque le dispositif électronique (600, 800) est dans un état déplié, lorsqu'elles sont vues dans une direction verticale par rapport à l'affichage souple (610), la première couche magnétique (662, 862) et la première couche conductrice (663, 863) sont disposées pour se chevaucher sensiblement, et la seconde couche magnétique (664, 964) et la première couche conductrice (663, 863) sont disposées pour ne pas se chevaucher, et
dans lequel la première couche magnétique (662, 862) et la seconde couche magnétique (664, 864) sont disposées pour ne pas se chevaucher dans la direction verticale.

2. Dispositif électronique de la revendication 1, dans lequel la première couche magnétique (662) comprend une première partie de couche magnétique (6621) et une deuxième partie de couche magnétique (6622) espacées l'une de l'autre le long d'un axe de pliage de l'affichage souple (610), et
dans lequel, lorsqu'elle est vue dans une direction parallèle à la première couche magnétique (662), la seconde couche magnétique (664) est disposée entre la première partie de couche magnétique (6621) et la deuxième partie de couche magnétique (6622).

3. Dispositif électronique de la revendication 1, dans lequel la première couche magnétique (862) comprend une première partie de couche magnétique (8621) et une deuxième partie de couche magnétique (8622) espacées l'une de l'autre le long d'un axe de pliage de l'affichage souple (610), et dans lequel, lorsqu'elle est vue dans une direction parallèle à la première couche magnétique (862), la seconde couche magnétique (664) est située en dessous de la première couche magnétique (862).

4. Dispositif électronique des revendications 2 ou 3, dans lequel la couche de carte de circuit imprimé souple (661, 861) comprend une première partie de carte de circuit imprimé souple (6611, 8611) et une seconde partie de carte de circuit imprimé souple (6612, 8612) disposées de chaque côté de l'axe de pliage de l'affichage souple (610).

5. Dispositif électronique de la revendication 3, dans lequel la première couche conductrice (663, 863) comprend une première partie de couche conductrice (6631, 8631) et une seconde partie de couche conductrice (6632, 8632), espacées l'une de l'autre le long de l'axe de pliage de l'affichage souple (610).

6. Dispositif électronique de la revendication 5, dans lequel la première partie de couche conductrice (6631, 8631) est disposée pour être chevauchée par la première partie de carte de circuit imprimé souple (6611, 8611), et
dans lequel la seconde partie de couche conductrice (6632, 8632) est disposée pour être chevauchée sous la seconde partie de carte de circuit imprimé souple (6612, 8612).

7. Dispositif électronique de la revendication 5, dans lequel, lorsqu'elle est vue dans la direction verticale de l'affichage souple (610), la première partie de couche magnétique (6621, 8621) de la première couche magnétique (662, 862) est disposée entre la première partie de carte de circuit imprimé souple (6611, 8611) et la première partie de couche conductrice (6631, 8631), et
la deuxième partie de couche magnétique (6622, 8622) de la première couche magnétique (662) et (862) est disposée entre la seconde partie de carte de circuit imprimé souple (6612) et la seconde partie de couche conductrice (6632, 8632).

8. Dispositif électronique de l'une quelconque des revendications 1 à 7, dans lequel la seconde couche magnétique (664, 864) comprend une troisième partie de couche magnétique (6641, 8641) et une quatrième partie de couche magnétique (6642, 8642), disposées de chaque côté de l'axe de pliage de l'affichage souple (610).

9. Dispositif électronique de la revendication 8, dans lequel, lorsqu'elle est vue dans la direction verticale de l'affichage souple (610), la troisième partie de couche magnétique (8641) de la seconde couche magnétique (864) est espacée de la première partie de couche magnétique (8621) de la première couche magnétique (862), et est située en dessous la première partie de couche conductrice (8631) de la première couche conductrice (863), et
la quatrième partie de couche magnétique (8642) de la seconde couche magnétique (864) est espacée de la deuxième partie de couche magnétique (8622) de la première couche magnétique (862), et est située en dessous de la seconde partie de couche conductrice (8632) de la première couche conductrice (863).

10. Dispositif électronique des revendications 8 ou 9, dans lequel lorsque le dispositif électronique (600, 800) est dans un état déplié, la première partie de carte de circuit imprimé souple (6611) et la seconde partie de carte de circuit imprimé souple (6612) sont espacées l'une de l'autre à un premier intervalle (w1),
la première partie de couche conductrice (6631) et la seconde partie de couche conductrice (6632) sont espacées l'une de l'autre à un deuxième intervalle (w2) qui est égal au premier intervalle (w1) ou plus long que celui-ci, et
la troisième partie de couche magnétique (6641) et la quatrième partie de couche magnétique (6642) sont espacées l'une de l'autre à un troisième intervalle (w3) qui est égal au premier intervalle (w1) ou plus long que celui-ci.

11. Dispositif électronique de la revendication 10, dans lequel le boîtier pliable comprend un boîtier de charnière, une première partie de boîtier (310) située d'un premier côté du boîtier de charnière, et une seconde partie de boîtier (310) située d'un second côté du boîtier de charnière,
dans lequel le dispositif électronique (600, 800) comprend en outre une structure de charnière (690) reposant au moins partiellement sur le boîtier de charnière et disposée sous le numériseur (660, 860),
dans lequel la structure de charnière (690) comprend une plaque de charnière (680, 880),
dans lequel la plaque de charnière (680, 880) comprend une première plaque de charnière (6801, 8801) située à proximité de la première partie de boîtier (310) et une seconde plaque de charnière (6802, 8802) située à proximité de la seconde partie de boîtier (310), et
dans lequel, lorsque le dispositif électronique (600) est dans un état déplié, le premier intervalle (w1) est plus petit qu'une somme d'une première largeur de la première plaque de charnière (6801) et d'une seconde largeur de la seconde plaque de charnière.

12. Dispositif électronique de la revendication 10, dans lequel, lorsque le dispositif électronique (800) est dans un état déplié, la première partie de couche magnétique (8621) s'étend plus près de l'axe de pliage que la première partie de couche conductrice (8631), et
la deuxième partie de couche magnétique (8622) s'étend plus près de l'axe de pliage que la seconde partie de couche conductrice (8632).

13. Dispositif électronique de la revendication 10, dans lequel le boîtier pliable comprend un boîtier de charnière, une première partie de boîtier (310) située d'un premier côté du boîtier de charnière, et une seconde partie de boîtier (320) située d'un second côté du boîtier de charnière,
dans lequel le dispositif électronique (600, 800) comprend en outre une structure de charnière (690) reposant au moins partiellement sur le boîtier de charnière et disposée sous le numériseur (660, 860),
dans lequel la structure de charnière (690) comprend une première plaque de charnière (6801, 8801) située à proximité de la première partie de boîtier (310) et une seconde plaque de charnière (6802, 8802) située à proximité de la seconde partie de boîtier, et
dans lequel lorsque le dispositif électronique (600, 800) est dans un état déplié, le deuxième intervalle (w2) entre la première partie de couche conductrice (6631) et la seconde partie de couche conductrice (6632) est plus grand qu'une somme d'une première largeur de la première plaque de charnière (6801) et d'une seconde largeur de la seconde plaque de charnière.

14. Dispositif électronique de l'une quelconque des revendications 1 à 13, dans lequel la première couche magnétique (662, 862) présente une première propriété magnétique d'une première perméabilité, et
la seconde couche magnétique (664, 864) présente une seconde propriété magnétique d'une seconde perméabilité qui est inférieure à la première perméabilité.
